(19) **Europäisches Patentamt European Patent Office Office européen des brevets**

(11) **EP 4 459 919 A1**

(12) **EUROPEAN PATENT APPLICATION**
published in accordance with Art. 153(4) EPC

(43) Date of publication:
06.11.2024 Bulletin 2024/45

(21) Application number: 23745975.5

(22) Date of filing: 12.01.2023

(51) International Patent Classification (IPC):
*H04L 5/00* (2006.01)

(52) Cooperative Patent Classification (CPC):
H04L 5/00; H04W 28/06; H04W 36/00;
H04W 72/1263; H04W 80/06

(86) International application number:
PCT/CN2023/071864

(87) International publication number:
WO 2023/143092 (03.08.2023 Gazette 2023/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.01.2022 CN 202210114635

(71) Applicant: Huawei Technologies Co., Ltd.
Shenzhen, Guangdong 518129 (CN)

(72) Inventors:
• HUANG, Haining
  Shenzhen, Guangdong 518129 (CN)
• LI, Chao
  Shenzhen, Guangdong 518129 (CN)
• ZHANG, Tianhong
  Shenzhen, Guangdong 518129 (CN)
• YANG, Fan
  Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54) **CONTROL INFORMATION SENDING METHOD AND COMMUNICATION APPARATUS**

(57) This application provides a control information sending method and a communication apparatus. According to the method, a terminal may determine, based on first information, a resource occupied by transmission according to a first communication protocol; determine, based on the resource occupied by transmission according to the first communication protocol, that a first resource is an available resource; and transmit control information on the first resource according to a second communication protocol. This can avoid control information transmission according to the second communication protocol by using the resource occupied by transmission according to the first communication protocol, thereby helping avoid a resource conflict between transmission according to the first communication protocol and transmission according to the second communication protocol.

EP 4 459 919 A1

1000

A first terminal obtains first information, where the first information is for determining a resource occupied by transmission according to a first communication protocol — 1010

The first terminal determines, based on the first information, that a first resource is an available resource — 1020

The first terminal transmits control information on the first resource according to a second communication protocol — 1030

FIG. 10

## Description

This application claims priority to Chinese Patent Application No. 202210114635.9, filed with the China National Intellectual Property Administration on January 30, 2022 and entitled "CONTROL INFORMATION SENDING METHOD AND COMMUNICATION APPARATUS", which is incorporated herein by reference in its entirety.

## TECHNICAL FIELD

This application relates to the communication field, and specifically, to a control information sending method and a communication apparatus.

## BACKGROUND

In a scenario in which a first communication protocol and a second communication protocol use a same time-frequency resource, there is a case in which a terminal that performs communication according to the second communication protocol does not know a resource occupied by the first communication protocol. In this case, when a first terminal performs communication according to the second communication protocol, a resource conflict with the resource occupied by the first communication protocol easily occurs.

## SUMMARY

This application provides a control information sending method and a communication apparatus, to help avoid a resource conflict.

According to a first aspect, a control information sending method is provided. The method may be performed by a first terminal, or may be performed by a module or a unit used in the first terminal. For ease of description, the first terminal and the module or unit used in the first terminal are collectively referred to as the first terminal below.

The method includes: The first terminal obtains first information, where the first information is for determining a resource occupied by transmission according to a first communication protocol; the first terminal determines, based on the first information, that a first resource is an available resource; and the first terminal sends control information on the first resource according to a second communication protocol.

Optionally, the first communication protocol is long term evolution-vehicle (long term evolution-vehicle, LTE-V), and the second communication protocol is R18 new radio-vehicle (new radio-vehicle, NR-V).

Optionally, the first communication protocol is long term evolution-sidelink communication (long term evolution-vehicle, LTE-Sidelink), and the second communication protocol is R18 new radio-sidelink communication (new radio-vehicle, NR-Sidelink).

Optionally, the second communication protocol may be a new radio-vehicle (new radio-vehicle, NR-V) of any version. For example, the second communication protocol includes R18 NR-V, R19 NR-V, R20 NR-V, and the like. This is not limited herein.

That the first information is for determining a resource occupied by transmission according to a first communication protocol may be replaced with that the first information is used to indicate a terminal to use a resource occupied by the first communication protocol. Optionally, that the terminal uses the resource occupied by the first communication protocol may include: The first terminal uses the resource occupied by the first communication protocol and/or a terminal (for example, a second terminal) other than the first terminal uses the resource occupied by the first communication protocol.

"The first terminal determines, based on the first information, that a first resource is an available resource; and the first terminal sends control information on the first resource according to a second communication protocol" may be replaced with "the first terminal sends, based on the first information, control information on the first resource according to a second communication protocol".

In the foregoing technical solution, the first terminal may determine, based on the first information, the resource occupied by transmission according to the first communication protocol, determine, based on the resource occupied by transmission according to the first communication protocol, that the first resource is the available resource, and send the control information on the first resource according to the second communication protocol. In this way, according to the foregoing technical solution, when determining an available resource for control information transmission according to the second communication protocol, the first terminal considers the resource occupied by transmission according to the first communication protocol, to avoid control information transmission according to the second communication protocol by using the resource occupied by transmission according to the first communication protocol. This helps avoid a resource conflict between transmission according to the first communication protocol and transmission according to the second communication protocol.

In addition, sending of the control information according to the second communication protocol can be implemented by using the foregoing technical solution, thereby helping improve data transmission reliability according to the second communication protocol.

It should be noted that, when the first terminal determines that the first resource is the available resource, in addition to the first information, resource indication information used to indicate a resource occupied by transmission according to the second communication protocol may also be used. To be specific, the first terminal determines, based on the first information and the resource indication information for transmission according to the second communication protocol, that the first resource is the available resource or an unavailable resource. This is not limited in this application.

With reference to the first aspect, in a possible implementation, the method further includes: The first terminal obtains second information, where the second information is used to indicate the first terminal to send the control information, and the control information includes at least one of the following: hybrid automatic repeat request (hybrid automatic repeat request, HARQ) information, channel state information (channel state information, CSI) feedback information, or resource conflict indication information.

Optionally, the second information is carried in second-level sidelink control information (sidelink control information, SCI).

Optionally, the second information is HARQ enabling information in SCI, and the control information is the HARQ information. It may be understood as that if the first terminal receives data and the second information (which includes the HARQ enabling information) from the second terminal, the first terminal sends, to the second terminal, the HARQ information corresponding to the data, that is, the control information is the HARQ information.

Optionally, the second information is CSI trigger information in SCI, and the control information is the CSI feedback information. It may be understood as that if the first terminal receives data and the second information (which includes the CSI trigger information) from the second terminal, the first terminal sends the CSI feedback information to the second terminal, that is, the control information is the CSI feedback information.

Optionally, the second information is trigger information of resource conflict indication information in SCI, and the control information is the resource conflict indication information. It may be understood as that if the first terminal receives data and the second information (which includes the trigger information of the resource conflict indication information) from the second terminal, the first terminal sends the resource conflict indication information to the second terminal, that is, the control information is the resource conflict indication information.

In the foregoing technical solution, when the first terminal obtains the second information used to indicate the first terminal to send the control information, the first terminal sends the control information on the first resource according to the second communication protocol. This helps avoid a waste of resources. When the control information is the HARQ information, using HARQ feedback can improve data transmission reliability. When the control information is the CSI feedback information, using CSI feedback can improve link adaptation (for example, help the second terminal that triggers CSI feedback better select a modulation and coding scheme (modulation and coding scheme, MCS)) and improve system efficiency. When the control information is the resource conflict indication information, using the resource conflict indication information can improve data transmission reliability.

With reference to the first aspect or any implementation of the first aspect, in another possible implementation, that the first terminal determines, based on the first information, that a first resource is an available resource includes: When a candidate resource in which the first resource is located fails to meet a preset condition, the first terminal determines that the first resource is the available resource. The preset condition is that the candidate resource overlaps with the resource occupied by transmission according to the first communication protocol and signal quality is lower than a first threshold. The candidate resource is a candidate resource used when the first terminal selects a resource for data transmission, the candidate resource is L consecutive frequency domain units in a first time unit, and L is an integer greater than or equal to 1.

In other words, when the candidate resource that is available for data transmission and in which the first resource is located is an available resource, the first terminal determines that the first resource is the available resource. When the candidate resource that is available for data transmission and in which the first resource is located is an unavailable resource, the first terminal determines that the first resource is an unavailable resource.

Optionally, the signal quality is signal quality corresponding to transmission according to the first communication protocol.

Optionally, the signal quality is energy in a time domain unit in which the first resource is located.

Optionally, the signal quality may be energy on P symbols in a first slot, or energy in a first slot.

Optionally, the energy may be indicated by at least one of a received signal strength indicator (received signal strength indicator, RSSI), a signal-to-noise ratio (signal-to-noise ratio, SNR), or a signal-to-interference-plus-noise ratio (signal-to-interference-plus-noise ratio, SINR).

In the foregoing technical solution, when selecting the resource for the data, the terminal determines, by detecting energy of a resource occupied by another device, whether data transmission of the terminal is interfered with. In the foregoing method, when it is determined whether the first resource (a resource for control information transmission) is available, the energy of the resource occupied by the another device is detected to determine whether control information transmission of the terminal is interfered with, thereby ensuring low interference to the resource for control information transmission, and ensuring transmission reliability of the control information. When the energy is energy (for example, an RSSI, an SNR, or an SINR) on at least one symbol or in one slot, an energy granularity is coarser compared with that using reference signal (reference signal, RS) measurement, so that a channel occupation status on an entire symbol or slot may be reflected.

With reference to the first aspect or any implementation of the first aspect, in another possible implementation, that the first terminal determines, based on the first information, that a first resource is an available resource includes: When none of candidate resources included in a first time unit in which the first resource is located meets a preset condition, the first terminal determines that the first resource is the available resource. The preset condition is that the candidate resource overlaps with the resource occupied by transmission according to the first communication protocol and signal quality is lower than a first threshold. The candidate resource is a candidate resource used when the first terminal selects a resource for data transmission, the candidate resource is L consecutive frequency domain units in the first time unit, and L is an integer greater than or equal to 1.

In other words, when all of the candidate resources that are available for data transmission and that are included in the first time unit in which the first resource is located are available resources, the first terminal determines that the first resource is the available resource. When one or more of the candidate resources that are available for data transmission and that are included in the first time unit in which the first resource is located are unavailable resources, the first terminal determines that the first resource is an unavailable resource.

Optionally, the signal quality is signal quality corresponding to transmission according to the first communication protocol.

Optionally, the signal quality is energy in a time domain unit in which the first resource is located.

Optionally, the signal quality may be energy on P symbols in a first slot, or energy in a first slot.

Optionally, the energy may be indicated by at least one of an RSSI, an SNR, or an SINR.

In the foregoing technical solution, when it is determined whether the first resource (a resource for control information transmission) is available, energy of a resource occupied by another device is detected to determine whether control information transmission of the terminal is interfered with, thereby ensuring low interference to the resource for control information transmission, and ensuring transmission reliability of the control information. Further, when it is determined that a candidate resource is available, it is assumed that when the terminal sends control information on a first resource included in the candidate resource, because some other candidate resources included in the first time unit are unavailable, it indicates that a first communication protocol module performs transmission in the first time unit. In this case, a receiving and sending conflict between the first communication protocol module and a second communication protocol module may occur in the terminal. According to the method, when all of the candidate resources included in the first time unit are low-interference resources, the first resource is used. This can effectively avoid the receiving and sending conflict between the first communication protocol module and the second communication protocol module. When the energy is energy (for example, an RSSI, an SNR, or an SINR) on at least one symbol or in one slot, an energy granularity is coarser compared with that using reference signal RS measurement, so that a channel occupation status on an entire symbol or slot may be reflected.

With reference to the first aspect or any implementation of the first aspect, in another possible implementation, that the first terminal determines, based on the first information, that a first resource is an available resource includes: When a candidate resource in which the first resource is located fails to meet a preset condition, the first terminal determines that the first resource is the available resource. The preset condition is that the candidate resource overlaps with the resource occupied by transmission according to the first communication protocol and signal quality is lower than a second threshold. The candidate resource is a candidate resource used when the first terminal selects a resource for control information transmission, the candidate resource is L consecutive frequency domain units in a first time unit, and L is an integer greater than or equal to 1.

In other words, when the candidate resource that is available for control information transmission and in which the first resource is located is an available resource, the first terminal determines that the first resource is the available resource. When the candidate resource that is available for control information transmission and in which the first resource is located is an unavailable resource, the first terminal determines that the first resource is an unavailable resource.

Optionally, the signal quality is signal quality corresponding to transmission according to the first communication protocol.

Optionally, the signal quality is energy in a time domain unit in which the first resource is located.

Optionally, the signal quality may be energy on P symbols in a first slot, or energy in a first slot.

Optionally, the energy may be indicated by at least one of an RSSI, an SNR, or an SINR.

In the foregoing technical solution, when it is determined whether the first resource (a resource for control information transmission) is available, energy for transmission by another device according to the first communication protocol in the first time unit is detected to determine whether control information transmission of the terminal is interfered with, thereby ensuring low interference to the resource for control information transmission, and ensuring transmission reliability of the control information. When the energy is energy (for example, an RSSI, an SNR, or an SINR) on at least one symbol or in one slot, an energy granularity is coarser compared with that using reference signal RS measurement, so that a channel occupation status on an entire symbol or slot may be reflected.

With reference to the first aspect or any implementation of the first aspect, in another possible implementation, that the first terminal determines, based on the first information, that a first resource is an available resource includes: When none of candidate resources included in a first time unit in which the first resource is located meets a preset condition, the first terminal determines that the first resource is the available resource. The preset condition is that the candidate resource overlaps with the resource occupied by transmission according to the first communication protocol and signal quality is lower than a second threshold. The candidate resource is a candidate resource used when the first terminal selects a resource for control information transmission, the candidate resource is L consecutive frequency domain units in the first time unit, and L is an integer greater than or equal to 1.

In other words, when all of the candidate resources that are available for control information transmission and that are included in the first time unit in which the first resource is located are available resources, the first terminal determines that the first resource is the available resource. When one or more of the candidate resources that are available for control information transmission and that are included in the first time unit in which the first resource is located are unavailable resources, the first terminal determines that the first resource is an unavailable resource.

Optionally, the signal quality is signal quality corresponding to transmission according to the first communication protocol.

Optionally, the signal quality is energy in a time domain unit in which the first resource is located.

Optionally, the signal quality may be energy on P symbols in a first slot, or energy in a first slot.

Optionally, the energy may be indicated by at least one of an RSSI, an SNR, or an SINR.

In the foregoing technical solution, when it is determined whether the first resource (a resource for control information transmission) is available, energy for transmission by another device according to the first communication protocol in the first time unit is detected to determine whether control information transmission of the terminal is interfered with, thereby ensuring low interference to the resource for control information transmission, and ensuring transmission reliability of the control information. Because some of the candidate resources included in the first time unit are available and some of the candidate resources included in the first time unit are unavailable, it indicates that a first communication protocol module performs transmission in the first time unit. In this case, a receiving and sending conflict between the first communication protocol module and a second communication protocol module may occur in the terminal. According to the method, when all of the candidate resources included in the first time unit are low-interference resources, the first resource is used. This can effectively avoid the receiving and sending conflict between the first communication protocol module and the second communication protocol module. When the energy is energy (for example, an RSSI, an SNR, or an SINR) on at least one symbol or in one slot, an energy granularity is coarser compared with that using RS measurement, so that a channel occupation status on an entire symbol or slot may be reflected.

With reference to the first aspect or any implementation of the first aspect, in another possible implementation, the candidate resource is L consecutive subchannels in a first slot.

In the foregoing technical solution, a size of the candidate resource is defined, thereby ensuring integrity of the technical solutions of this application.

With reference to the first aspect or any implementation of the first aspect, in another possible implementation, the candidate resource is L consecutive subchannels on P symbols in a first slot, and P is an integer greater than or equal to 1.

In the foregoing technical solution, a time domain granularity of the candidate resource for sending the control information is defined, and may be one or two symbols (a sending symbol of a physical sidelink feedback channel (physical sidelink feedback channel, PSFCH), the sending symbol of the PSFCH, and a replication symbol of the sending symbol of the PSFCH). This ensures integrity of the technical solutions of this application. In addition, the time domain granularity of the candidate resource for sending the control information may be different from a time domain granularity of the candidate resource for sending the data, thereby ensuring accuracy of an interference determining degree.

With reference to the first aspect or any implementation of the first aspect, in another possible implementation, a frequency domain resource may be one or more physical resource blocks (physical resource blocks, PRBs).

In the foregoing technical solution, a size of the candidate resource is defined, thereby ensuring integrity of the technical solutions of this application. A granularity of the PRB is finer than that of a subchannel, and whether there is interference to the candidate resource can be more accurately determined.

With reference to the first aspect or any implementation of the first aspect, in another possible implementation, the second threshold is from an independently configured threshold table or threshold set; or the second threshold is an absolute threshold.

The second threshold may be determined based on a priority value of HARQ information to be sent by the first terminal and a priority value corresponding to a resource that is for transmission according to the first communication protocol and that overlaps with the candidate resource. Optionally, the second threshold may be associated with either of an MCS and a channel busy ratio (channel busy ratio, CBR).

In the foregoing technical solution, the second threshold is for determining an interference degree of the candidate resource for sending the control information. Setting a threshold separately for the candidate resource for the control information may more accurately determine the interference degree of the candidate resource for sending the control information, and also provide flexibility for configuration of a base station.

With reference to the first aspect or any implementation of the first aspect, in another possible implementation, that the first terminal determines, based on the first information, that a first resource is an available resource includes: When the first resource fails to meet a preset condition, the first terminal determines that the first resource is the available resource. The preset condition is that the first resource overlaps with the resource occupied by transmission according to the first communication protocol and signal quality is lower than a third threshold.

Optionally, the signal quality is signal quality corresponding to transmission according to the first communication protocol.

Optionally, the signal quality is energy in a time domain unit in which the first resource is located.

Optionally, the signal quality may be energy on P symbols in a first slot, or energy in a first slot.

Optionally, the energy may be indicated by at least one of an RSSI, an SNR, or an SINR.

In other words, the first terminal directly determines, based on the preset condition, whether the first resource is the available resource. When the first resource fails to meet the preset condition, the first terminal determines that the first resource is the available resource. When the first resource meets the preset condition, the first terminal determines that the first resource is an unavailable resource.

In the foregoing technical solution, according to the foregoing method, when it is determined whether the first resource (a resource for control information transmission) is available, energy for transmission by another device according to the first communication protocol in the first time unit is detected to determine whether control information transmission of the terminal is interfered with, thereby ensuring low interference to the resource for control information transmission, and ensuring transmission reliability of the control information. When the energy is energy (for example, an RSSI, an SNR, or an SINR) on at least one symbol or in one slot, an energy granularity is coarser compared with that using RS measurement, so that a channel occupation status on an entire symbol or slot may be reflected.

With reference to the first aspect or any implementation of the first aspect, in another possible implementation, the third threshold is from an independently configured threshold table or threshold set; or the third threshold is an absolute threshold.

In the foregoing technical solution, the third threshold is for determining an interference degree of the candidate resource for sending the control information. Setting a threshold separately for the first resource for the control information may more accurately determine the interference degree of the first resource for sending the control information, and also provide flexibility for configuration of a base station.

With reference to the first aspect or any implementation of the first aspect, in another possible implementation, the signal quality is represented by at least one of the following information: reference signal received power (reference signal received power, RSRP), an RSSI, an SNR, or an SINR.

With reference to the first aspect or any implementation of the first aspect, in another possible implementation, the first resource is not for data transmission.

That the first resource is not for data transmission may be understood as that the first terminal does not perform rate matching on the first resource when performing data rate matching.

Because sensing results of terminals of a receiving party and a sending party for the resource occupied by the first communication protocol are not necessarily the same, it is possible that the terminals of the receiving party and the sending party have different determining results for whether the first resource is available, a receiving and sending conflict (for example, a conflict between data receiving and HARQ information sending, or a conflict between HARQ information receiving and data sending) is caused. If the first resource is not for data transmission, the receiving and sending conflict can be avoided.

Optionally, a time domain unit in which the first resource is located is not for data transmission. In this way, the receiving and sending conflict between the terminals of the receiving party and the sending party can be avoided.

With reference to the first aspect or any implementation of the first aspect, in another possible implementation, the first information includes at least one of the following information: SCI or a measured value of signal quality corresponding to the SCI, where the SCI includes resource indication information for transmission according to the first communication protocol and/or a resource reserved field for transmission according to the first communication protocol.

Optionally, the SCI may be understood as sidelink assignment (sidelink assignment, SA).

Optionally, the first information includes PSCCH decoding information and RSRP measurement information.

Optionally, the first information includes PSCCH decoding information and a measured value of energy.

Optionally, the first information includes PSCCH decoding information and RSRP measurement information in a time domain resource set. A manner of determining a location of the time domain resource set includes at least one of the following: predefined, preconfigured, transmitted by the first communication protocol module of the first terminal to the second communication protocol module, or determined and sent by the second communication protocol module to the first communication protocol module. A manner of indicating the location of the time domain resource set includes at least one of the following: a start location of the time domain resource set, an end location of the time domain resource set, and a length of the time domain resource set. The end location of the time domain resource set is a location at which the second communication protocol module receives indication information of the time domain resource set, or the end location of the time domain resource set is a location that is a time interval before a location at which the second communication protocol module receives the indication information of the time domain resource set. The time interval is transmission (sending or transparent transmission) time from the first communication protocol module to the second communication protocol module. A reference point of the start location of the time domain resource set is a location at which a system frame number, for example, a direct frame number (direct frame number, DFN) is 0, or a location at which a system frame number (system frame number, SFN) is 0. The start location of the time resource set is determined based on the reference point and a time offset value.

Optionally, the time domain resource set is consecutive. For example, the time domain resource set is a time window.

With reference to the first aspect or any implementation of the first aspect, in another possible implementation, resource pools of the first communication protocol and the second communication protocol use a same time-frequency resource.

With reference to the first aspect or any implementation of the first aspect, in another possible implementation, the control information is acknowledgement (acknowledgement, ACK) information fed back by the first terminal to the second terminal when the first terminal successfully decodes first data from the second terminal; or the control information is negative acknowledgement (negative acknowledgement, NACK) information fed back by the first terminal to the second terminal when the first terminal fails to decode first data from the second terminal.

Optionally, the control information may be an ACK or a NACK of a multicast feedback option 1, a NACK only of a multicast feedback option 2 (NACK information fed back to the second terminal only when the first terminal fails to decode the first data from the second terminal), or a unicast ACK or NACK.

According to a second aspect, a data sending method is provided. The method may be performed by a second terminal, or may be performed by a module or a unit used in the second terminal. For ease of description, the second terminal and the module or unit used in the second terminal are collectively referred to as the second terminal below.

The method includes: The second terminal obtains first information, where the first information is used to indicate a resource occupied by transmission according to a first communication protocol. The second terminal determines, based on the first information, that a first resource is an available resource, where the first resource is a resource for control information transmission according to a second communication protocol. The second terminal determines a second resource based on the first resource, where the second resource is a resource for transmission of first data according to the second communication protocol. The second terminal sends the first data to a first terminal on the second resource according to the second communication protocol.

Optionally, the first communication protocol is LTE-V, and the second communication protocol is R18 NR-V.

Optionally, the first communication protocol is LTE-Sidelink, and the second communication protocol is R18 NR-Sidelink.

Optionally, the second communication protocol may be NR-V of any version. For example, the second communication protocol includes R18 NR-V, R19 NR-V, R20 NR-V, and the like. This is not limited herein.

That the first information is for determining a resource occupied by transmission according to a first communication protocol may be replaced with that the first information is used to indicate a terminal to use a resource occupied by the first communication protocol. Optionally, that the terminal uses the resource occupied by the first communication protocol may include: The second terminal uses the resource occupied by the first communication protocol and/or a terminal (for example, the first terminal) other than the second terminal uses the resource occupied by the first communication protocol.

In the foregoing technical solution, the second terminal may determine, based on the first information, the resource occupied by transmission according to the first communication protocol, determine, based on the resource occupied by transmission according to the first communication protocol, that the first resource is the available resource, and determine, based on the first resource, the second resource for data transmission according to the second communication protocol. In other words, the second resource that is determined by the second terminal and that is for data transmission according to the second communication protocol meets both of the following conditions: The second resource is an available resource, and a resource that corresponds to the second resource and that is for control information transmission according to the second communication protocol is an available resource. In this way, according to the foregoing technical solution, when determining an available resource for control information transmission according to the second communication protocol, the second terminal considers the resource occupied by transmission according to the first communication protocol, to avoid control information transmission according to the second communication protocol by using the resource occupied by transmission according to the first communication protocol. This helps avoid a resource conflict between transmission according to the first communication protocol and transmission according to the second communication protocol.

In addition, the second resource meets both of the following conditions: The second resource is the available resource, and the resource that corresponds to the second resource and that is for control information transmission according to the second communication protocol is the available resource, thereby helping improve reliability of transmission of the data according to the second communication protocol.

It should be noted that, when the second terminal determines that the first resource is the available resource, in addition to the first information, resource indication information used to indicate a resource occupied by transmission according to the second communication protocol may also be used. To be specific, the second terminal determines, based on the first information and the resource indication information for transmission according to the second communication protocol, that the first resource is the available resource or an unavailable resource. This is not limited in this application.

With reference to the second aspect, in a possible implementation, the method further includes: The second terminal sends second information to the first terminal, where the second information is used to indicate the first terminal to send control information, and the control information includes at least one of the following: HARQ information, CSI feedback information, or resource conflict indication information. For example, when the second terminal determines, based on the first information, that the first resource is the available resource, the second terminal sends the second information to the first terminal.

Optionally, the second information is carried in second-level SCI.

Optionally, the second information is HARQ enabling information in SCI, and the control information is the HARQ information. It may be understood as that if the first terminal receives data and the second information (which includes the HARQ enabling information) from the second terminal, the first terminal sends, to the second terminal, the HARQ information corresponding to the data, that is, the control information is the HARQ information.

Optionally, the second information is CSI trigger information in SCI, and the control information is the CSI feedback information. It may be understood as that if the first terminal receives data and the second information (which includes the CSI trigger information) from the second terminal, the first terminal sends the CSI feedback information to the second terminal, that is, the control information is the CSI feedback information.

Optionally, the second information is trigger information of resource conflict indication information in SCI, and the control information is the resource conflict indication information. It may be understood as that if the first terminal receives data and the second information (which includes the trigger information of the resource conflict indication information) from the second terminal, the first terminal sends the resource conflict indication information to the second terminal, that is, the control information is the resource conflict indication information.

For example, the HARQ enabling information and the CSI trigger information are indicated in the second-level SCI.

For example, the trigger information of the resource conflict indication information is indicated in first-level SCI. The trigger information of the resource conflict indication information may be time domain resource indication information and frequency domain resource indication information in the first-level SCI.

In the foregoing technical solution, the second terminal indicates the first terminal to send the control information. In this way, the first terminal may send the control information on the first resource according to the second communication protocol only when receiving an indication from the second terminal. This helps avoid a waste of resources. When the control information is the CSI feedback information, using CSI feedback can improve link adaptation (for example, help the second terminal that triggers CSI feedback better select an MCS) and improve system efficiency. When the control information is the resource conflict indication information, using the resource conflict indication information can improve data transmission reliability.

With reference to the second aspect or any implementation of the second aspect, in another possible implementation, the second resource corresponding to the first resource is a resource in a first candidate resource set, and the first candidate resource set is a candidate resource set used when the second terminal selects a resource for data transmission.

In other words, the second terminal determines a first candidate resource set based on the first resource, where the first candidate resource set is a candidate resource set used when the second terminal selects a resource for data transmission; and the second terminal determines the second resource from the first candidate resource set.

To be specific, the first candidate resource set determined by the second terminal meets the following conditions: The resource in the first candidate resource set is an available resource, and a resource that corresponds to the resource and that is for control information transmission is also an available resource.

In the foregoing technical solution, the second resource meets both of the following conditions: The second resource is the available resource, and the resource that corresponds to the second resource and that is for control information transmission according to the second communication protocol is the available resource, thereby helping improve reliability of transmission of the data according to the second communication protocol.

With reference to the second aspect or any implementation of the second aspect, in another possible implementation, that the second terminal determines a second resource based on the first resource includes: The second terminal determines a second candidate resource set, where the second candidate resource set is a candidate resource set used when the second terminal selects a resource for data transmission; and the second terminal determines the second resource from the second candidate resource set based on the first resource.

In the foregoing technical solution, the second resource meets both of the following conditions: The second resource is the available resource, and the resource that corresponds to the second resource and that is for control information transmission according to the second communication protocol is the available resource, thereby helping improve reliability of transmission of the data according to the second communication protocol.

With reference to the second aspect or any implementation of the second aspect, in another possible implementation, that the second terminal determines, based on the first information, that a first resource is an available resource includes: When a candidate resource in which the first resource is located fails to meet a preset condition, the second terminal determines that the first resource is the available resource. The preset condition is that the candidate resource overlaps with the resource occupied by transmission according to the first communication protocol and signal quality is lower than a first threshold. The candidate resource is a candidate resource used when the second terminal selects a resource for data transmission, the candidate resource is L consecutive frequency domain units in a first time unit, and L is an integer greater than or equal to 1.

In other words, when the candidate resource that is available for data transmission and in which the first resource is located is an available resource, the second terminal determines that the first resource is the available resource. When the candidate resource that is available for data transmission and in which the first resource is located is an unavailable resource, the second terminal determines that the first resource is an unavailable resource.

Optionally, the signal quality is signal quality corresponding to transmission according to the first communication protocol.

Optionally, the signal quality is energy in a time domain unit in which the first resource is located.

Optionally, the signal quality may be energy on P symbols in a first slot, or energy in a first slot.

Optionally, the energy may be indicated by at least one of an RSSI, an SNR, or an SINR.

In the foregoing technical solution, when selecting the resource for the data, the terminal determines, by detecting energy of a resource occupied by another device, whether data transmission of the terminal is interfered with. In the foregoing method, when it is determined whether the first resource (a resource for control information transmission) is available, the energy of the resource occupied by the another device is detected to determine whether control information transmission of the terminal is interfered with, thereby ensuring low interference to the resource for control information transmission, and ensuring transmission reliability of the control information. When the energy is energy (for example, an RSSI, an SNR, or an SINR) on at least one symbol or in one slot, an energy granularity is coarser compared with that using RS measurement, so that a channel occupation status on an entire symbol or slot may be reflected.

With reference to the second aspect or any implementation of the second aspect, in another possible implementation, that the second terminal determines, based on the first information, that a first resource is an available resource includes: When none of candidate resources included in a first time unit in which the first resource is located meets a preset condition, the second terminal determines that the first resource is the available resource. The preset condition is that the candidate resource overlaps with the resource occupied by transmission according to the first communication protocol and signal quality is lower than a first threshold. The candidate resource is a candidate resource used when the second terminal selects a resource for data transmission, the candidate resource is L consecutive frequency domain units in the first time unit, and L is an integer greater than or equal to 1.

In other words, when all of the candidate resources that are available for data transmission and that are included in the first time unit in which the first resource is located are available resources, the second terminal determines that the first resource is the available resource. When one or more of the candidate resources that are available for data transmission and that are included in the first time unit in which the first resource is located are unavailable resources, the second terminal determines that the first resource is an unavailable resource.

Optionally, the signal quality is signal quality corresponding to transmission according to the first communication protocol.

Optionally, the signal quality is energy in a time domain unit in which the first resource is located.

Optionally, the signal quality may be energy on P symbols in a first slot, or energy in a first slot.

Optionally, the energy may be indicated by at least one of an RSSI, an SNR, or an SINR.

In the foregoing technical solution, when it is determined whether the first resource (a resource for control information transmission) is available, energy of a resource occupied by another device is detected to determine whether control information transmission of the terminal is interfered with, thereby ensuring low interference to the resource for control information transmission, and ensuring transmission reliability of the control information. Further, when it is determined that a candidate resource is available, it is assumed that when the terminal sends control information on a first resource included in the candidate resource, because some other candidate resources included in the first time unit are unavailable, it indicates that a first communication protocol module performs transmission in the first time unit. In this case, a receiving and sending conflict between the first communication protocol module and a second communication protocol module may occur in the terminal. According to the method, when all of the candidate resources included in the first time unit are low-interference resources, the first resource is used. This can effectively avoid the receiving and sending conflict between the first communication protocol module and the second communication protocol module. When the energy is energy (for example, an RSSI, an SNR, or an SINR) on at least one symbol or in one slot, an energy granularity is coarser compared with that using reference signal RS measurement, so that a channel occupation status on an entire symbol or slot may be reflected.

With reference to the second aspect or any implementation of the second aspect, in another possible implementation, that the second terminal determines, based on the first information, that a first resource is an available resource includes: When a candidate resource in which the first resource is located fails to meet a preset condition, the second terminal determines that the first resource is the available resource. The preset condition is that the candidate resource overlaps with the resource occupied by transmission according to the first communication protocol and signal quality is lower than a second threshold. The candidate resource is a candidate resource used when a resource for control information transmission is selected, the candidate resource is L consecutive frequency domain units in a first time unit, and L is an integer greater than or equal to 1.

In other words, when the candidate resource that is available for control information transmission and in which the first resource is located is an available resource, the second terminal determines that the first resource is the available resource. When the candidate resource that is available for control information transmission and in which the first resource is located is an unavailable resource, the second terminal determines that the first resource is an unavailable resource.

Optionally, the signal quality is signal quality corresponding to transmission according to the first communication protocol.

Optionally, the signal quality is energy in a time domain unit in which the first resource is located.

Optionally, the signal quality may be energy on P symbols in a first slot, or energy in a first slot.

Optionally, the energy may be indicated by at least one of an RSSI, an SNR, or an SINR.

In the foregoing technical solution, when it is determined whether the first resource (a resource for control information transmission) is available, energy for transmission by another device according to the first communication protocol in the first time unit is detected to determine whether control information transmission of the terminal is interfered with, thereby ensuring low interference to the resource for control information transmission, and ensuring transmission reliability of the control information. When the energy is energy (for example, an RSSI, an SNR, or an SINR) on at least one symbol or in one slot, an energy granularity is coarser compared with that using reference signal RS measurement, so that a channel occupation status on an entire symbol or slot may be reflected.

With reference to the second aspect or any implementation of the second aspect, in another possible implementation, that the second terminal determines, based on the first information, that a first resource is an available resource includes: When none of candidate resources included in a first time unit in which the first resource is located meets a preset condition, the second terminal determines that the first resource is the available resource. The preset condition is that the candidate resource overlaps with the resource occupied by transmission according to the first communication protocol and signal quality is lower than a second threshold. The candidate resource is a candidate resource used when a resource for control information transmission is selected, the candidate resource is L consecutive frequency domain units in the first time unit, and L is an integer greater than or equal to 1.

In other words, when all of the candidate resources that are available for control information transmission and that are included in the first time unit in which the first resource is located are available resources, the second terminal determines that the first resource is the available resource. When one or more of the candidate resources that are available for control information transmission and that are included in the first time unit in which the first resource is located are unavailable resources, the second terminal determines that the first resource is an unavailable resource.

Optionally, the signal quality is signal quality corresponding to transmission according to the first communication protocol.

Optionally, the signal quality is energy in a time domain unit in which the first resource is located.

Optionally, the signal quality may be energy on P symbols in a first slot, or energy in a first slot.

Optionally, the energy may be indicated by at least one of an RSSI, an SNR, or an SINR.

In the foregoing technical solution, when it is determined whether the first resource (a resource for control information transmission) is available, energy for transmission by another device according to the first communication protocol in the first time unit is detected to determine whether control information transmission of the terminal is interfered with, thereby ensuring low interference to the resource for control information transmission, and ensuring transmission reliability of the control information. Because some of the candidate resources included in the first time unit are available and some of the candidate resources included in the first time unit are unavailable, it indicates that a first communication protocol module performs transmission in the first time unit. In this case, a receiving and sending conflict between the first communication protocol module and a second communication protocol module may occur in the terminal. According to the method, when all of the candidate resources included in the first time unit are low-interference resources, the first resource is used. This can effectively avoid the receiving and sending conflict between the first communication protocol module and the second communication protocol module. When the energy is energy (for example, an RSSI, an SNR, or an SINR) on at least one symbol or in one slot, an energy granularity is coarser compared with that using RS measurement, so that a channel occupation status on an entire symbol or slot may be reflected.

With reference to the second aspect or any implementation of the second aspect, in another possible implementation, the candidate resource is L consecutive subchannels in a first slot.

In the foregoing technical solution, a size of the candidate resource is defined, thereby ensuring integrity of the technical solutions of this application.

With reference to the second aspect or any implementation of the second aspect, in another possible implementation, the candidate resource is L consecutive subchannels on P symbols in a first slot, and P is an integer greater than or equal to 1.

In the foregoing technical solution, a time domain granularity of the candidate resource for sending the control information is defined, and may be one or two symbols (a sending symbol of a PSFCH, a sending symbol of a PSFCH, and a replication symbol of a sending symbol of a PSFCH). This ensures integrity of the technical solutions of this application. In addition, the time domain granularity of the candidate resource for sending the control information may be different from a time domain granularity of the candidate resource for sending the data, thereby ensuring accuracy of an interference determining degree.

With reference to the first aspect or any implementation of the first aspect, in another possible implementation, a frequency domain resource may be one or more PRBs.

In the foregoing technical solution, a size of the candidate resource is defined, thereby ensuring integrity of the technical solutions of this application. A granularity of the PRB is finer than that of a subchannel, and whether there is interference to the candidate resource can be more accurately determined.

With reference to the second aspect or any implementation of the second aspect, in another possible implementation, the second threshold is from an independently configured threshold table or threshold set; or the second threshold is an absolute threshold.

The second threshold may be determined based on a priority value of HARQ information to be sent by the first terminal and a priority value corresponding to a resource that is for transmission according to LTE-V and that overlaps with the candidate resource. Optionally, the second threshold may be associated with either of an MCS and a CBR.

In the foregoing technical solution, the second threshold is for determining an interference degree of the candidate resource for sending the control information. Setting a threshold separately for the candidate resource for the control information may more accurately determine the interference degree of the candidate resource for sending the control information, and also provide flexibility for configuration of a base station.

With reference to the second aspect or any implementation of the second aspect, in another possible implementation, that the second terminal determines, based on the first information, that a first resource is an available resource includes: When the first resource fails to meet a preset condition, the second terminal determines that the first resource is the available resource. The preset condition is that the first resource overlaps with the resource occupied by transmission according to the first communication protocol and signal quality is lower than a third threshold.

In other words, the second terminal directly determines, based on the preset condition, whether the first resource is the available resource. When the first resource fails to meet the preset condition, the second terminal determines that the first resource is the available resource. When the first resource meets the preset condition, the first terminal determines that the second resource is an unavailable resource.

Optionally, the signal quality is signal quality corresponding to transmission according to the first communication protocol.

Optionally, the signal quality is energy in a time domain unit in which the first resource is located.

Optionally, the signal quality may be energy on P symbols in a first slot, or energy in a first slot.

Optionally, the energy may be indicated by at least one of an RSSI, an SNR, or an SINR.

In the foregoing technical solution, according to the foregoing method, when it is determined whether the first resource (a resource for control information transmission) is available, energy for transmission by another device according to the first communication protocol in the first time unit is detected to determine whether control information transmission of the terminal is interfered with, thereby ensuring low interference to the resource for control information transmission, and ensuring transmission reliability of the control information. When the energy is energy (for example, an RSSI, an SNR, or an SINR) on at least one symbol or in one slot, an energy granularity is coarser compared with that using RS measurement, so that a channel occupation status on an entire symbol or slot may be reflected.

With reference to the second aspect or any implementation of the second aspect, in another possible implementation, the third threshold is from an independently configured threshold table or threshold set; or the third threshold is an absolute threshold.

In the foregoing technical solution, the third threshold is for determining an interference degree of the candidate resource for sending the control information. Setting a threshold separately for the first resource for the control information may more accurately determine the interference degree of the first resource for sending the control information, and also provide flexibility for configuration of a base station.

With reference to the second aspect or any implementation of the second aspect, in another possible implementation, the signal quality is represented by at least one of the following information: RSRP, an RSSI, an SNR, or an SINR.

With reference to the second aspect or any implementation of the second aspect, in another possible implementation, the first resource is not for data transmission.

That the first resource is not for data transmission may be understood as that the second terminal does not perform rate matching on the first resource when performing data rate matching.

Because sensing results of terminals of a receiving party and a sending party for the resource occupied by the first communication protocol are not necessarily the same, it is possible that the terminals of the receiving party and the sending party have different determining results for whether the first resource is available, a receiving and sending conflict (for example, a conflict between data receiving and HARQ information sending, or a conflict between HARQ information receiving and data sending) is caused. If the first resource is not for data transmission, the receiving and sending conflict can be avoided.

Optionally, the time domain unit in which the first resource is located is not for data transmission. In this way, the receiving and sending conflict between the terminals of the receiving party and the sending party can be avoided.

With reference to the second aspect or any implementation of the second aspect, in another possible implementation, the first information includes at least one of the following information: SCI or a measured value of signal quality corresponding to the SCI, where the SCI includes resource indication information for transmission according to the first communication protocol and/or a resource reserved field for transmission according to the first communication protocol.

Optionally, the SCI may be understood as SA.

Optionally, the first information includes PSCCH decoding information and RSRP measurement information.

Optionally, the first information includes PSCCH decoding information and a measured value of energy.

Optionally, the first information includes PSCCH decoding information and RSRP measurement information in a time domain resource set. A manner of determining a location of the time domain resource set includes at least one of the following: predefined, preconfigured, transmitted by the first communication protocol module of the first terminal to the second communication protocol module, or determined and sent by the second communication protocol module to the first communication protocol module. A manner of indicating the location of the time domain resource set includes at least one of the following: a start location of the time domain resource set, an end location of the time domain resource set, and a length of the time domain resource set. The end location of the time domain resource set is a location at which the second communication protocol module receives indication information of the time domain resource set, or the end location of the time domain resource set is a location that is a time interval before a location at which the second communication protocol module receives the indication information of the time domain resource set. The time interval is transmission (sending or transparent transmission) time from the first communication protocol module to the second communication protocol module. A reference point of the start location of the time domain resource set is a location at which a system frame number, for example, a DFN is 0, or a location at which an SFN is 0. The start location of the time resource set is determined based on the reference point and a time offset value.

Optionally, the time domain resource set is consecutive. For example, the time domain resource set is a time window.

With reference to the second aspect or any implementation of the second aspect, in another possible implementation, the first communication protocol and the second communication protocol use a same time-frequency resource set.

With reference to the second aspect or any implementation of the second aspect, in another possible implementation, the control information is ACK information fed back by the first terminal to the second terminal when the first terminal successfully decodes the first data from the second terminal; or the control information is NACK information fed back by the first terminal to the second terminal when the first terminal fails to decode the first data from the second terminal.

Optionally, the control information may be an ACK or a NACK of a multicast feedback option 1, a NACK only of a multicast feedback option 2 (NACK information fed back to the second terminal only when the first terminal fails to decode the first data from the second terminal), or a unicast ACK or NACK.

According to a third aspect, a control information receiving method is provided. The method may be performed by a second terminal, or may be performed by a module or a unit used in the second terminal. For ease of description, the second terminal and the module or unit used in the second terminal are collectively referred to as the second terminal below.

The method includes: The second terminal sends first data to a first terminal on a second resource according to a second communication protocol. The second terminal sends second information corresponding to the first data to the first terminal, where the second information is used to indicate the first terminal to send control information. The second terminal obtains first information, where the first information is used to indicate a resource occupied by transmission according to a first communication protocol. The second terminal determines, based on the first information, that a first resource is an available resource. The second terminal receives the control information on the first resource according to the second communication protocol.

Optionally, the first communication protocol is LTE-V, and the second communication protocol is R18 NR-V.

Optionally, the first communication protocol is LTE-Sidelink, and the second communication protocol is R18 NR-Sidelink.

Optionally, the second communication protocol may be NR-V of any version. For example, the second communication protocol includes R18 NR-V, R19 NR-V, R20 NR-V, and the like. This is not limited herein.

Optionally, the control information includes at least one of the following: HARQ information, CSI feedback information, or resource conflict indication information.

The second information corresponding to the first data may be understood as second information sent simultaneously with the first data. The second information is for scheduling the first data, and the second information is for triggering the first terminal to send the control information (for example, the HARQ information, the resource conflict indication information, or the CSI feedback information) related to the first data. For example, the second information is a PSCCH for scheduling a PSSCH carrying the first data.

Optionally, the second information is carried in second-level SCI.

Optionally, the second information is HARQ enabling information in SCI, and the control information is the HARQ information. It may be understood as that if the first terminal receives data and the second information (which includes the HARQ enabling information) from the second terminal, the first terminal sends, to the second terminal, the HARQ information corresponding to the data, that is, the control information is the HARQ information.

Optionally, the second information is CSI trigger information in SCI, and the control information is the CSI feedback information. It may be understood as that if the first terminal receives data and the second information (which includes the CSI trigger information) from the second terminal, the first terminal sends the CSI feedback information to the second terminal, that is, the control information is the CSI feedback information.

Optionally, the second information is trigger information of resource conflict indication information in SCI, and the control information is the resource conflict indication information. It may be understood as that if the first terminal receives data and the second information (which includes the trigger information of the resource conflict indication information) from the second terminal, the first terminal sends the resource conflict indication information to the second terminal, that is, the control information is the resource conflict indication information.

For example, the HARQ enabling information and the CSI trigger information are indicated in the second-level SCI.

For example, the trigger information of the resource conflict indication information is indicated in first-level SCI. The trigger information of the resource conflict indication information may be time domain resource indication information and frequency domain resource indication information in the first-level SCI.

That the first information is for determining a resource occupied by transmission according to a first communication protocol may be replaced with that the first information is used to indicate a terminal to use a resource occupied by the first communication protocol. Optionally, that the terminal uses the resource occupied by the first communication protocol may include: The second terminal uses the resource occupied by the first communication protocol and/or a terminal (for example, the first terminal) other than the second terminal uses the resource occupied by the first communication protocol.

In the foregoing technical solution, the second terminal indicates the first terminal to send the control information to the second terminal, determines, based on the first information, the resource occupied by transmission according to the first communication protocol, and receives the control information on the first resource according to the second communication protocol when determining, based on the resource occupied by transmission according to the first communication protocol, that the first resource is the available resource. In this way, according to the foregoing technical solution, when determining an available resource for control information transmission according to the second communication protocol, the second terminal considers the resource occupied by transmission according to the first communication protocol, to avoid control information transmission according to the second communication protocol by using the resource occupied by transmission according to the first communication protocol. This helps avoid a resource conflict between transmission according to the first communication protocol and transmission according to the second communication protocol.

In addition, receiving of the control information according to the second communication protocol can be implemented by using the foregoing technical solution, thereby helping improve data transmission reliability according to the second communication protocol.

In addition, the second terminal indicates the first terminal to send the control information. In this way, the first terminal may send the control information on the first resource according to the second communication protocol only when receiving an indication from the second terminal. This helps avoid a waste of resources. When the control information is the CSI feedback information, using CSI feedback can improve link adaptation (for example, help the second terminal that triggers CSI feedback better select an MCS) and improve system efficiency. When the control information is the resource conflict indication information, using the resource conflict indication information can improve data transmission reliability.

It should be noted that, when the second terminal determines that the first resource is the available resource, in addition to the first information, resource indication information used to indicate a resource occupied by transmission according to the second communication protocol may also be used. To be specific, the second terminal determines, based on the first information and the resource indication information for transmission according to the second communication protocol, that the first resource is the available resource or an unavailable resource. This is not limited in this application.

With reference to the third aspect, in a possible implementation, that the second terminal determines, based on the first information, that a first resource is an available resource includes: When a candidate resource in which the first resource is located fails to meet a preset condition, the second terminal determines that the first resource is the available resource. The preset condition is that the candidate resource overlaps with the resource occupied by transmission according to the first communication protocol and signal quality is lower than a first threshold. The candidate resource is a candidate resource used when the second terminal selects a resource for data transmission, the candidate resource is L consecutive frequency domain units in a first time unit, and L is an integer greater than or equal to 1.

In other words, when the candidate resource that is available for data transmission and in which the first resource is located is an available resource, the second terminal determines that the first resource is the available resource. When the candidate resource that is available for data transmission and in which the first resource is located is an unavailable resource, the second terminal determines that the first resource is an unavailable resource.

Optionally, the signal quality is signal quality corresponding to transmission according to the first communication protocol.

Optionally, the signal quality is energy in a time domain unit in which the first resource is located.

Optionally, the signal quality may be energy on P symbols in a first slot, or energy in a first slot.

Optionally, the energy may be indicated by at least one of an RSSI, an SNR, or an SINR.

In the foregoing technical solution, when selecting the resource for the data, the terminal determines, by detecting energy of a resource occupied by another device, whether data transmission of the terminal is interfered with. In the foregoing method, when it is determined whether the first resource (a resource for control information transmission) is available, the energy of the resource occupied by the another device is detected to determine whether control information transmission of the terminal is interfered with, thereby ensuring low interference to the resource for control information transmission, and ensuring transmission reliability of the control information. When the energy is energy (for example, an RSSI, an SNR, or an SINR) on at least one symbol or in one slot, an energy granularity is coarser compared with that using RS measurement, so that a channel occupation status on an entire symbol or slot may be reflected.

With reference to the third aspect or any implementation of the third aspect, in another possible implementation, that the second terminal determines, based on the first information, that a first resource is an available resource includes: When none of candidate resources included in a first time unit in which the first resource is located meets a preset condition, the second terminal determines that the first resource is the available resource. The preset condition is that the candidate resource overlaps with the resource occupied by transmission according to the first communication protocol and signal quality is lower than a first threshold. The candidate resource is a candidate resource used when the second terminal selects a resource for data transmission, the candidate resource is L consecutive frequency domain units in the first time unit, and L is an integer greater than or equal to 1.

In other words, when all of the candidate resources that are available for data transmission and that are included in the first time unit in which the first resource is located are available resources, the second terminal determines that the first resource is the available resource. When one or more of the candidate resources that are available for data transmission and that are included in the first time unit in which the first resource is located are unavailable resources, the second terminal determines that the first resource is an unavailable resource.

Optionally, the signal quality is signal quality corresponding to transmission according to the first communication protocol.

Optionally, the signal quality is energy in a time domain unit in which the first resource is located.

Optionally, the signal quality may be energy on P symbols in a first slot, or energy in a first slot.

Optionally, the energy may be indicated by at least one of an RSSI, an SNR, or an SINR.

In the foregoing technical solution, when it is determined whether the first resource (a resource for control information transmission) is available, energy of a resource occupied by another device is detected to determine whether control information transmission of the terminal is interfered with, thereby ensuring low interference to the resource for control information transmission, and ensuring transmission reliability of the control information. Further, when it is determined that a candidate resource is available, it is assumed that when the terminal sends control information on a first resource included in the candidate resource, because some other candidate resources included in the first time unit are unavailable, it indicates that a first communication protocol module performs transmission in the first time unit. In this case, a receiving and sending conflict between the first communication protocol module and a second communication protocol module may occur in the terminal. According to the method, when all of the candidate resources included in the first time unit are low-interference resources, the first resource is used. This can effectively avoid the receiving and sending conflict between the first communication protocol module and the second communication protocol module. When the energy is energy (for example, an RSSI, an SNR, or an SINR) on at least one symbol or in one slot, an energy granularity is coarser compared with that using reference signal RS measurement, so that a channel occupation status on an entire symbol or slot may be reflected.

With reference to the third aspect or any implementation of the third aspect, in another possible implementation, that the second terminal determines, based on the first information, that a first resource is an available resource includes: When a candidate resource in which the first resource is located fails to meet a preset condition, the second terminal determines that the first resource is the available resource. The preset condition is that the candidate resource overlaps with the resource occupied by transmission according to the first communication protocol and signal quality is lower than a second threshold. The candidate resource is a candidate resource used when a resource for control information transmission is selected, the candidate resource is L consecutive frequency domain units in a first time unit, and L is an integer greater than or equal to 1.

In other words, when the candidate resource that is available for control information transmission and in which the first resource is located is an available resource, the second terminal determines that the first resource is the available resource. When the candidate resource that is available for control information transmission and in which the first resource is located is an unavailable resource, the second terminal determines that the first resource is an unavailable resource.

Optionally, the signal quality is signal quality corresponding to transmission according to the first communication protocol.

Optionally, the signal quality is energy in a time domain unit in which the first resource is located.

Optionally, the signal quality may be energy on P symbols in a first slot, or energy in a first slot.

Optionally, the energy may be indicated by at least one of an RSSI, an SNR, or an SINR.

In the foregoing technical solution, when it is determined whether the first resource (a resource for control information transmission) is available, energy for transmission by another device according to the first communication protocol in the first time unit is detected to determine whether control information transmission of the terminal is interfered with, thereby ensuring low interference to the resource for control information transmission, and ensuring transmission reliability of the control information. When the energy is energy (for example, an RSSI, an SNR, or an SINR) on at least one symbol or in one slot, an energy granularity is coarser compared with that using reference signal RS measurement, so that a channel occupation status on an entire symbol or slot may be reflected.

With reference to the third aspect or any implementation of the third aspect, in another possible implementation, that the second terminal determines, based on the first information, that a first resource is an available resource includes: When none of candidate resources included in a first time unit in which the first resource is located meets a preset condition, the second terminal determines that the first resource is the available resource. The preset condition is that the candidate resource overlaps with the resource occupied by transmission according to the first communication protocol and signal quality is lower than a second threshold. The candidate resource is a candidate resource used when a resource for control information transmission is selected, the candidate resource is L consecutive frequency domain units in the first time unit, and L is an integer greater than or equal to 1.

In other words, when all of the candidate resources that are available for control information transmission and that are included in the first time unit in which the first resource is located are available resources, the second terminal determines that the first resource is the available resource. When one or more of the candidate resources that are available for control information transmission and that are included in the first time unit in which the first resource is located are unavailable resources, the second terminal determines that the first resource is an unavailable resource.

Optionally, the signal quality is signal quality corresponding to transmission according to the first communication protocol.

Optionally, the signal quality is energy in a time domain unit in which the first resource is located.

Optionally, the signal quality may be energy on P symbols in a first slot, or energy in a first slot.

Optionally, the energy may be indicated by at least one of an RSSI, an SNR, or an SINR.

In the foregoing technical solution, when it is determined whether the first resource (a resource for control information transmission) is available, energy for transmission by another device according to the first communication protocol in the first time unit is detected to determine whether control information transmission of the terminal is interfered with, thereby ensuring low interference to the resource for control information transmission, and ensuring transmission reliability of the control information. Because some of the candidate resources included in the first time unit are available and some of the candidate resources included in the first time unit are unavailable, it indicates that a first communication protocol module performs transmission in the first time unit. In this case, a receiving and sending conflict between the first communication protocol module and a second communication protocol module may occur in the terminal. According to the method, when all of the candidate resources included in the first time unit are low-interference resources, the first resource is used. This can effectively avoid the receiving and sending conflict between the first communication protocol module and the second communication protocol module. When the energy is energy (for example, an RSSI, an SNR, or an SINR) on at least one symbol or in one slot, an energy granularity is coarser compared with that using RS measurement, so that a channel occupation status on an entire symbol or slot may be reflected.

With reference to the third aspect or any implementation of the third aspect, in another possible implementation, the candidate resource is L consecutive subchannels in a first slot.

In the foregoing technical solution, a size of the candidate resource is defined, thereby ensuring integrity of the technical solutions of this application.

With reference to the third aspect or any implementation of the third aspect, in another possible implementation, the candidate resource is L consecutive subchannels on P symbols in a first slot, and P is an integer greater than or equal to 1.

In the foregoing technical solution, a time domain granularity of the candidate resource for sending the control information is defined, and may be one or two symbols (a sending symbol of a PSFCH, a sending symbol of a PSFCH, and a replication symbol of a sending symbol of a PSFCH). This ensures integrity of the technical solutions of this application. In addition, the time domain granularity of the candidate resource for sending the control information may be different from a time domain granularity of the candidate resource for sending the data, thereby ensuring accuracy of an interference determining degree.

With reference to the first aspect or any implementation of the first aspect, in another possible implementation, a frequency domain resource may be one or more PRBs.

In the foregoing technical solution, a size of the candidate resource is defined, thereby ensuring integrity of the technical solutions of this application. A granularity of the PRB is finer than that of a subchannel, and whether there is interference to the candidate resource can be more accurately determined.

With reference to the third aspect or any implementation of the third aspect, in another possible implementation, the second threshold is from an independently configured threshold table or threshold set; or the second threshold is an absolute threshold.

The second threshold may be determined based on a priority value of HARQ information to be sent by the first terminal and a priority value corresponding to a resource that is for transmission according to LTE-V and that overlaps with the candidate resource. Optionally, the second threshold may be associated with either of an MCS and a CBR.

In the foregoing technical solution, the second threshold is for determining an interference degree of the candidate resource for sending the control information. Setting a threshold separately for the candidate resource for the control information may more accurately determine the interference degree of the candidate resource for sending the control information, and also provide flexibility for configuration of a base station.

With reference to the third aspect or any implementation of the third aspect, in another possible implementation, that the second terminal determines, based on the first information, that a first resource is an available resource includes: When the first resource fails to meet a preset condition, the second terminal determines that the first resource is the available resource. The preset condition is that the first resource overlaps with the resource occupied by transmission according to the first communication protocol and signal quality is lower than a third threshold.

In other words, the second terminal directly determines, based on the preset condition, whether the first resource is the available resource. When the first resource fails to meet the preset condition, the second terminal determines that the first resource is the available resource. When the first resource meets the preset condition, the first terminal determines that the second resource is an unavailable resource.

Optionally, the signal quality is signal quality corresponding to transmission according to the first communication protocol.

Optionally, the signal quality is energy in a time domain unit in which the first resource is located.

Optionally, the signal quality may be energy on P symbols in a first slot, or energy in a first slot.

Optionally, the energy may be indicated by at least one of an RSSI, an SNR, or an SINR.

In the foregoing technical solution, according to the foregoing method, when it is determined whether the first resource (a resource for control information transmission) is available, energy for transmission by another device according to the first communication protocol in the first time unit is detected to determine whether control information transmission of the terminal is interfered with, thereby ensuring low interference to the resource for control information transmission, and ensuring transmission reliability of the control information. When the energy is energy (for example, an RSSI, an SNR, or an SINR) on at least one symbol or in one slot, an energy granularity is coarser compared with that using RS measurement, so that a channel occupation status on an entire symbol or slot may be reflected.

With reference to the third aspect or any implementation of the third aspect, in another possible implementation, the third threshold is from an independently configured threshold table or threshold set; or the third threshold is an absolute threshold.

In the foregoing technical solution, the third threshold is for determining an interference degree of the candidate resource for sending the control information. Setting a threshold separately for the first resource for the control information may more accurately determine the interference degree of the first resource for sending the control information, and also provide flexibility for configuration of a base station.

With reference to the third aspect or any implementation of the third aspect, in another possible implementation, the signal quality is represented by at least one of the following information: RSRP, an RSSI, an SNR, or an SINR.

With reference to the third aspect or any implementation of the third aspect, in another possible implementation, the first resource is not for data transmission.

That the first resource is not for data transmission may be understood as that the second terminal does not perform rate matching on the first resource when performing data rate matching.

Because sensing results of terminals of a receiving party and a sending party for the resource occupied by the first communication protocol are not necessarily the same, it is possible that the terminals of the receiving party and the sending party have different determining results for whether the first resource is available, a receiving and sending conflict (for example, a conflict between data receiving and HARQ information sending, or a conflict between HARQ information receiving and data sending) is caused. If the first resource is not for data transmission, the receiving and sending conflict can be avoided.

Optionally, the time domain unit in which the first resource is located is not for data transmission. In this way, the receiving and sending conflict between the terminals of the receiving party and the sending party can be avoided.

With reference to the third aspect or any implementation of the third aspect, in another possible implementation, the first information includes at least one of the following information: SCI or signal quality corresponding to the SCI, where the SCI includes resource indication information for transmission according to the first communication protocol and/or a resource reserved field for transmission according to the first communication protocol.

Optionally, the SCI may be understood as SA.

Optionally, the first information includes PSCCH decoding information and RSRP measurement information.

Optionally, the first information includes PSCCH decoding information and a measured value of energy.

Optionally, the first information includes PSCCH decoding information and RSRP measurement information in a time domain resource set. A manner of determining a location of the time domain resource set includes at least one of the following: predefined, preconfigured, transmitted by the first communication protocol module of the first terminal to the second communication protocol module, or determined and sent by the second communication protocol module to the first communication protocol module. A manner of indicating the location of the time domain resource set includes at least one of the following: a start location of the time domain resource set, an end location of the time domain resource set, and a length of the time domain resource set. The end location of the time domain resource set is a location at which the second communication protocol module receives indication information of the time domain resource set, or the end location of the time domain resource set is a location that is a time interval before a location at which the second communication protocol module receives the indication information of the time domain resource set. The time interval is transmission (sending or transparent transmission) time from the first communication protocol module to the second communication protocol module. A reference point of the start location of the time domain resource set is a location at which a system frame number, for example, a DFN is 0, or a location at which an SFN is 0. The start location of the time resource set is determined based on the reference point and a time offset value.

Optionally, the time domain resource set is consecutive. For example, the time domain resource set is a time window.

With reference to the third aspect or any implementation of the third aspect, in another possible implementation, the first communication protocol and the second communication protocol use a same time-frequency resource set.

With reference to the third aspect or any implementation of the third aspect, in another possible implementation, the control information is ACK information fed back by the first terminal to the second terminal when the first terminal successfully decodes the first data from the second terminal; or the control information is NACK information fed back by the first terminal to the second terminal when the first terminal fails to decode the first data from the second terminal.

Optionally, the control information may be an ACK or a NACK of a multicast feedback option 1, a NACK only of a multicast feedback option 2 (NACK information fed back to the second terminal only when the first terminal fails to decode the first data from the second terminal), or a unicast ACK or NACK.

According to a fourth aspect, a control information sending method is provided. The method may be performed by a first terminal, or may be performed by a module or a unit used in the first terminal. For ease of description, the first terminal and the module or unit used in the first terminal are collectively referred to as the first terminal below.

The method includes: The first terminal determines a third resource from a control resource set. The first terminal sends control information on the third resource according to a second communication protocol. A first resource set in the control resource set is configured for control information transmission according to a third communication protocol, and the third resource is different from a resource in the first resource set.

Optionally, the second communication protocol is R18 NR-V, and the third communication protocol is R16 NR-V

Optionally, the second communication protocol is R18 NR-V, and the third communication protocol is R17 NR-V.

Optionally, the third communication protocol is the same as the second communication protocol. In this case, the first resource set is a set of resources configured for control information transmission according to the second communication protocol. For example, if a resource pool for the R18 NR-V includes two types of resources, one type of resource is a time-frequency resource dedicated to the R18 NR-V, and the other type of resource is a time-frequency resource jointly used in the R18 NR-V and the LTE-V, when a second terminal transmits, according to the R18 NR-V, data on the time-frequency resource jointly used in the R18 NR-V and the LTE-V, the second terminal may transmit, by using a remaining resource in the resource dedicated to the R18 NR-V, control information corresponding to the data. The remaining resource is a resource that is in the resource dedicated to the R18 NR-V, that is for control information transmission but that is not occupied. For another example, a resource set 1 is a time-frequency resource jointly used in the R18 NR-V and the LTE-V, and a resource set 2 is a time-frequency resource used in the R18 NR-V. The resource set 2 includes a control resource set, control information corresponding to data in the resource set 1 may be transmitted on a remaining resource in the control resource set in the resource set 2.

A resource or a control resource included in the control resource set is available for control information transmission, or the control resource set is a resource set including resources that are available for control information transmission.

In the foregoing technical solution, the first terminal may transmit the control information according to the second communication protocol through a control resource that is in the control resource set and that is different from a resource for control information transmission according to the third communication protocol. In this way, according to the foregoing technical solution, the first terminal can transmit data according to the second communication protocol through a time-frequency resource jointly used in a first communication protocol, and transmit the control information according to the second communication protocol through the control resource that is different from the resource for control information transmission according to the third communication protocol. This helps avoid a resource conflict between transmission according to the first communication protocol and transmission according to the second communication protocol.

With reference to the fourth aspect, in a possible implementation, the third resource and the resource in the first resource set are multiplexed in a frequency division multiplexing manner and/or a code division multiplexing manner.

Optionally, the control resource set is a control resource set for the third communication protocol, that is, the control resource set is the first resource set. It may be understood as that a control resource set for the second communication protocol is the same as the control resource set for the third communication protocol. In this case, the third resource and the resource in the first resource set may be multiplexed in a frequency division multiplexing manner, a code division multiplexing manner, or both a frequency division multiplexing manner and a code division multiplexing manner. In this case, because the first terminal transmits the control information according to the second communication protocol through a resource that is in the control resource set for the third communication protocol and that is different from the resource for control information transmission according to the third communication protocol, spectrum utilization efficiency can be improved.

Optionally, the control resource set includes the first resource set and a second resource set. The first resource set is a control resource set for the third communication protocol, and the second resource set is a control resource set for the second communication protocol. The third resource belongs to the second resource set. A resource in the second resource set and the resource in the first resource set are multiplexed in a frequency division multiplexing manner. In other words, the second resource set and the first resource set have no intersection in frequency domain.

For example, the first resource set includes a PRB 0, a PRB 1, and a PRB 2, and the second resource set includes a PRB 5, a PRB 6, and a PRB 7.

Optionally, the control resource set includes the first resource set and a second resource set. The first resource set is a control resource set for the third communication protocol, and the second resource set is a control resource set for the second communication protocol. The third resource belongs to the second resource set. A resource in the second resource set and the resource in the first resource set are multiplexed in a frequency division multiplexing manner, or a resource in the second resource set and the resource in the first resource set are the same in frequency domain but different in code domain.

For example, the first resource set includes a PRB 0, a PRB 1, and a PRB 2, and the second resource set includes a PRB 2, a PRB 3, and a PRB 4. In this way, the PRB 2 is available for transmission of both the control information according to the second communication protocol and the control information according to the third communication protocol. For differentiation, in this case, the PRB 2 for the second communication protocol and the PRB 2 for the third communication protocol may be multiplexed in a code division multiplexing manner. The PRB 0 and the PRB 1 in the second resource set and the resource in the second resource set are multiplexed in a frequency division multiplexing manner.

With reference to the fourth aspect or any implementation of the fourth aspect, in another possible implementation, the method further includes: The first terminal receives data on a fourth resource. That the first terminal determines a third resource from a control resource set includes: The first terminal determines a time domain resource of the third resource based on the fourth resource and a first mapping relationship. The first mapping relationship includes a mapping relationship between a first physical slot and a second physical slot, the first physical slot is a last physical slot (namely, a physical slot in which an end location of the fourth resource is located) included in the fourth resource, the second physical slot is a 1st physical slot that includes a control resource and that meets a first time interval with the first physical slot, and the second physical slot is after the first physical slot. The first time interval may be in a unit of a physical slot.

Optionally, the fourth resource belongs to a time-frequency resource set jointly used by transmission according to the first communication protocol.

The physical slot is used herein because a mapping relationship from a physical sidelink shared channel (physical sidelink shared channel, PSSCH) to a PSFCH in the third communication protocol is determined based on a logical slot in a resource pool for the third communication protocol. The resource pool for the second communication protocol also has an index of a logical slot in the resource pool. As a result, the index of the logical slot in the resource pool for the second communication protocol and an index of the logical slot in the resource pool for the third communication protocol cannot be directly associated with each other. However, both the resource pool for the second communication protocol and the resource pool for the third communication protocol have a mapping relationship with the physical slot. Therefore, a mapping relationship from a PSSCH resource in the resource pool for the second communication protocol to a PSFCH resource in the resource pool for the third communication protocol may be determined based on the physical slot.

With reference to the fourth aspect or any implementation of the fourth aspect, in another possible implementation, the first time interval is preconfigured or predefined, or is configured by a base station.

Optionally, a value range of the first time interval may be 2 or 3.

With reference to the fourth aspect or any implementation of the fourth aspect, in another possible implementation, the method further includes: The first terminal receives data on a fourth resource. That the first terminal determines a third resource from a control resource set includes: The first terminal determines a frequency domain resource of the third resource based on the fourth resource and a second mapping relationship, where the second mapping relationship includes a mapping relationship between a frequency domain resource of the fourth resource and the frequency domain resource of the third resource.

With reference to the fourth aspect or any implementation of the fourth aspect, in another possible implementation, the third resource and the resource in the first resource set are multiplexed in a frequency division multiplexing manner. Optionally, the resource in the second resource set and the resource in the first resource set are multiplexed in a frequency division multiplexing manner. Optionally, some of resources in the second resource set are the same as or different from resources in the first resource set, and the third resource is a resource that is multiplexed with the resource in the first resource set in a frequency division multiplexing manner. In this case, that the first terminal determines a third resource from a control resource set includes: The first terminal determines a code domain resource of the third resource based on a first cyclic shift (cyclic shift, CS) pair table, where the first CS pair table is a CS pair table for the third communication protocol.

In the foregoing technical solution, the third resource and the resource for control information transmission according to the third communication protocol are multiplexed in a frequency division multiplexing manner. Therefore, a receiving and sending conflict does not occur between transmission according to the second communication protocol and transmission according to the third communication protocol, and transmission according to the second communication protocol may support HARQ feedback to improve data transmission reliability, in addition, reliability of transmission of a HARQ according to the third communication protocol and transmission of corresponding data according to the third communication protocol is not affected. In this case, resources for transmission according to the second communication protocol and transmission according to the third communication protocol have been distinguished from each other in frequency domain. Therefore, the CS pair table for the third communication protocol may be reused as a CS pair table for the second communication protocol.

With reference to the fourth aspect or any implementation of the fourth aspect, in another possible implementation, that the first terminal determines a third resource from a control resource set includes: The first terminal determines a code domain resource of the third resource based on a second CS pair table, where the second CS pair table is different from the first CS pair table for the third communication protocol.

In the foregoing technical solution, the first terminal may determine the code domain resource of the third resource based on a CS table different from the CS pair table for the third communication protocol, so as to implement code division multiplexing between the third resource and a control resource for the third communication protocol. This helps avoid a resource conflict between control information transmission according to the second communication protocol and control information transmission according to the third communication protocol, and further helps improve transmission reliability. In this case, the third resource may be multiplexed in a frequency division multiplexing manner with the resource for control information transmission according to the third communication protocol, or may not be multiplexed in a frequency division multiplexing manner.

With reference to the fourth aspect or any implementation of the fourth aspect, in another possible implementation, that the first terminal determines a third resource from a control resource set includes: When the first terminal determines that the third resource and the resource in the first resource set are multiplexed in a frequency division multiplexing manner, the first terminal determines a code domain resource of the third resource based on a first CS pair table; or when the first terminal determines that the third resource and the resource in the first resource set are multiplexed in a code division multiplexing manner, the first terminal determines a code domain resource of the third resource based on a second CS pair table, where the second CS pair table is different from a first CS pair table for the third communication protocol.

In this case, some of resources in the second resource set for the second communication protocol are multiplexed with resources in the first resource set for the third communication protocol in a frequency division multiplexing manner, and some of the resources are multiplexed in a code division multiplexing manner instead of a frequency division multiplexing manner.

In the foregoing technical solution, the first terminal may flexibly select a CS pair table based on a frequency domain resource of a second resource, to implement frequency division multiplexing or code division multiplexing between the third resource and the resource for control information transmission according to the third communication protocol. This helps avoid a resource conflict between control information transmission according to the second communication protocol and control information transmission according to the third communication protocol, and avoid affecting transmission reliability.

With reference to the fourth aspect or any implementation of the fourth aspect, in another possible implementation, a maximum quantity of CS logarithms for the second communication protocol is W. W may be configured based on RRC (configured by a network device based on an RRC parameter), predefined, or preconfigured. For example, W is 6 or 3.

A CS pair for the second communication protocol includes at least one of the following cases:

(1) The CS logarithm is 1: A first CS pair is used for the third communication protocol, and the first CS pair indicates a value 1 and a value 2 (the value 2 is a CS value paired with the value 1). A second CS pair is used for the second communication protocol, and the second CS pair indicates a value 3 and a value 4 (the value 4 is a CS value paired with the value 3). The value 1 and the value 3 are different.

For example, the CS pair is (A, B), where an index of the CS pair may indicate only A, and B is a CS value paired with A.

For example, when the value 1 is 0, and the value 3 may be any one of 2, 3, 4, and 5. For example, the first CS pair is (0, 6), the value 1 is 0, and the value 2 is 6; and the second CS pair is (3, 9), that is, the value 3 is 3, and the value 4 is 9. In this case, orthogonality between the first CS pair and the second CS pair is the best, and interference between transmission according to the second communication protocol and transmission according to the third communication protocol is small.

For another example, the first CS pair is (0, 6), and the second CS pair is (2, 8). For another example, the first CS pair is (0, 6), and the first CS pair is (4, 10). For another example, the first CS pair is (0, 6), and the first CS pair is (5, 11). In this case, specific orthogonality still exists between the first CS pair and the second CS pair, and interference between transmission according to the second communication protocol and transmission according to the third communication protocol is reduced as much as possible.

(2) The CS logarithm is 2: A first CS pair is used for the third communication protocol, and the first CS pair indicates a value 5 (a value of a corresponding paired CS is 6) and a value 7 (a value of a corresponding paired CS is 8). A second CS pair is used for the second communication protocol, and the second CS pair indicates a value 9 (a value of a corresponding paired CS is 10) and a value 11 (a value of a corresponding paired CS is 12). The values 5 and 7 are different from the values 9 and 11.

For example, the first CS pair is (0, 6) and (3, 9), and the second CS pair is any two of (1, 7), (2, 8), (4, 10), and (5, 11). For example, the first CS pair is (0, 6) and (3, 9), and the second CS pair is (1, 7) and (2, 8). Alternatively, the first CS pair is (0, 6) and (3, 9), and the second CS pair is (2, 8) and (4, 10). Alternatively, the first CS pair is (0, 6) and (3, 9), and the second CS pair is (4, 10) and (5, 11). Alternatively, the first CS pair is (0, 6) and (3, 9), and the second CS pair is (2, 8) and (5, 11). Alternatively, the first CS pair is (0, 6) and (3, 9), and the second CS pair is (1, 7) and (5, 11). Alternatively, the first CS pair is (0, 6) and (3, 9), and the second CS pair is (1, 7) and (4, 10). In this case, specific orthogonality still exists between the first CS pair and the second CS pair, and interference between transmission according to the second communication protocol and transmission according to the third communication protocol is reduced as much as possible.

(3) The CS logarithm is 3: A first CS pair is used for the third communication protocol, and the first CS pair indicates a value 12 (a value of a corresponding paired CS is 13), a value 14 (a value of a corresponding paired CS is 15), and a value 16 (a value of a corresponding paired CS is 17). A second CS pair is used for the second communication protocol, and the second CS pair indicates a value 17 (a value of a corresponding paired CS is 18), a value 19 (a value of a corresponding paired CS is 20), and a value 21 (a value of a corresponding paired CS is 22). The values 12, 14, and 16 are different from the values 17, 19, and 21.

For example, the first CS pair is (0, 6), (2, 8), and (4, 10), and the second CS pair is (1, 7), (3, 9), and (5, 11). In this case, specific orthogonality still exists between the first CS pair and the second CS pair, and interference between transmission according to the second communication protocol and transmission according to the third communication protocol is reduced as much as possible.

Optionally, the CS pair may be configured based on RRC, predefined, or preconfigured.

With reference to the fourth aspect or any implementation of the fourth aspect, in another possible implementation, a CS pair corresponding to a first CS logarithm in the second CS pair table is different from a CS pair corresponding to a first CS logarithm in the first CS pair table.

It may be understood as that an index of a same CS logarithm corresponds to different CS pairs in two CS pair tables.

With reference to the fourth aspect or any implementation of the fourth aspect, in another possible implementation, the second CS pair table includes at least one entry in the following tables. For example, the second CS pair table includes at least one row in the following tables:

| $N_{CS}^{PSFCH}$ | CS pair index 0 | CS pair index 1 | CS pair index 2 | CS pair index 3 | CS pair index 4 | CS pair index 5 |
|---|---|---|---|---|---|---|
| 1 | 3 | - | - | - | - | - |
| 2 | 1 | 4 | - | - | - | - |
| 3 | 1 | 3 | 5 | - | - | - |

or

| $N_{CS}^{PSFCH}$ | CS pair index 0 | CS pair index 1 | CS pair index 2 | CS pair index 3 | CS pair index 4 | CS pair index 5 |
|---|---|---|---|---|---|---|
| 1 | 3 | - | - | - | - | - |
| 2 | 2 | 5 | - | - | - | - |
| 3 | 1 | 3 | 5 | - | - | - |

or

| $N_{CS}^{PSFCH}$ | CS pair index 0 | CS pair index 1 | CS pair index 2 | CS pair index 3 | CS pair index 4 | CS pair index 5 |
|---|---|---|---|---|---|---|
| 1 | 3 | - | - | - | - | - |
| 2 | 1 | 4 | - | - | - | - |
| 3 | 1 | 3 | 5 | - | - | - |
| 4 | 2 | 5 | - | - | - | - |

$N_{CS}^{PSFCH}$ is a CS logarithm.

With reference to the fourth aspect or any implementation of the fourth aspect, in another possible implementation, a second resource set in the control resource set and the first resource set are configured independently, a resource in the second resource set is for control information transmission according to the second communication protocol, and the third resource belongs to the second resource set.

In the foregoing technical solution, the resource for control information transmission according to the second communication protocol and the resource for control information transmission according to the third communication protocol are distinguished in a frequency division multiplexing or code division multiplexing manner, so that control information transmission according to the second communication protocol can be ensured, a HARQ mechanism of the second communication protocol can work normally, and data transmission reliability is improved. Distinguishing is performed in the frequency division multiplexing manner or the code division multiplexing manner, so that a resource that is in a system and that is for control information transmission can be used to a maximum extent, thereby helping improve spectrum utilization efficiency.

With reference to the fourth aspect or any implementation of the fourth aspect, in another possible implementation, the control information includes at least one of the following: HARQ information, CSI feedback information, or resource conflict indication information.

For example, the second resource set is a set of resources for HARQ transmission according to the second communication protocol. The first resource set is a set of resources for HARQ transmission according to the third communication protocol. Optionally, the second resource set may be the first resource set. In this case, configuration signaling for the second resource set is signaling for configuring the first resource set. Optionally, the second resource set may be different from the first resource set. In this case, the second resource set is configured based on signaling. A configuration parameter for the second resource set is different from a configuration parameter for the first resource set.

For example, the second resource set is a set of resources for HARQ transmission according to the second communication protocol. The first resource set is a set of resources for HARQ transmission according to the third communication protocol. A third resource set is a set of resources for transmission of resource conflict indication information according to the third communication protocol. Optionally, the second resource set may be the first resource set. In this case, configuration signaling for the second resource set is signaling for configuring the first resource set. Optionally, the second resource set may be the third resource set. In this case, configuration signaling for the second resource set is signaling for configuring the third resource set. Optionally, the second resource set may be different from the first resource set and the third resource set. In this case, the second resource set is configured based on signaling. A configuration parameter for the second resource set is different from a configuration parameter for the first resource set and the third resource set.

According to a fifth aspect, a control information receiving method is provided. The method may be performed by a second terminal, or may be performed by a module or a unit used in the second terminal. For ease of description, the second terminal and the module or unit used in the second terminal are collectively referred to as the second terminal below.

The method includes: The second terminal determines a third resource from a control resource set. The second terminal receives control information on the third resource according to a second communication protocol. A first resource set in the control resource set is configured for control information transmission according to a third communication protocol, and the third resource is different from a resource in the first resource set.

Optionally, the second communication protocol is R18 NR-V, and the third communication protocol is R16 NR-V

Optionally, the second communication protocol is R18 NR-V, and the third communication protocol is R17 NR-V.

Optionally, the third communication protocol is the same as the second communication protocol. In this case, the first resource set is a set of resources configured for control information transmission according to the second communication protocol. For example, if a resource pool for the R18 NR-V includes two types of resources, one type of resource is a time-frequency resource dedicated to the R18 NR-V, and the other type of resource is a time-frequency resource jointly used in the R18 NR-V and the LTE-V, when the second terminal transmits, according to the R18 NR-V, data on the time-frequency resource jointly used in the R18 NR-V and the LTE-V, the second terminal may transmit, by using a remaining resource in the resource dedicated to the R18 NR-V, control information corresponding to the data. The remaining resource is a resource that is in the resource dedicated to the R18 NR-V, that is for control information transmission but that is not occupied. For another example, a resource set 1 is a time-frequency resource jointly used in the R18 NR-V and the LTE-V, and a resource set 2 is a time-frequency resource used in the R18 NR-V The resource set 2 includes a control resource set, control information corresponding to data in the resource set 1 may be transmitted on a remaining resource in the control resource set in the resource set 2.

A resource or a control resource included in the control resource set is available for control information transmission, or the control resource set is a resource set including resources that are available for control information transmission.

In the foregoing technical solution, the second terminal may transmit the control information according to the second communication protocol through a control resource that is in the control resource set and that is different from a resource for control information transmission according to the third communication protocol. In this way, according to the foregoing technical solution, the second terminal can transmit data according to the second communication protocol through a time-frequency resource jointly used in a first communication protocol, and transmit the control information according to the second communication protocol through the control resource that is different from the resource for control information transmission according to the third communication protocol. This helps avoid a resource conflict between transmission according to the first communication protocol and transmission according to the second communication protocol.

With reference to the fifth aspect, in a possible implementation, the third resource and the resource in the first resource set are multiplexed in a frequency division multiplexing manner and/or a code division multiplexing manner.

Optionally, the control resource set is a control resource set for the third communication protocol, that is, the control resource set is the first resource set. It may be understood as that a control resource set for the second communication protocol is the same as the control resource set for the third communication protocol. In this case, the third resource and the resource in the first resource set may be multiplexed in a frequency division multiplexing manner, a code division multiplexing manner, or both a frequency division multiplexing manner and a code division multiplexing manner. In this case, because a first terminal transmits the control information according to the second communication protocol through a resource that is in the control resource set for the third communication protocol and that is different from the resource for control information transmission according to the third communication protocol, spectrum utilization efficiency can be improved.

Optionally, the control resource set includes the first resource set and a second resource set. The first resource set is a control resource set for the third communication protocol, and the second resource set is a control resource set for the second communication protocol. The third resource belongs to the second resource set. A resource in the second resource set and the resource in the first resource set are multiplexed in a frequency division multiplexing manner. In other words, the second resource set and the first resource set have no intersection in frequency domain.

For example, the first resource set includes a PRB 0, a PRB 1, and a PRB 2, and the second resource set includes a PRB 5, a PRB 6, and a PRB 7.

Optionally, the control resource set includes the first resource set and a second resource set. The first resource set is a control resource set for the third communication protocol, and the second resource set is a control resource set for the second communication protocol. The third resource belongs to the second resource set. A resource in the second resource set and the resource in the first resource set are multiplexed in a frequency division multiplexing manner, or a resource in the second resource set and the resource in the first resource set are the same in frequency domain but different in code domain.

For example, the first resource set includes a PRB 0, a PRB 1, and a PRB 2, and the second resource set includes a PRB 2, a PRB 3, and a PRB 4. In this way, the PRB 2 is available for transmission of both the control information according to the second communication protocol and the control information according to the third communication protocol. For differentiation, in this case, the PRB 2 for the second communication protocol and the PRB 2 for the third communication protocol may be multiplexed in a code division multiplexing manner. The PRB 0 and the PRB 1 in the second resource set and the resource in the second resource set are multiplexed in a frequency division multiplexing manner.

With reference to the fifth aspect or any implementation of the fifth aspect, in another possible implementation, the method further includes: The second terminal sends data on a fourth resource. That the second terminal determines a third resource from a control resource set includes: The second terminal determines a time domain resource of the third resource based on the fourth resource and a first mapping relationship. The first mapping relationship includes a mapping relationship between a first physical slot and a second physical slot, the first physical slot is a last physical slot (namely, a physical slot in which an end location of the fourth resource is located) included in the fourth resource, the second physical slot is a $1^{st}$ physical slot that includes a control resource and that meets a first time interval with the first physical slot, and the second physical slot is after the first physical slot. The first time interval may be in a unit of a physical slot.

Optionally, the fourth resource belongs to a time-frequency resource set jointly used by transmission according to the first communication protocol.

The physical slot is used herein because a mapping relationship from a PSSCH to a PSFCH in the third communication protocol is determined based on a logical slot in a resource pool for the third communication protocol. The resource pool for the second communication protocol also has an index of a logical slot in the resource pool. As a result, the index of the logical slot in the resource pool for the second communication protocol and an index of the logical slot in the resource pool for the third communication protocol cannot be directly associated with each other. However, both the resource pool for the second communication protocol and the resource pool for the third communication protocol have a mapping relationship with the physical slot. Therefore, a mapping relationship from a PSSCH resource in the resource pool for the second communication protocol to a PSFCH resource in the resource pool for the third communication protocol may be determined based on the physical slot.

With reference to the fifth aspect or any implementation of the fifth aspect, in another possible implementation, the first time interval is preconfigured or predefined, or is configured by a base station.

Optionally, a value range of the first time interval may be 2 or 3.

With reference to the fifth aspect or any implementation of the fifth aspect, in another possible implementation, the method further includes: The second terminal sends data on a fourth resource. That the second terminal determines a third resource from a control resource set includes: The second terminal determines a frequency domain resource of the third resource based on the fourth resource and a second mapping relationship, where the second mapping relationship includes a mapping relationship between a frequency domain resource of the fourth resource and the frequency domain resource of the third resource.

With reference to the fifth aspect or any implementation of the fifth aspect, in another possible implementation, the third resource and the resource in the first resource set are multiplexed in a frequency division multiplexing manner. Optionally, the resource in the second resource set and the resource in the first resource set are multiplexed in a frequency division multiplexing manner. Optionally, some of resources in the second resource set are the same as or different from resources in the first resource set, and the third resource is a resource that is multiplexed with the resource in the first resource set in a frequency division multiplexing manner. In this case, that the second terminal determines a third resource from a control resource set includes: The second terminal determines a code domain resource of the third resource based on a first CS pair table, where the first CS pair table is a CS pair table for the third communication protocol.

In the foregoing technical solution, the third resource and the resource for control information transmission according to the third communication protocol are multiplexed in a frequency division multiplexing manner. Therefore, a receiving and sending conflict does not occur between transmission according to the second communication protocol and transmission according to the third communication protocol, and transmission according to the second communication protocol may support HARQ feedback to improve data transmission reliability, in addition, reliability of transmission of a HARQ according to the third communication protocol and transmission of corresponding data according to the third communication protocol is not affected. In this case, resources for transmission according to the second communication protocol and transmission according to the third communication protocol have been distinguished from each other in frequency domain. Therefore, the CS pair table for the third communication protocol may be reused as a CS pair table for the second communication protocol.

With reference to the fifth aspect or any implementation of the fifth aspect, in another possible implementation, that the second terminal determines a third resource from a control resource set includes: The second terminal determines a code domain resource of the third resource based on a second CS pair table, where the second CS pair table is different from the first CS pair table for the third communication protocol.

In the foregoing technical solution, the second terminal may determine the code domain resource of the third resource based on a CS table different from the CS pair table for the third communication protocol, so as to implement code division multiplexing between the third resource and a control resource for the third communication protocol. This helps avoid a resource conflict between control information transmission according to the second communication protocol and control information transmission according to the third communication protocol, and further helps improve transmission reliability. In this case, the third resource may be multiplexed in a frequency division multiplexing manner with the resource for control information transmission according to the third communication protocol, or may not be multiplexed in a frequency division multiplexing manner.

With reference to the fifth aspect or any implementation of the fifth aspect, in another possible implementation, that the second terminal determines a third resource from a control resource set includes: When the second terminal determines that the third resource and the resource in the first resource set are multiplexed in a frequency division multiplexing manner, the second terminal determines a code domain resource of the third resource based on a first CS pair table; or when the second terminal determines that the third resource and the resource in the first resource set are multiplexed in a code division multiplexing manner, the second terminal determines a code domain resource of the third resource based on a second CS pair table, where the second CS pair table is different from a first CS pair table for the third communication protocol. In this case, some of resources in the second resource set for the second communication protocol are multiplexed with resources in the first resource set for the third communication protocol in a frequency division multiplexing manner, and some of the resources are multiplexed in a code division multiplexing manner instead of a frequency division multiplexing manner.

In the foregoing technical solution, the second terminal may flexibly select a CS pair table based on a frequency domain resource of a second resource, to implement frequency division multiplexing or code division multiplexing between the third resource and the resource for control information transmission according to the third communication protocol. This helps avoid a resource conflict between control information transmission according to the second communication protocol and control information transmission according to the third communication protocol, and avoid affecting transmission reliability.

With reference to the fifth aspect or any implementation of the fifth aspect, in another possible implementation, a maximum quantity of CS logarithms for the second communication protocol is W. W may be configured based on RRC (configured by a network device based on an RRC parameter), predefined, or preconfigured. For example, W is 6 or 3.

A CS pair for the second communication protocol includes at least one of the following cases:

(1) The CS logarithm is 1: A first CS pair is used for the third communication protocol, and the first CS pair indicates a value 1 and a value 2 (the value 2 is a CS value paired with the value 1). A second CS pair is used for the second communication protocol, and the second CS pair indicates a value 3 and a value 4 (the value 4 is a CS value paired with the value 3). The value 1 and the value 3 are different.

For example, the CS pair is (A, B), where an index of the CS pair may indicate only A, and B is a CS value paired with A.

For example, when the value 1 is 0, and the value 3 may be any one of 2, 3, 4, and 5. For example, the first CS pair is (0, 6), the value 1 is 0, and the value 2 is 6; and the second CS pair is (3, 9), that is, the value 3 is 3, and the value 4 is 9. In this case, orthogonality between the first CS pair and the second CS pair is the best, and interference between transmission according to the second communication protocol and transmission according to the third communication protocol is small.

For another example, the first CS pair is (0, 6), and the second CS pair is (2, 8). For another example, the first CS pair is (0, 6), and the first CS pair is (4, 10). For another example, the first CS pair is (0, 6), and the first CS pair is (5, 11). In this case, specific orthogonality still exists between the first CS pair and the second CS pair, and interference between transmission according to the second communication protocol and transmission according to the third communication protocol is reduced as much as possible.

(2) The CS logarithm is 2: A first CS pair is used for the third communication protocol, and the first CS pair indicates a value 5 (a value of a corresponding paired CS is 6) and a value 7 (a value of a corresponding paired CS is 8). A second CS pair is used for the second communication protocol, and the second CS pair indicates a value 9 (a value of a corresponding paired CS is 10) and a value 11 (a value of a corresponding paired CS is 12). The values 5 and 7 are different from the values 9 and 11.

For example, the first CS pair is (0, 6) and (3, 9), and the second CS pair is any two of (1, 7), (2, 8), (4, 10), and (5, 11). For example, the first CS pair is (0, 6) and (3, 9), and the second CS pair is (1, 7) and (2, 8). Alternatively, the first CS pair is (0, 6) and (3, 9), and the second CS pair is (2, 8) and (4, 10). Alternatively, the first CS pair is (0, 6) and (3, 9), and the second CS pair is (4, 10) and (5, 11). Alternatively, the first CS pair is (0, 6) and (3, 9), and the second CS pair is (2, 8) and (5, 11). Alternatively, the first CS pair is (0, 6) and (3, 9), and the second CS pair is (1, 7) and (5, 11). Alternatively, the first CS pair is (0, 6) and (3, 9), and the second CS pair is (1, 7) and (4, 10). In this case, specific orthogonality still exists between the first CS pair and the second CS pair, and interference between transmission according to the second communication protocol and transmission according to the third communication protocol is reduced as much as possible.

(3) The CS logarithm is 3: A first CS pair is used for the third communication protocol, and the first CS pair indicates a value 12 (a value of a corresponding paired CS is 13), a value 14 (a value of a corresponding paired CS is 15), and a value 16 (a value of a corresponding paired CS is 17). A second CS pair is used for the second communication protocol, and the second CS pair indicates a value 17 (a value of a corresponding paired CS is 18), a value 19 (a value of a corresponding paired CS is 20), and a value 21 (a value of a corresponding paired CS is 22). The values 12, 14, and 16 are different from the values 17, 19, and 21.

For example, the first CS pair is (0, 6), (2, 8), and (4, 10), and the second CS pair is (1, 7), (3, 9), and (5, 11). In this case, specific orthogonality still exists between the first CS pair and the second CS pair, and interference between transmission according to the second communication protocol and transmission according to the third communication protocol is reduced as much as possible.

Optionally, the CS pair may be configured based on RRC, predefined, or preconfigured.

With reference to the fifth aspect or any implementation of the fifth aspect, in another possible implementation, a CS pair corresponding to a first CS logarithm in the second CS pair table is different from a CS pair corresponding to a first CS logarithm in the first CS pair table.

It may be understood as that an index of a same CS logarithm corresponds to different CS pairs in two CS pair tables.

With reference to the fifth aspect or any implementation of the fifth aspect, in another possible implementation, the second CS pair table includes at least one entry in the following tables. For example, the second CS pair table includes at least one row in the following tables:

| $N_{CS}^{PSFCH}$ | CS pair index 0 | CS pair index 1 | CS pair index 2 | CS pair index 3 | CS pair index 4 | CS pair index 5 |
|---|---|---|---|---|---|---|
| 1 | 3 | - | - | - | - | - |
| 2 | 1 | 4 | - | - | - | - |
| 3 | 1 | 3 | 5 | - | - | - |

or

| $N_{CS}^{PSFCH}$ | CS pair index 0 | CS pair index 1 | CS pair index 2 | CS pair index 3 | CS pair index 4 | CS pair index 5 |
|---|---|---|---|---|---|---|
| 1 | 3 | - | - | - | - | - |
| 2 | 2 | 5 | - | - | - | - |
| 3 | 1 | 3 | 5 | - | - | - |

or

| $N_{CS}^{PSFCH}$ | CS pair index 0 | CS pair index 1 | CS pair index 2 | CS pair index 3 | CS pair index 4 | CS pair index 5 |
|---|---|---|---|---|---|---|
| 1 | 3 | - | - | - | - | - |
| 2 | 1 | 4 | - | - | - | - |
| 3 | 1 | 3 | 5 | - | - | - |
| 4 | 2 | 5 | - | - | - | - |

$N_{CS}^{PSFCH}$ is a CS logarithm.

With reference to the fifth aspect or any implementation of the fifth aspect, in another possible implementation, a second resource set and the first resource set are configured independently, a resource in the second resource set is for control information transmission according to the second communication protocol, and the third resource belongs to the second resource set.

In the foregoing technical solution, the resource for control information transmission according to the second communication protocol and the resource for control information transmission according to the third communication protocol are distinguished in a frequency division multiplexing or code division multiplexing manner, so that control information transmission according to the second communication protocol can be ensured, a HARQ mechanism of the second communication protocol can work normally, and data transmission reliability is improved. Distinguishing is performed in the frequency division multiplexing manner or the code division multiplexing manner, so that a resource that is in a system and that is for control information transmission can be used to a maximum extent, thereby helping improve spectrum utilization efficiency.

With reference to the fifth aspect or any implementation of the fifth aspect, in another possible implementation, the control information includes at least one of the following: HARQ information, CSI feedback information, or resource conflict indication information.

For example, the second resource set is a set of resources for HARQ transmission according to the second communication protocol. The first resource set is a set of resources for HARQ transmission according to the third communication protocol. Optionally, the second resource set may be the first resource set. In this case, configuration signaling for the second resource set is signaling for configuring the first resource set. Optionally, the second resource set may be different from the first resource set. In this case, the second resource set is configured based on signaling. A configuration parameter for the second resource set is different from a configuration parameter for the first resource set.

For example, the second resource set is a set of resources for HARQ transmission according to the second communication protocol. The first resource set is a set of resources for HARQ transmission according to the third communication protocol. A third resource set is a set of resources for transmission of resource conflict indication information according to the third communication protocol. Optionally, the second resource set may be the first resource set. In this case, configuration signaling for the second resource set is signaling for configuring the first resource set. Optionally, the second resource set may be the third resource set. In this case, configuration signaling for the second resource set is signaling for configuring the third resource set. Optionally, the second resource set may be different from the first resource set and the third resource set. In this case, the second resource set is configured based on signaling. A configuration parameter for the second resource set is different from a configuration parameter for the first resource set and the third resource set.

According to a sixth aspect, a communication apparatus is provided. The apparatus is configured to perform the method according to any one of the foregoing aspects or the implementations of the foregoing aspects. Specifically, the apparatus may include units and/or modules configured to perform the method according to any one of the foregoing aspects or the implementations of the foregoing aspects, for example, a processing unit and/or a communication unit.

In an implementation, the apparatus is a first terminal or a second terminal. When the apparatus is the first terminal or the second terminal, the communication unit may be a transceiver or an input/output interface, and the processing unit may be at least one processor. Optionally, the transceiver is a transceiver circuit. Optionally, the input/output interface is an input/output circuit.

In another implementation, the apparatus is a chip, a chip system, or a circuit used in a first terminal or a second terminal. When the apparatus is the chip, the chip system, or the circuit used in the first terminal or the second terminal, the communication unit may be an input/output interface, an interface circuit, an output circuit, an input circuit, a pin, a related circuit, or the like on the chip, the chip system, or the circuit. The processing unit may be at least one processor, processing circuit, logic circuit, or the like.

According to a seventh aspect, a communication apparatus is provided. The apparatus includes: a memory, configured to store a program; and at least one processor, configured to execute a computer program or instructions stored in the memory, to perform the method according to any one of the foregoing aspects or the implementations of the foregoing aspects.

In an implementation, the apparatus is a first terminal or a second terminal.

In another implementation, the apparatus is a chip, a chip system, or a circuit used in a first terminal or a second terminal.

According to an eighth aspect, a processor is provided, configured to perform the methods according to the foregoing aspects.

Operations such as sending and obtaining/receiving related to the processor may be understood as operations such as outputting and receiving or inputting of the processor, or operations such as sending and receiving performed by a radio frequency circuit and an antenna, unless otherwise specified, or provided that the operations do not contradict actual functions or internal logic of the operations in related descriptions. This is not limited in this application.

According to a ninth aspect, a computer-readable storage medium is provided. The computer-readable medium stores program code to be executed by a device, and the program code is for performing the method according to any one of the foregoing aspects or the implementations of the foregoing aspects.

According to a tenth aspect, a computer program product including instructions is provided. When the computer program product runs on a computer, the computer is enabled to perform the method according to any one of the foregoing aspects or the implementations of the foregoing aspects.

According to an eleventh aspect, a chip is provided. The chip includes a processor and a communication interface. The processor reads, through the communication interface, instructions stored in a memory, to perform the method according to any one of the foregoing aspects or the implementations of the foregoing aspects.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any one of the foregoing aspects or the implementations of the foregoing aspects.

According to a twelfth aspect, a communication system is provided, including the first terminal and/or the second terminal described above.

**BRIEF DESCRIPTION OF DRAWINGS**

FIG. 1 is a diagram of a V2X system to which a technical solution of this application can be applied;
FIG. 2 is a diagram of a PSFCH resource;
FIG. 3 are diagrams of structures of slots for NR-V2X;
FIG. 4 shows an example (1) of a mapping relationship between a PSSCH resource and a PSFCH resource;
FIG. 5 shows an example (2) of a mapping relationship between a PSSCH resource and a PSFCH resource;
FIG. 6 shows an example of a manner of determining a single candidate resource;
FIG. 7 shows an example of a physical slot and a logical slot;
FIG. 8 is a timing diagram of resource selection;
FIG. 9 is a diagram of an internal module structure of a terminal of R18 NR-V;
FIG. 10 is a diagram of a control information sending method 1000 according to this application;
FIG. 11 shows an example of a reserved resource indicated by SCI;
FIG. 12 shows an example of a slot in which a first resource is located;
FIG. 13 shows an example of a single PSFCH candidate resource;
FIG. 14 is a diagram of a data sending method 1300 according to this application;
FIG. 15 is a diagram of a control information receiving method 1400 according to this application;

FIG. 16 shows an example in which a first resource pool and a second resource pool share a spectrum in a time division multiplexing manner;

FIG. 17 shows an example of a mapping relationship between a PSSCH resource and a PSFCH resource;

FIG. 18 is a diagram of a control information sending method 1700 according to this application;

FIG. 19 shows an example of a mapping relationship between a PSSCH resource and a PSFCH resource;

FIG. 20 shows examples of a frequency domain resource and a code domain resource that correspond to a subchannel;

FIG. 21 is a diagram of a control information receiving method 2000 according to this application;

FIG. 22 is a diagram of a structure of an apparatus according to an embodiment of this application; and

FIG. 23 is a diagram of another structure of an apparatus according to an embodiment of this application.

DESCRIPTION OF EMBODIMENTS

The following describes technical solutions in embodiments of this application with reference to accompanying drawings.

The technical solutions of this application may be applied to various terminal-to-terminal communication scenarios, for example, a device to device (device to device, D2D) scenario, a vehicle to everything (vehicle to everything, V2X) scenario, and a machine type communication (machine type communication, MTC)/machine to machine (machine to machine, M2M) scenario.

A terminal in this application may be a device that has a wireless transceiver function and that can provide a communication service for a user. Specifically, the terminal may be a device in a V2X system, a device in a D2D system, a device in an MTC system, or the like. For example, the terminal may be an industrial robot, an industrial automation device, user equipment (user equipment, UE), an access terminal, a subscriber unit, a subscriber station, a mobile station, a mobile console, a remote station, a remote terminal, a mobile device, a user terminal, a wireless terminal, a mobile terminal, customer premises equipment (customer premise equipment, CPE), a vehicle-mounted terminal, a user agent, a user apparatus, a terminal in virtual reality, a terminal in augmented reality, a terminal in telemedicine, a terminal in a smart grid, a terminal in smart furniture, a terminal in smart office, a terminal in smart wearables, a terminal in intelligent transportation, or a terminal in a smart city. For another example, the terminal may be a cellular phone, a cordless phone, a session start protocol (session initiation protocol, SIP) phone, a wireless local loop (wireless local loop, WLL) station, a personal digital processing (personal digital assistant, PDA) station, a handheld device having a wireless communication function, a computing device, another processing device connected to a wireless modem, a vehicle-mounted device, a wearable device, a terminal in a 5th generation (5th generation, 5G) network or a network later than 5G, or a terminal in a future evolved communication network.

A specific technology and a specific device form that are used by the terminal are not limited in embodiments of this application.

The following describes the technical solutions of this application by using the V2X scenario as an example.

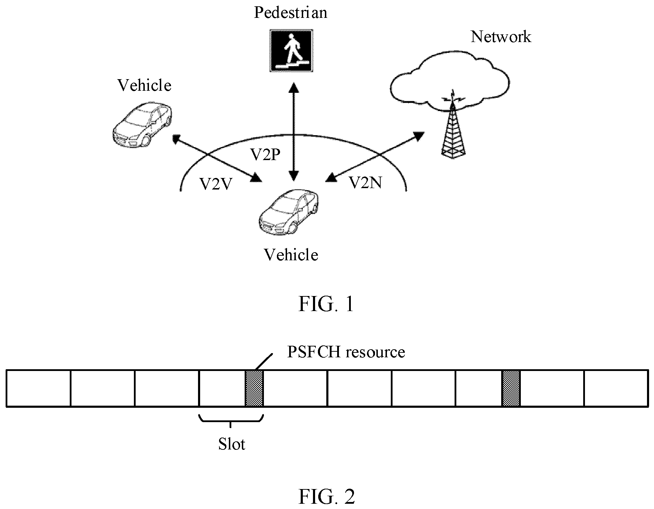

FIG. 1 is a diagram of a V2X system to which a technical solution of this application can be applied.

As shown in FIG. 1, the system may include a plurality of vehicles, a network, and the like. Vehicle to vehicle (vehicle to vehicle, V2V) is vehicle-to-vehicle communication, vehicle to pedestrian (vehicle to pedestrian, V2P) is vehicle-to-pedestrian communication, and vehicle to network (vehicle to network, V2N) is vehicle-to-network communication. Inter-device communication may be performed between vehicles through a communication resource pool configured by an infrastructure or a network. A connection between the vehicle and an access network device is an uplink and a downlink, and a connection between vehicles is a sidelink.

It should be understood that FIG. 1 is merely a diagram and does not constitute any limitation on the protection scope of this application. For example, a quantity of vehicles shown in FIG. 1 is merely an example.

It should be noted that the scenarios described in this application are intended to describe the technical solutions of this application more clearly, and do not constitute a limitation on the technical solutions of this application. A person of ordinary skill in the art may learn that, with emergence of a new service scenario, the technical solutions provided in embodiments of this application are also applicable to a similar technical problem.

For ease of understanding, the following describes nouns, terms, or technologies in this application.

1. HARQ technology

In a wireless communication system, a hybrid automatic repeat request (hybrid automatic repeat request, HARQ) technology is usually used to ensure correctness of data transmission between a receiving party and a sending party. In the HARQ technology, forward error correction (forward error correction, FEC) and an automatic repeat request (automatic repeat request, ARQ) are combined. After a data block (generally referred to as a transport block (transport block, TB)) is encoded, information bits and some redundant bits are sent during first transmission. If a receive end can correctly perform decoding, the receive end feeds back an acknowledgement (acknowledgement, ACK) signal to a transmitting end. After receiving the ACK signal, the transmitting end acknowledges that the receive end has successfully received a corresponding information bit, and considers that the data block has been successfully transmitted. If a receive end cannot correctly perform decoding, the receive end feeds back a negative acknowledgement (negative acknowledgement, NACK) signal to a transmitting end. After receiving the NACK signal, the transmitting end further transmits some information bits and/or redundant bits (referred to as retransmitted data) to the receive end. After receiving the retransmitted data, the receive end combines the retransmitted data with previously received data and performs decoding. If the receive end still cannot correctly perform decoding after combining the retransmitted data, retransmission may be performed again. As a quantity of retransmissions increases, information bits and/or redundant bits continuously accumulate, and a channel coding rate continuously decreases, so that decoding effect can be continuously improved.

2. PSFCH

LTE V2X supports broadcast. To be specific, a sending terminal sends data, and there is no restriction on a receiving terminal. In view of this, unicast and multicast are introduced in NR V2X. The unicast means that a pair of terminals communicate with each other. The multicast means that a sending terminal sends data and a limited quantity of terminals in a group receive the data.

The unicast and the multicast support HARQ feedback. The unicast and the multicast support an ACK/NACK feedback manner. To be specific, if successfully receiving data, a receiving terminal feeds back an ACK; or if failing to receive data, a receiving terminal feeds back a NACK. In addition, the multicast further supports a NACK only feedback manner. To be specific, a plurality of receiving terminals feed back only NACKs on a same control resource, that is, the receiving terminals feed back NACKs if the receiving terminals fail to receive data, and do not send any feedback signal if the receiving terminals successfully receive data.

HARQ information of the unicast and multicast is carried on a feedback channel, and the feedback channel is a physical sidelink feedback channel (physical sidelink feedback channel, PSFCH).

3. Resource pool

A resource pool is a time-frequency resource set. For example, the resource pool is a set of time-frequency resources that are on a sidelink and that are used by a terminal to transmit or receive a physical sidelink shared channel (physical sidelink shared channel, PSSCH). One or more resource pools may be configured for the terminal.

The resource pool may be replaced with the time-frequency resource set. For ease of description, the resource pool and the time-frequency resource set are collectively referred to as the resource pool.

4. Configuration periodicity of a PSFCH resource

A PSFCH resource is periodically configured for a resource pool. A configuration periodicity of the PSFCH resource is N slots. For example, N is 0, 1, 2, or 4. N=0 indicates that there is no HARQ feedback resource, that is, HARQ feedback is disabled. N=1, 2, or 4 indicates that there is one PSFCH resource in every one, two, or four slots.

FIG. 2 is a diagram of a PSFCH resource. In FIG. 2, N=4 is used as an example. In a resource pool, one of every four slots includes a PSFCH resource.

5. Structure of a slot for NR-V2X

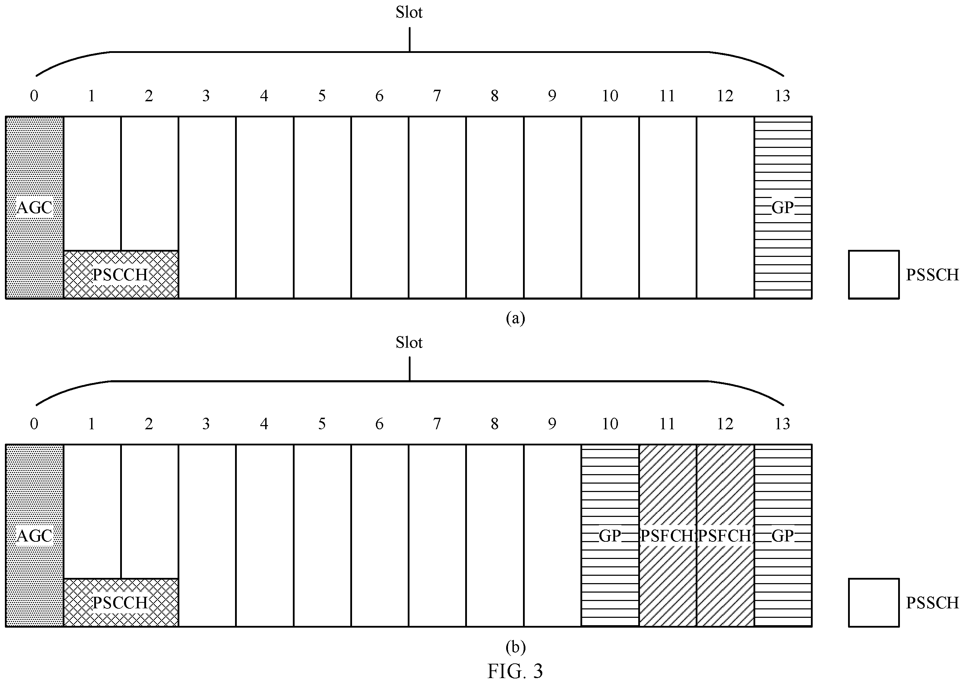

FIG. 3 are diagrams of structures of slots for NR-V2X.

In a normal cyclic prefix (normal cyclic prefix, NCP), one slot includes 14 symbols.

A structure of a slot that does not include a PSFCH resource is shown in (a) of FIG. 3. A 1st symbol (a symbol 0 in (a) of FIG. 3) in each slot is for automatic gain control (automatic gain control, AGC). A quantity of symbols for carrying a PSCCH in each slot is configured in each resource pool, and may be two or three symbols (symbols 1 and 2 in (a) of FIG. 3). The PSCCH carries first-level sidelink control information (sidelink control information, SCI). A last symbol in each slot is a guard period (guard period, GP). Remaining symbols in the slot may be for sending data and second-level SCI.

A structure of a slot including a PSFCH resource is shown in (b) of FIG. 3. In (b) of FIG. 3, an example in which a 12th symbol and a 13th symbol in the slot are for carrying PSFCHs is used. A 1st symbol (for example, a symbol 0 in (b) of FIG. 3) in each slot is for AGC. A quantity of symbols for carrying a PSCCH in each slot is configured in each resource pool, and may be two or three symbols (symbols 1 and 2 in (a) of FIG. 3). The PSCCH carries first-level SCI. A last symbol and an 11th symbol (symbols 10 and 13 in (b) of FIG. 3) in each slot are GPs. Remaining symbols in the slot may be for sending data and second-level SCI.

6. Determine a PSFCH resource for R16 NR-V

(1) Timing of HARQ feedback, that is, determining of a time domain resource of the PSFCH resource

For NR-V2X, the timing of HARQ feedback is a time interval from a PSSCH to a PSFCH. It is assumed that an end location of a PSSCH transmission is in a slot n. A corresponding slot for performing HARQ feedback is a 1st slot that has a PSFCH resource and that is in slots including a slot n+k and a slot after the slot n+k. k reflects a processing capability of a terminal. For example, k may be 2 or 3.

(2) Determining of a frequency domain resource and a code domain resource of the PSFCH resource

In a configured resource pool, a frequency domain resource and a code domain resource of a PSFCH are determined according to an implicit association rule.

A PRB set in the resource pool is provided for a terminal, a quantity of PRBs in the PRB set is $M_{PRB,set}^{PSFCH}$, and the terminal transmits the PSFCH on a PRB in the PRB set. A quantity of subchannels in the resource pool is denoted as $N_{subch}$, and a quantity of PSSCH slots associated with PSFCH slots is $N_{PSSCH}^{PSFCH}$. The terminal allocates

$$\left[\left(i + j \cdot N_{PSSCH}^{PSFCH}\right) \cdot M_{subch,slot}^{PSFCH}, \left(i + 1 + j \cdot N_{PSSCH}^{PSFCH}\right) \cdot M_{subch,slot}^{PSFCH} - 1\right]$$ PRBs from the $M_{PRB,set}^{PSFCH}$ PRBs to a slot i and a subchannel j. $M_{subch,slot}^{PSFCH} = M_{PRB,set}^{PSFCH} / \left(N_{subch} \cdot N_{PSSCH}^{PSFCH}\right)$, $0 \le i < N_{PSSCH}^{PSFCH}$, and $0 \le j < N_{subch}$. The allocation starts from an ascending order of i, and after traversal on i ends, traversal continues to be performed in ascending order of j. The terminal expects $M_{PRB,set}^{PSFCH}$ to be a multiple of $N_{subch} \cdot N_{PSSCH}^{PSFCH}$.

The terminal determines, according to a formula $R_{PRB,CS}^{PSFCH} = N_{type}^{PSFCH} \cdot M_{subch,slot}^{PSFCH} \cdot N_{CS}^{PSFCH}$, a quantity of resources that are available for PSFCH transmission. $N_{CS}^{PSFCH}$ is a cyclic shift (cyclic shift, CS) logarithm of the resource pool. If $N_{type}^{PSFCH} = 1$, the $M_{subch,slot}^{PSFCH}$ PRBs are associated with corresponding start subchannels of a PSSCH. If $N_{type}^{PSFCH} = N_{subch}^{PSSCH}$, the $N_{subch}^{PSSCH} \cdot M_{subch,slot}^{PSFCH}$ PRBs are associated with corresponding one or $N_{subch}^{PSSCH}$ subchannels of a PSSCH. $N_{type}^{PSFCH} = 1$ or $N_{type}^{PSFCH} = N_{subch}^{PSSCH}$ are configured in the resource pool.

The PSFCH resources are first sorted in ascending order among $N_{type}^{PSFCH} \cdot M_{subch,slot}^{PSFCH}$ PRBs according to indexes of the PRBs, and then sorted in ascending order among $N_{CS}^{PSFCH}$ CS pairs according to indexes of the CS pairs.

The terminal determines an index of a PSFCH resource according to $\left(P_{ID} + M_{ID}\right) \bmod R_{PRB,CS}^{PSFCH}$, where $P_{ID}$ is a physical layer source identifier (identity, ID) provided in second-level SCI, and $M_{ID}$ is 0 or an identifier indicated by a higher layer of a terminal that receives the PSSCH.

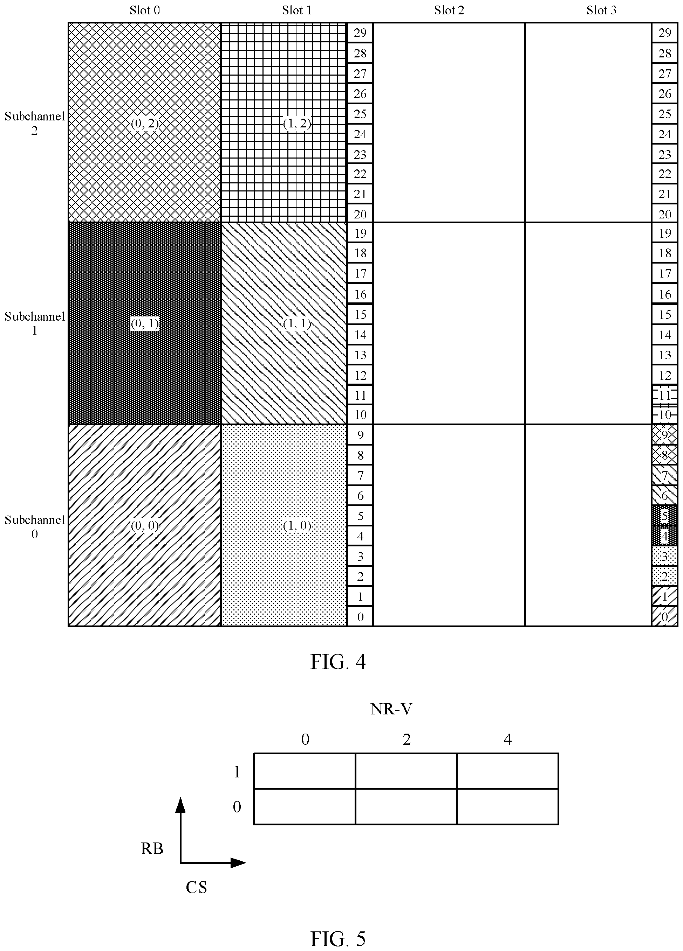

FIG. 4 and FIG. 5 show examples of mapping relationships between a PSSCH resource and a PSFCH resource.

It is assumed that, as shown in FIG. 4, N is 2 (that is, one of every two slots includes a PSFCH resource), k is 2, a quantity of PSSCH slots corresponding to a slot 3 including a PSFCH resource is 2 (namely, $N_{PSSCH}^{PSFCH} = 2$), a quantity of subchannels is 3 (namely, $N_{subch}$=3), the subchannel includes 10 PRBs, there are 30 PRBs available for HARQ information transmission, and a quantity of PRBs for HARQ information transmission is 12 (namely, $M_{PRB,set}^{PSFCH}=12$). In this way, each subchannel may correspond to two resource blocks (physical resource blocks, PRBs). For example, a subchannel (0, 0) corresponds to a subchannel index 0 and a slot index 0.

It is assumed that a configuration of a CS logarithm is 3 (namely, $N_{CS}^{PSFCH}=3$). A frequency domain resource and a code domain resource that correspond to the subchannel (0, 0) are shown in FIG. 5, that is, one subchannel corresponds to six resources that are available for the HARQ information transmission.

8. Single candidate resource

A single candidate resource $R_{x,y}$ is defined as $L_{subch}$ consecutive subchannels in a slot $t_y'^{SL}$, where a number of a subchannel is x+j, and j = 0, ..., $L_{subch}$ -1. In a resource selection window, any $L_{subch}$ consecutive subchannels included in a resource pool are a single candidate resource.

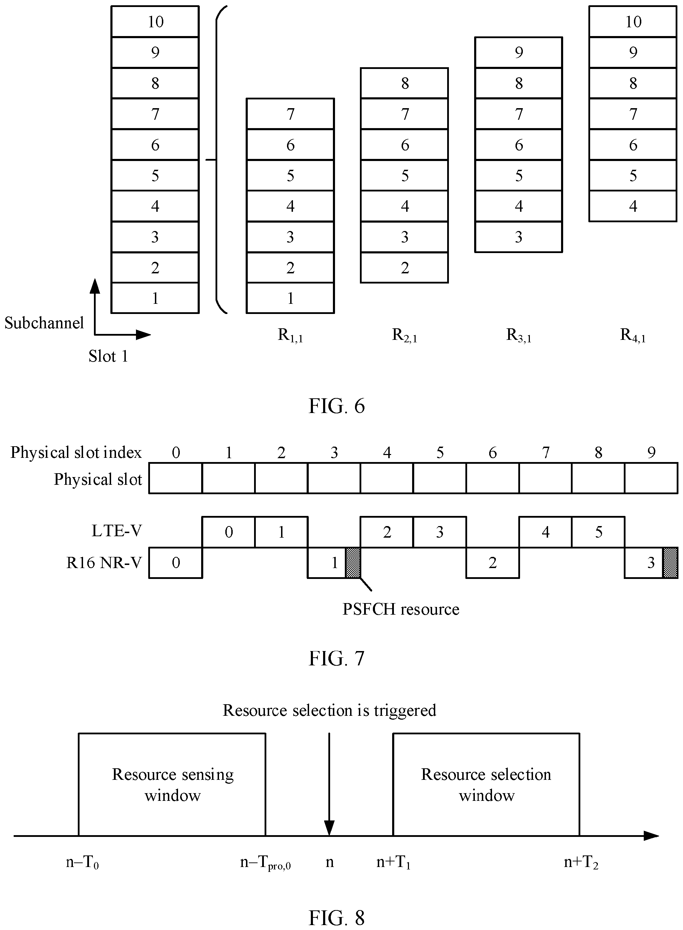

FIG. 6 shows an example of a manner of determining a single candidate resource.

It is assumed that a slot set of a resource pool is defined as $(t_0'^{SL}, t_1'^{SL}, t_2'^{SL}, ...)$, a frequency domain resource of the resource pool includes 10 subchannels (for example, a subchannel 1 to a subchannel 10 in FIG. 6), a resource selection window includes a slot 1 (namely, $t_1'^{SL}$), and $L_{subch}$ =7. In this way, the slot 1 includes four single candidate resources: $R_{1,1}$, $R_{2,1}$, $R_{3,1}$, and $R_{4,1}$.

9. Physical slot and logical slot

An example is used to explain a physical slot and a logical slot.
FIG. 7 shows an example of a physical slot and a logical slot. In FIG. 7, an example in which LTE-V and R16 NR-V share a spectrum in a time division multiplexing (time division multiplexing, TDM) manner is used. The LTE-V corresponds to physical slots 1, 2, 4, 5, 7, and 8, and the R16 NR-V corresponds to physical slots 0, 3, 6, and 9. For the LTE-V, the physical slots 1, 2, 4, 5, 7, and 8 are equivalent to logical slots 0, 1, 2, 3, 4, and 5 of the LTE-V Herein, 0, 1, 2, 3, 4, and 5 are indexes of the logical slots. For the R16 NR-V, the physical slots 0, 3, 6, and 9 are equivalent to logical slots 0, 1, 2, and 3 of the R16 NR-V Herein, 0, 1, 2, and 3 are indexes of the logical slots.

10. Select a resource for PSSCH transmission

FIG. 8 is a timing diagram of resource selection.

It is assumed that a slot set of a resource pool is defined as $(t_0'^{SL}, t_1'^{SL}, t_2'^{SL}, ...)$.
Step 1: A terminal determines a resource selection window [n + $T_1$, n + $T_2$].
n is a moment at which resource selection is triggered.

A value of $T_1$ depends on an implementation of the terminal, but $T_1$ needs to satisfy: $0 \leq T_1 \leq T_{proc,1}^{SL}$. A value of $T_{proc,1}^{SL}$ is related to a subcarrier spacing. For example, the value of $T_{proc,1}^{SL}$ may be determined according to Table 1. Table 1 shows values of $T_{proc,1}^{SL}$ in different subcarrier spacings.

**Table 1**

| $\mu_{SL}$ Subcarrier spacing | $T_{proc,1}^{SL}$ [Unit: slot] |
|---|---|
| 0 | 3 |
| 1 | 5 |
| 2 | 9 |

(continued)

| $\mu_{SL}$ Subcarrier spacing | $T_{proc,1}^{SL}$ [Unit: slot] |
|---|---|
| 3 | 17 |

A value of $T_2$ is related to a minimum value of $T_2$ and a remaining packet delay budget (packet delay budget, PDB). For example, if a value of $T_{2min}$ is less than the PDB, the value of $T_2$ depends on the implementation of the terminal, but $T_2$ needs to satisfy: $T_{2min} \leq T_2 \leq PDB$; or if a value of $T_{2min}$ is greater than the PDB, the value of $T_2$ is the PDB, where $T_{2min}$ is the minimum value of $T_2$, and the PDB uses a slot as a unit.

In the resource selection window $[n+T_1, n+T_2]$, a total quantity of single candidate resources in the resource pool is denoted as $M_{total}$. For example, as shown in FIG. 6, there are four single candidate resources corresponding to one slot. If the resource selection window $[n+T_1, n+T_2]$ includes five slots, a quantity of single candidate resources is 20, that is, $M_{total} = 20$.

For descriptions of the single candidate resource, refer to the foregoing descriptions. Details are not described herein again.

Step 2: The terminal determines a resource sensing window $[n-T_0, n-T_{proc,o}^{SL}]$.

n is a moment at which resource selection is triggered.

$T_0$ is a quantity of slots corresponding to the resource sensing window $[n-T_0, n-T_{proc,o}^{SL}]$.

A value of $T_{proc,o}^{SL}$ is related to a subcarrier spacing. For example, the value of $T_{proc,o}^{SL}$ may be determined according to Table 2. Table 2 shows values of $T_{proc,o}^{SL}$ in different subcarrier spacings.

**Table 2**

| $\mu_{SL}$ Subcarrier spacing | $T_{proc,1}^{SL}$ [Unit: slot] |
|---|---|
| 0 | 1 |
| 1 | 1 |
| 2 | 2 |
| 3 | 4 |

Step 3: The terminal obtains a sensing result in the resource sensing window $[n-T_0, n-T_{proc,o}^{SL}]$.

The sensing result may include at least one of the following: a PSCCH decoding result and an RSRP measurement result.

Step 4: The terminal determines, based on the sensing result, the resource for PSSCH transmission.

In a possible implementation, it is assumed that a set of resources for PSSCH transmission is an $S_A$, and an initial value of the $S_A$ is a set of single candidate resources in a resource pool 1 in the resource selection window $[n+T_1, n+T_2]$. The terminal excludes, from the $S_A$, a single candidate resource $R_{x,y}$ that meets all of the following conditions.

Condition 1: SCI is received, and the SCI includes a resource reservation periodicity field and a priority field.

For example, the terminal receives SCI in a slot $t_m^{'SL}$, and the SCI includes a resource reservation periodicity field and a priority field. The resource reservation periodicity field indicates $p_{rsvp\_RX}$, and the priority field indicates $prio_{RX}$.

Condition 2: An RSRP measured value corresponding to a reserved resource indicated by SCI is greater than an RSRP threshold A.

A is $Th(p_{rsvp\_RX}, prio_{RX})$.

Condition 3: A single candidate resource overlaps with a reserved resource indicated by SCI.

For example, if the terminal receives SCI in a slot $t_m^{'SL}$, and the SCI includes a resource reservation periodicity field, the terminal predicts that same SCI may be received in a slot $t'^{SL}_{m+q \times p'_{rsvp\_RX}}$, and the terminal determines a set of RBs and slots that overlap with $R_{x, y+j \times p'_{rsvp\_TX}}$.

$q = 1, 2, ..., Q$, and $j = 0, 1, ..., C_{resel} - 1$. $p'_{rsvp\_RX}$ herein is obtained by converting $p_{rsvp\_RX}$ into a unit of a logical

$$Q = \left\lceil \frac{T_{scal}}{p_{rsvp\_RX}} \right\rceil$$

slot. If $p_{rsvp\_RX} < T_{scal}$ and $n'-m \leq p'_{rsvp\_RX}$, ; otherwise, Q is 1. If a slot n belongs to a set $(t'^{SL}_0, t'^{SL}_1, ..., t'^{SL}_{T'_{max}-1})$, $t'^{SL}_{n'} = n$; otherwise, the slot $t'^{SL}_{n'}$ is a 1st slot that belongs to the set $(t'^{SL}_0, t'^{SL}_1, ..., t'^{SL}_{T'_{max}-1})$ and that is after the slot n. $T_{scal}$ is obtained by converting $T_2$ into a unit of a millisecond (msec).

Then, the terminal determines whether a quantity of single candidate resources in the $S_A$ is greater than $X \cdot M_{total}$. If the quantity of single candidate resources in the $S_A$ is less than $X \cdot M_{total}$, the terminal increases the RSRP threshold $Th(p_{rsvp\_RX}, prio_{RX})$ by 3 dB, and performs the exclusion process again. If the quantity of single candidate resources in the $S_A$ reaches $X \cdot M_{total}$, the exclusion process ends, and a current $S_A$ is a set of single candidate resources that are available for PSSCH transmission.

Step 5: The terminal selects, from the current $S_A$, a single candidate resource for PSSCH transmission.

For a detailed implementation of selecting the resource for PSSCH transmission, refer to the conventional technology. Details are not described herein.

The foregoing briefly describes terms used in this application. Details are not described in the following embodiments again.

Currently, in a scenario in which a first communication protocol and a second communication protocol use a same time-frequency resource, there is a case in which a terminal that performs communication according to the second communication protocol does not know a resource occupied by the first communication protocol. In this case, when a first terminal performs communication according to the second communication protocol, a resource conflict with the resource occupied by the first communication protocol easily occurs.

In view of the foregoing problem, this application provides a technical solution. According to the technical solution, when determining an available resource for control information transmission according to a second communication protocol, a terminal considers a resource occupied by transmission according to a first communication protocol, to avoid control information transmission according to the second communication protocol by using the resource occupied by transmission according to the first communication protocol. This helps avoid a resource conflict between transmission according to the first communication protocol and transmission according to the second communication protocol.

For ease of understanding embodiments of this application, before embodiments of this application are described, the following descriptions are first provided.

First, a first communication protocol and a second communication protocol are in co-channel coexistence. It may be understood as that the first communication protocol and the second communication protocol use a same time-frequency resource set. It may be understood as that the first communication protocol and the second communication protocol share a resource pool. It may also be understood as that a resource pool for the first communication protocol is completely the same as a resource pool for the second communication protocol. It may also be understood as that a time-frequency resource set in a resource pool for the first communication protocol is completely the same as a time-frequency resource set in a resource pool for the second communication protocol, and a terminal of the second communication protocol determines that the resource pool is a shared resource pool. It may be understood as that a resource pool for the second communication protocol includes a time-frequency resource shared with the first communication protocol. Alternatively, a resource pool for the second communication protocol and a resource pool for the first communication protocol overlap in time domain (or use a same time domain resource). For ease of description, the resource pool for the second communication protocol is denoted as a first resource pool below.

Second, specific protocol types of a first communication protocol, a second communication protocol, and a third communication protocol are not limited in this application. For example, the first communication protocol is LTE-V, and the second communication protocol is NR-V of any version (for example, R18 NR-V, R19 NR-V, or R20 NR-V). For another example, the first communication protocol is LTE-Sidelink, and the second communication protocol is NR-Sidelink of any version (for example, R18 NR-Sidelink, R19 NR-Sidelink, or R20 NR-Sidelink). For another example, the second communication protocol is NR-V or NR-Sidelink of any version, and the third communication protocol is R16 NR-sidelink, R16 NR-V, R17 NR-sidelink, R17 NR-V, or the like. For another example, the second communication protocol and the third communication protocol are the same, and are NR-V or NR-Sidelink of any version (for example, R18 NR-V, R19 NR-V, R20 NR-V, R18 NR-Sidelink, R19 NR-Sidelink, or R20 NR-Sidelink). It should be noted that the NR-V and the NR-Sidelink may be replaced with each other, and the LTE-V and the LTE-Sidelink may be replaced with each other.

For ease of understanding, the following describes technical solutions of this application by using an example in which the first communication protocol is the LTE-V, the second communication protocol is the R18 NR-V, and the third communication protocol is the R16 NR-V

Third, in this application, a terminal of a communication protocol may be understood as a terminal including a module of the communication protocol or a terminal supporting the communication protocol. For example, a terminal of R18 NR-V may be understood as a terminal including a module of the R18 NR-V or a terminal supporting a function of the R18 NR-V

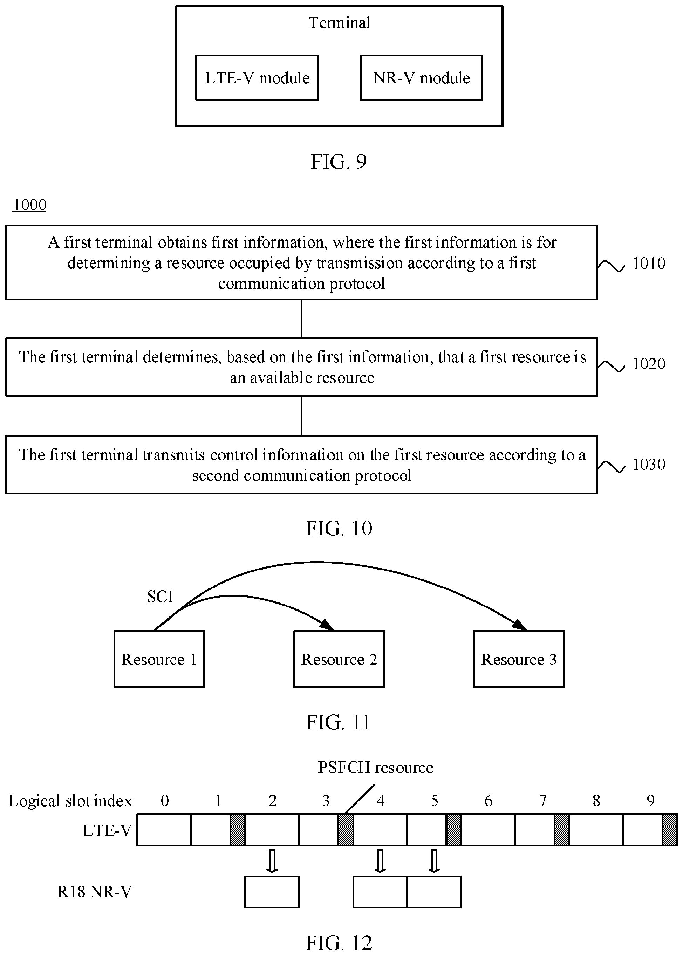

FIG. 9 is a diagram of an internal module structure of a terminal of R18 NR-V As shown in FIG. 9, the terminal includes an LTE-V module and an NR-V module, where the NR-V module includes an R18 NR-V module.

Fourth, in this application, that a terminal sends or receives a signal according to a communication protocol may be understood as that the terminal sends or receives the signal through wireless access of the communication protocol, or the terminal receives or sends the signal via a module of the communication protocol, or the terminal receives or sends the signal by using a wireless communication technology corresponding to the communication protocol, or receiving or sending of the signal by the terminal meets a requirement of the communication protocol, or the like.

Fifth, in this application, a resource for data transmission may be replaced with a resource for PSSCH transmission, a PSSCH resource, a data resource, a resource for PSCCH and PSSCH transmission, or the like. A resource for control information transmission may be replaced with a resource for transmission of a PSFCH, a PSFCH resource, a control resource, a feedback resource, or the like.

Sixth, in this application, "used to indicate" or "indicate" may include being used for direct indication and being used for indirect indication", or "used to indicate" or "indicate" may be being used for explicit indication and/or being used for implicit indication. For example, that a piece of information is used to indicate information I may mean that the information directly indicates I or indirectly indicates I, but does not mean that the information definitely carries I. For another example, the implicit indication may be based on a transmission location and/or resource; and the explicit indication may be based on one or more parameters, one or more indexes, and/or one or more bit patterns represented thereby.

Seventh, definitions listed for many features in this application are merely used as examples to explain functions of the feature. For detailed content of the feature, refer to the conventional technology.

Eighth, the terms "first", "second", "third", and "fourth", and various sequence numbers in the following embodiments are merely used for differentiation for ease of description, and are not used to limit the scope of embodiments of this application. For example, different communication protocols and different resource sets are distinguished.

Ninth, "predefined" may be implemented by storing corresponding code or a table in a device (for example, the device includes a terminal), or may be implemented in another manner that may be used to indicate related information. A specific implementation of "predefined" is not limited in this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Tenth, a "protocol" in embodiments of this application may be a standard protocol in the communication field, for example, may include an LTE protocol, an NR protocol, and a related protocol applied to a future communication system. This is not limited in this application.

Eleventh, "at least one" refers to one or more, and "a plurality of" refers to two or more. "And/Or" describes an association relationship between associated objects, and indicates that three relationships may exist. For example, A and/or B may indicate the following cases: Only A exists, both A and B exist, and only B exists, where A and B may be singular or plural. A character "/" generally indicates an "or" relationship between the associated objects. "At least one of the following items (pieces)" or a similar expression thereof refers to any combination of these items, including a single item (piece) or any combination of a plurality of items (pieces). For example, at least one of a, b, and c may indicate a, b, c, a and b, a and c, b and c, or a, b, and c. Each of a, b, and c may be singular or plural.

In addition, in this application, "in an example", "example", "for example", or the like is used to represent giving an example, an illustration, or a description. Any embodiment or implementation described as an "example" in this application should not be construed as being more preferred or advantageous than another embodiment or implementation.

In a scenario in which R18 NR-V and LTE-V are in co-channel coexistence (share a first resource pool, or jointly use some or all of time-frequency resources in the first resource pool), a terminal of the R18 NR-V may dynamically select a resource from the first resource pool, and transmit data or control information on the selected resource. Because the first resource pool is a shared resource pool and LTE-V standardization has ended, in a process of designing a transmission mechanism for the control information, changes to the LTE-V need to be minimized or the LTE-V is not changed.

In this application, the control information may include at least one of the following: HARQ information, CSI feedback information, or resource conflict indication information. The HARQ information may be ACK information fed back to a terminal that sends data when a terminal that receives the data successfully decodes the received data; or the HARQ information may be NACK information fed back to a terminal that sends data when a terminal that receives the data fails to decode the received data. Optionally, the HARQ information may be an ACK or a NACK of a multicast feedback option 1, a NACK only of a multicast feedback option 2 (NACK information fed back to a second terminal only when a first terminal fails to decode first data from the second terminal), or a unicast ACK or NACK.

For control information transmission, the R18 NR-V may have many processing manners. For example, the R18 NR-V may use the following manner 1, manner 2, or manner 3.

Manner 1

The R18 NR-V does not support control information transmission.

When the R18 NR-V does not support control information transmission, the terminal of the R18 NR-V performs blind retransmission during transmission of the data. The blind retransmission may be understood as repeated transmission of the data. A quantity of repeated transmissions may be configured or preconfigured, or may be dynamically indicated in scheduling signaling.

This method is easy to standardize and has a small workload. The R18 NR-V can ensure specific reliability in a blind retransmission manner.

Manner 2

A priority threshold is preconfigured or configured. The configuration may be configured by a network device. If a priority of transmission of data by the terminal of the R18 NR-V is lower than a threshold (a priority value is higher than the threshold), the terminal of the R18 NR-V transmits the data through the first resource pool.

Optionally, if a priority value of transmission of data by the terminal of the R18 NR-V is lower than a threshold (a priority is higher), the terminal of the R18 NR-V transmits the data through a time-frequency resource set dedicated to transmission according to the R18 NR-V The time-frequency resource set dedicated to transmission according to the R18 NR-V may be understood as a shared time-frequency resource.

Because the LTE-V and the NR-V use a same time-frequency resource, a conflict may occur between transmission according to the LTE-V and transmission according to the NR-V Therefore, low-priority transmission according to the NR-V is implemented on the shared time-frequency resource, and high-priority transmission according to the NR-V is implemented on a dedicated time-frequency resource, so as to ensure reliability of the high-priority transmission.

Manner 3

The R18 NR-V supports control information transmission. For details about Manner 3, refer to the following descriptions.

Manner 2 and Manner 3 may be implemented separately, or may be implemented together. This is not limited in this application.

The following describes the foregoing manner 3 in detail. In Manner 3, an example in which a first terminal receives data and sends control information, and a second terminal sends the data and receives the control information is used.

FIG. 10 is a diagram of a control information sending method 1000 according to this application. The method 1000 may be applied to the network architecture shown in FIG. 1, but this is not limited. The method 1000 may be performed by a first terminal, or may be performed by a module or a unit used in the first terminal. For ease of description, the first terminal and the module or unit used in the first terminal are collectively referred to as the first terminal below. The method 1000 may include at least some of the following content.

Step 1010: The first terminal obtains first information.

The first information is related information transmitted according to LTE-V, and is for determining a resource occupied by transmission according to the LTE-V in a first resource pool. The first resource pool is a resource pool for R18 NR-V.

The resource occupied by transmission according to the LTE-V may be replaced with a reserved resource for transmission according to the LTE-V, a resource occupied by the LTE-V, a reserved resource for the LTE-V, a resource indicated by transmission according to the LTE-V, or the like.

The first information may include at least one of the following information: SCI or a measured value of signal quality corresponding to the SCI. The SCI includes resource indication information for transmission according to the LTE-V and/or a resource reserved field for transmission according to the LTE-V The signal quality corresponding to the SCI may be represented by at least one of the following information: RSRP, an RSSI, an SNR, or an SINR. The measured value of signal quality corresponding to the SCI may be a measured value of signal quality of a DMRS carried on a PSSCH scheduled by the SCI, or may be a measured value of signal quality of a DMRS carried on a PSCCH on which the SCI is located. This is not limited. Optionally, the signal quality corresponding to the SCI may be energy on at least one symbol or energy in one slot.

Optionally, the SCI may be understood as SA, or may be replaced with PSCCH decoding information.

Optionally, the first information includes PSCCH decoding information and RSRP measurement information in a time domain resource set. A manner of determining a location of the time domain resource set includes at least one of the following: predefined, preconfigured, transmitted by an LTE-V module of the first terminal to an NR-V module, or determined and sent by an NR-V module to an LTE-V module. A manner of indicating the location of the time domain resource set includes at least one of the following: a start location of the time domain resource set, an end location of the time domain resource set, and a length of the time domain resource set. The end location of the time domain resource set is a location at which the NR-V module receives indication information of the time domain resource set, or the end location of the time domain resource set is a location that is a time interval before a location at which the NR-V module receives the indication information of the time domain resource set.

The time interval is transmission (sending or transparent transmission) time from the LTE-V module to the NR-V module. A reference point of the start location of the time domain resource set is a location at which a system frame number, for example, a DFN is 0, or a location at which an SFN is 0. The start location of the time resource set is determined based on the reference point and a time offset value.

Optionally, the time domain resource set is consecutive. For example, the time domain resource set is a time window.

The resource occupied by transmission according to the LTE-V may include: A resource occupied by transmission according to the LTE-V by the first terminal and/or a resource occupied by transmission according to the LTE-V by a terminal other than the first terminal. Alternatively, the resource occupied by transmission according to the LTE-V may be a resource occupied by transmission according to the LTE-V included in a time domain resource set.

For example, the first information is SCI transmitted according to the LTE-V The SCI indicates a resource used for current SCI transmission and a reserved resource. The reserved resource is a resource that is indicated by the SCI and that is not used. For example, as shown in FIG. 11, SCI is transmitted on a resource 1, and indicates three resources: the resource 1, a resource 2, and a resource 3. The resource 2 and the resource 3 are not used when the SCI is transmitted, and are referred to as reserved resources.

Optionally, the first information may be sensing information (for example, PSCCH decoding information and RSRP measurement information) that is transmitted according to the LTE-V and that is obtained by the first terminal.

There are many manners in which the first terminal obtains the sensing information. This is not limited in this application.

In a possible implementation, the LTE-V module of the first terminal performs sensing measurement in a first resource sensing window to obtain the sensing information, and then an R18 NR-V module of the first terminal obtains the sensing information from the LTE-V module of the first terminal. An implementation in which the R18 NR-V module of the first terminal obtains the sensing information from the LTE-V module of the first terminal is not limited in this application. For example, the R18 NR-V module of the first terminal requests the sensing information in the first resource sensing window from the LTE-V module of the first terminal, after receiving a request from the R18 NR-V module of the first terminal, the LTE-V module of the first terminal sends corresponding sensing information to the R18 NR-V module of the first terminal. For another example, the LTE-V module of the first terminal periodically sends the sensing information to the R18 NR-V module of the first terminal, and the R18 NR-V module of the first terminal locally obtains the sensing information in the first resource sensing window.

For descriptions of the first resource sensing window, refer to the related descriptions in FIG. 8. A difference lies in that the first resource sensing window is a resource sensing window for selecting a resource for control information transmission, and the first resource sensing window may be the same as or different from the resource sensing window in FIG. 8.

Optionally, the first resource sensing window is the time domain resource set.

In another possible implementation, the R18 NR-V module of the first terminal performs sensing measurement to obtain sensing information for the LTE-V

In still another possible implementation, the first terminal obtains sensing information from a terminal, other than the first terminal, that transmits data or control information based on wireless access of the LTE-V.

Step 1020: The first terminal determines, based on the first information, that a first resource is an available resource.

In a possible implementation, the first terminal determines the first resource from the first resource pool, and further, the first terminal determines that the first resource is the available resource.

(1) The first terminal determines the first resource from the first resource pool.

There are many manners in which the first terminal determines the first resource from the first resource pool. This is not limited in this application.

In a possible implementation, the first terminal may determine, in the following step 1 and step 2, the first resource from the first resource pool.

Step 1: The first terminal determines a time domain resource of the first resource.

For example, the first terminal determines a slot in which the first resource is located. For the R18 NR-V, a periodic control resource is configured for the first resource pool, where a configuration periodicity of the control resource is N slots. For example, N is 0, 1, 2, or 4. N=0 indicates that there is no resource for control information transmission, that is, the R18 NR-V does not support control information transmission. N=1, 2, or 4 indicates that there is one PSFCH resource in every one, two, or four slots. Certainly, a value of N may alternatively be another value, and is not limited to 0, 1, 2, or 4. In this case, the first terminal determines the time domain resource of the first resource based on a time domain resource for PSSCH transmission. For selection of the resource for PSSCH transmission, refer to the foregoing description. Details are not described herein again. In an example, it is assumed that an end location of a PSSCH transmission is in a slot n. The first terminal transmits the control information in a 1st slot that has a PSFCH resource and that is in slots including a slot n+k and a slot after the slot n+k. To be specific, a slot in which the first resource is located is the 1st slot that has the PSFCH resource and that is in the slots including the slot n+k and the slot after the slot n+k. k reflects a processing capability of the first terminal, and in consideration of a delay of processing the PSSCH and generating the control information by the first terminal, a value of k may be predefined or preconfigured, or may be configured by a network device based on RRC signaling. For example, k may be 2 or 3. Optionally, k is configured in a resource pool.

It should be noted that, that a periodic PSFCH resource is configured for the first resource pool may be understood as that a PSFCH resource set is defined, but whether a PSFCH resource in the PSFCH resource set may be for control information transmission needs to be further determined.

FIG. 12 shows an example of a slot in which a first resource is located.

In FIG. 12, it is assumed that a configuration periodicity N of PSFCH resources is 2 (that is, one of every two slots includes a PSFCH resource, for example, logical slots 1, 3, 5, 7, and 9 in FIG. 12), and k is 3. If the first terminal transmits a PSSCH in a logical slot 2, the first terminal receives a PSFCH in the logical slot 5. If the first terminal transmits a PSSCH in a logical slot 4, the first terminal receives a PSFCH in the logical slot 7. If the first terminal transmits a PSSCH in a logical slot 5, the first terminal receives a PSFCH in the logical slot 9.

Optionally, for the periodically configured PSFCH resources, the periodically configured PSFCH resource is not used for data transmission according to the R18 NR-V. In other words, a terminal performing transmission according to the R18 NR-V considers that the periodically configured PSFCH resource can only be for control information transmission, but are unavailable for data transmission. In other words, when the terminal performing transmission according to the R18 NR-V transmits the data through a subchannel including a resource for HARQ transmission, the resource for HARQ transmission on the subchannel in the slot needs to be excluded during rate matching. In this way, it can be ensured that terminal devices have aligned understandings of whether the PSFCH resource is for transmission, to avoid a case in which blind detection or a decoding failure is caused because the terminal device does not know whether the data is transmitted on the PSFCH resource when receiving the data, and blind detection also increases implementation complexity of the terminal.

Step 2: The first terminal determines a frequency domain resource and a code domain resource in the first resource.

In a possible implementation, the first terminal may use a manner of determining a frequency domain resource and a code domain resource of a PSFCH resource in R16 NR-V For detailed descriptions, refer to "a frequency domain resource and a code domain resource of a PSFCH" in the foregoing term description part. Details are not described herein again.

(2) The first terminal determines that the first resource is the available resource.

There are many manners in which the first terminal determines whether the first resource is the available resource. This is not specifically limited in this application. For example, the terminal may determine, by using the following method 1 to method 6, whether the first resource is available.

Method 1

When a candidate resource in which the first resource is located fails to meet a preset condition, the first terminal determines that the first resource is the available resource. The preset condition is that the candidate resource overlaps with the resource that is occupied by transmission according to the LTE-V and that is determined based on the first information and a measured value of signal quality is greater than a first threshold. The candidate resource is a candidate resource used when the first terminal selects a resource for data transmission, the candidate resource is L consecutive frequency domain units in a first time unit, and L is an integer greater than or equal to 1.

That the candidate resource is a candidate resource used when a resource for data transmission is selected may be understood as that the candidate resource may be for data transmission, or the candidate resource is a resource that can be selected when a resource for data transmission is selected, or the candidate resource belongs to a data resource, or the candidate resource is a candidate resource used when a resource is selected, or the candidate resource is a resource in a candidate resource set used when a resource is selected.

Optionally, the first time unit includes a first slot, and/or the frequency domain unit includes a subchannel. For example, the candidate resource may be L consecutive subchannels in the first slot. For example, a set of candidate resources belongs to $S_A$ in "selecting a resource for PSSCH transmission" in the foregoing term description part. For example, the candidate resource may be a "single candidate resource $R_{x,y}$" in the foregoing term description part.

A manner of determining the first threshold herein may be a manner of determining a threshold used when a resource for data transmission is selected.

Optionally, the measured value of signal quality is a measured value of signal quality corresponding to transmission according to a first communication protocol.

Optionally, the measured value of signal quality is a measured value of energy in a time domain unit in which the first resource is located.

Optionally, the measured value of signal quality may be a measured value of energy on P symbols in the first slot, or a measured value of energy in the first slot.

Optionally, the measured value of energy may be indicated by at least one of an RSSI, an SNR, or an SINR.

The preset condition herein may alternatively be described as follows:

Condition 1: The SCI is received, and the SCI includes time domain resource indication information, frequency domain resource indication information, a resource reserved field, and a priority field.

Condition 2: A measured value of signal quality corresponding to a resource indicated by the SCI is greater than a threshold A.

Condition 3: The candidate resource overlaps with a resource indicated by the SCI. The threshold A corresponds to the first threshold. For detailed descriptions, refer to the condition 1 to the condition 3 in "selecting a resource for PSSCH transmission" in the foregoing term description part. Details are not described herein again.

The resource indicated by the SCI may be understood as a reserved resource indicated by the SCI, namely, a resource that is in resources indicated by the SCI and that has not been used at a moment when the SCI is sent.

Usually, the measured value of signal quality corresponding to the SCI may be used as the measured value of signal quality corresponding to the resource indicated by the SCI. In other words, the measured value of signal quality corresponding to the resource indicated by the SCI may be the measured value of signal quality of the DMRS carried on the PSSCH scheduled by the SCI, or may be the measured value of signal quality of the DMRS carried on the PSCCH on which the SCI is located. This is not limited. In other words, when the candidate resource that is available for data transmission and in which the first resource is located is an available resource, the first terminal determines that the first resource is the available resource. When the candidate resource that is available for data transmission and in which the first resource is located is an unavailable resource, the first terminal determines that the first resource is an unavailable resource.

Method 2

When none of candidate resources included in a first time unit in which the first resource is located meets a preset condition, the first terminal determines that the first resource is the available resource. The preset condition is that the candidate resource overlaps with the resource that is occupied by transmission according to the LTE-V and that is determined based on the first information and a measured value of signal quality is greater than a first threshold. The candidate resource is a candidate resource used when the first terminal selects a resource for data transmission, the candidate resource is L consecutive frequency domain units in the first time unit, and L is an integer greater than or equal to 1.

In other words, when all of the candidate resources that are available for data transmission and that are included in the first time unit in which the first resource is located are available resources, the first terminal determines that the first resource is the available resource. When one or more of the candidate resources that are available for data transmission and that are included in the first time unit in which the first resource is located are unavailable resources, the first terminal determines that the first resource is an unavailable resource.

For explanations of terms in the method 2, refer to the method 1. Details are not described herein again.

Method 3

When a candidate resource in which the first resource is located fails to meet a preset condition, the first terminal determines that the first resource is the available resource. The preset condition is that the candidate resource overlaps with the resource that is occupied by transmission according to the LTE-V and that is determined based on the first information and a measured value of signal quality is greater than a second threshold. The candidate resource is a candidate resource used when the first terminal selects a resource for control information transmission, the candidate resource is L consecutive frequency domain units in a first time unit, and L is an integer greater than or equal to 1.

That the candidate resource is a candidate resource used when a resource for control information transmission is selected may be understood as that the candidate resource is for control information transmission, or the candidate resource is a resource that can be selected when a resource for control information transmission is selected, or the candidate resource belongs to a control resource.

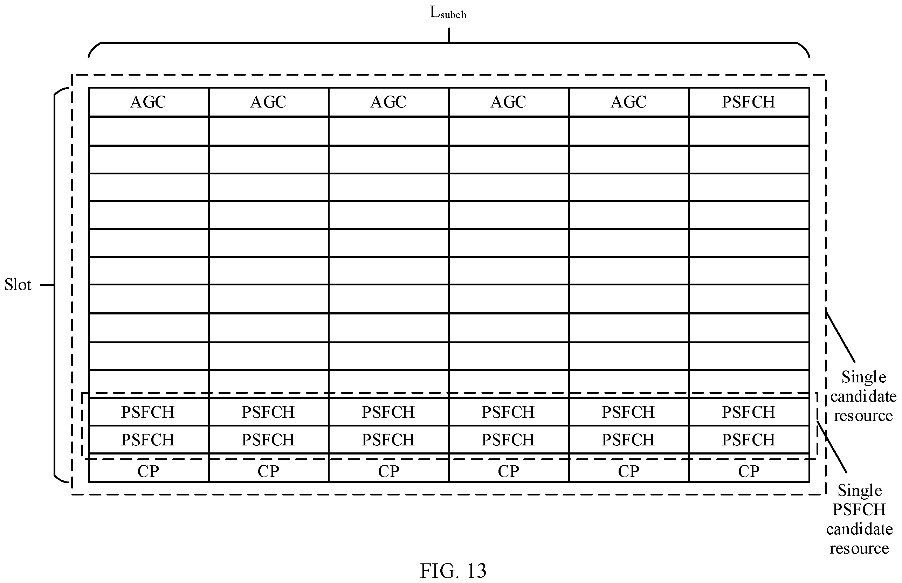

Optionally, the first time unit includes a first slot, and/or the frequency domain unit includes a subchannel and a PRB. For example, the candidate resource may be L consecutive subchannels in the first slot. For another example, the candidate resource may be L consecutive PRBs in the first slot. For another example, the candidate resource may be L consecutive subchannels on P symbols in the first slot, where P is an integer greater than or equal to 1. For example, the candidate resource may be a single PSFCH candidate resource shown in FIG. 13, and the single PSFCH candidate resource is a symbol in time domain, and $L_{subch}$ consecutive subchannels in frequency domain. For another example, the candidate resource may be L consecutive PRBs on P symbols in the first slot, where P is an integer greater than or equal to 1.

The second threshold herein may be a threshold used when a resource for control information transmission is selected. Optionally, the second threshold may be different from the foregoing first threshold. Optionally, the second threshold is less than the foregoing first threshold.

Optionally, the second threshold is from an independently configured threshold table or threshold set. It may be understood as that the threshold table or threshold set to which the second threshold belongs is different from a threshold table or threshold set to which the first threshold belongs, or the threshold table or threshold set to which the second threshold belongs is independently set and/or configured relative to a threshold table or threshold set to which the first threshold belongs.

Optionally, the second threshold is an absolute threshold. It may be understood as that the second threshold is not configured based on a threshold table or threshold set, and may be an independent threshold.

Optionally, the measured value of signal quality is a measured value of signal quality corresponding to transmission according to a first communication protocol.

Optionally, the measured value of signal quality is a measured value of energy in a time domain unit in which the first resource is located.

Optionally, the measured value of signal quality may be a measured value of energy on P symbols in the first slot, or a measured value of energy in the first slot.

Optionally, the measured value of energy may be indicated by at least one of an RSSI, an SNR, or an SINR.

The preset condition herein may alternatively be described as follows:

Condition 1: The SCI is received, and the SCI includes time domain resource indication information, frequency domain resource indication information, a resource reserved field, and a priority field (which may be replaced with a PPPP field).

Condition 2: A measured value of signal quality corresponding to a resource indicated by the SCI is greater than a threshold B.

Condition 3: The candidate resource overlaps with a resource indicated by the SCI.

The threshold B corresponds to the second threshold.

The resource indicated by the SCI may be understood as a reserved resource indicated by the SCI, namely, a resource that is in resources indicated by the SCI and that has not been used at a moment when the SCI is sent.

Usually, the measured value of signal quality corresponding to the SCI may be used as the measured value of signal quality corresponding to the resource indicated by the SCI. In other words, the measured value of signal quality corresponding to the resource indicated by the SCI may be the measured value of signal quality of the DMRS carried on the PSSCH scheduled by the SCI, or may be the measured value of signal quality of the DMRS carried on the PSCCH on which the SCI is located. This is not limited.

In other words, when the candidate resource that is available for control information transmission and in which the first resource is located is an available resource, the first terminal determines that the first resource is the available resource. When the candidate resource that is available for control information transmission and in which the first resource is located is an unavailable resource, the first terminal determines that the first resource is an unavailable resource.

Method 4

When none of candidate resources included in a first time unit in which the first resource is located meets a preset condition, the first terminal determines that the first resource is the available resource. The preset condition is that the candidate resource overlaps with the resource that is occupied by transmission according to the LTE-V and that is determined based on the first information and a measured value of signal quality is greater than a second threshold. The candidate resource is a candidate resource used when the first terminal selects a resource for control information transmission, the candidate resource is L consecutive frequency domain units in the first time unit, and L is an integer greater than or equal to 1.

In other words, when all of the candidate resources that are available for control information transmission and that are included in the first time unit in which the first resource is located are available resources, the first terminal determines that the first resource is the available resource. When one or more of the candidate resources that are available for control information transmission and that are included in the first time unit in which the first resource is located are unavailable resources, the first terminal determines that the first resource is an unavailable resource.

For explanations of terms in the method 4, refer to the method 3. Details are not described herein again.

Method 5

When the first resource fails to meet a preset condition, the first terminal determines that the first resource is an available resource. The preset condition is that the first resource overlaps with the resource that is occupied by transmission according to the LTE-V and that is determined based on the first information and a measured value of signal quality is greater than a third threshold.

Optionally, the first resource is one PRB on P symbols in a first slot.

The third threshold herein may be different from the foregoing first threshold. Optionally, the third threshold is less than the foregoing first threshold.

Optionally, the third threshold belongs to an independently configured threshold table or threshold set. It may be understood as that the threshold table or threshold set to which the third threshold belongs is different from a threshold table or threshold set to which the first threshold belongs, or the threshold table or threshold set to which the third threshold belongs is independently set and/or configured relative to a threshold table or threshold set to which the first threshold belongs.

Optionally, the third threshold is an absolute threshold. It may be understood as that the third threshold is not configured based on a threshold table or threshold set, and may be an independent threshold. Optionally, the third threshold may be determined based on a CBR. For example, when a resource pool is congested, if the third threshold is smaller, a quantity of resources in a candidate resource set is smaller, thereby achieving an objective of reducing a resource congestion degree.

The preset condition herein may alternatively be described as follows:

Condition 1: The SCI is received, and the SCI includes time domain resource indication information, frequency domain resource indication information, a resource reserved field, and a priority field.

Condition 2: A measured value of signal quality corresponding to a resource indicated by the SCI is greater than a threshold C.

Condition 3: The first resource overlaps with a resource indicated by the SCI.

The threshold C corresponds to the third threshold.

The third threshold is determined based on a priority in the condition 1 and a priority of the to-be-sent control information.

Usually, the measured value of signal quality corresponding to the SCI may be used as the measured value of signal quality corresponding to the resource indicated by the SCI. In other words, the measured value of signal quality corresponding to the resource indicated by the SCI may be the measured value of signal quality of the DMRS carried on the PSSCH scheduled by the SCI, or may be the measured value of signal quality of the DMRS carried on the PSCCH on which the SCI is located. This is not limited.

Optionally, the condition 2 may be replaced with the following: A measured value of energy of a resource indicated by the SCI is obtained, and a measured value of energy of a time domain unit in which the first resource is located is greater than a threshold. The measured value of energy may be indicated by at least one of an RSSI, an RINR, or an SNR. The threshold herein may be unrelated to a priority, or may be related to a priority of the to-be-sent control information. Herein, the measured value of energy in the time domain unit in which the first resource is located corresponds to the measured value of energy of the resource indicated by the SCI. The measured value of energy of the resource indicated by the SCI may be converted into the measured value of energy in the time domain unit in which the first resource is located. The measured value of energy may be replaced with measured energy.

Optionally, the condition 2 may be replaced with the following: A measured value of energy of a resource indicated by the SCI is obtained, and a measured value of energy of the first resource is greater than a threshold. Herein, the measured value of energy of the first resource corresponds to the measured value of energy of the resource indicated by the SCI. The measured value of energy of the resource indicated by the SCI may be converted into the measured value of energy of the first resource. The measured value of energy may be at least one of an RSSI, an RINR, or an SNR. The threshold herein may be unrelated to a priority, or may be related to a priority of the to-be-sent control information. The measured value of energy may be replaced with measured energy.

In other words, the first terminal directly determines, based on the preset condition, whether the first resource is the available resource. When the first resource fails to meet the preset condition, the first terminal determines that the first resource is the available resource. When the first resource meets the preset condition, the first terminal determines that the first resource is an unavailable resource.

It should be noted that a description manner of the foregoing preset conditions is merely an example, and another description manner may alternatively be used, provided that a condition expressed in the manner is the same as the foregoing preset condition. It should be further noted that the foregoing describes the solutions of this application in a negative manner in which the candidate resource or the first resource "fails to meet a preset condition", or a positive manner in which the candidate resource or the first resource "meets one or more conditions". The one or more conditions herein are a complementary set of the foregoing preset condition.

Method 6

When the first resource does not overlap with the resource that is occupied by transmission according to the LTE-V and that is determined based on the first information, the first terminal determines that the first resource is the available resource.

Alternatively, when a candidate resource in which the first resource is located does not overlap with the resource that is occupied by transmission according to the LTE-V and that is determined based on the first information, the first terminal determines that the first resource is the available resource.

Alternatively, when none of candidate resources included in a first time unit in which the first resource is located overlaps with the resource that is occupied by transmission according to the LTE-V and that is determined based on the first information, the first terminal determines that the first resource is the available resource.

In the foregoing method, the priority field included in the SCI may be replaced with a PPPP field.

For descriptions of the candidate resource, refer to the method 1 to the method 4. Details are not described herein again.

It should be noted that, when the first terminal determines that the first resource is the available resource, in addition to the first information, resource indication information used to indicate a resource occupied by transmission according to the second communication protocol may also be used. To be specific, the first terminal determines, based on the first information and the resource indication information for transmission according to the second communication protocol, that the first resource is the available resource or an unavailable resource. This is not limited in this application.

Step 1030: The first terminal transmits the control information on the first resource according to the R18 NR-V

In the foregoing technical solution, the first terminal may determine, based on the first information, the resource occupied by transmission according to the LTE-V, further determine, based on the resource occupied by transmission according to the LTE-V, that the first resource in the first resource pool is the available resource, and transmit the control information on the first resource according to the R18 NR-V In this way, according to the foregoing technical solution, when the resource pool for the R18 NR-V includes a same time-frequency resource set as the LTE-V, the first terminal considers the resource occupied by transmission according to the LTE-V when determining the available resource for control information transmission according to the R18 NR-V This can avoid control information transmission according to the R18 NR-V through the resource occupied by transmission according to the LTE-V, thereby helping avoid a resource conflict between transmission according to the LTE-V and transmission according to the R18 NR-V In addition, sending of the control information according to the R18 NR-V can be implemented by using the foregoing technical solution, thereby helping improve data transmission reliability according to the R18 NR-V.

In some implementations, the first resource is available for data or control information transmission. In this case, when it is determined that the first resource is the available resource, the first resource is for control information transmission, instead of data transmission; or when it is determined that the first resource is an unavailable resource, the first resource is available for data transmission, instead of control information transmission. This can improve resource utilization.

In some other implementations, the first resource is not for data transmission. In this case, when it is determined that the first resource is the available resource, the first resource is for control information transmission, instead of data transmission; or when it is determined that the first resource is an unavailable resource, the first resource is neither for data transmission nor for control information transmission. Because sensing results of terminals of a receiving party and a sending party for transmission according to the LTE-V are not necessarily the same, it is possible that the terminals of the receiving party and the sending party have different determining results for whether the first resource is available, a receiving and sending conflict (for example, a conflict between data receiving and HARQ information sending, or a conflict between HARQ information receiving and data sending) is caused. If the first resource is not for data transmission, the receiving and sending conflict can be avoided.

It should be noted that, for a method receiving data corresponding to the first terminal, refer to the conventional technology. Details are not described herein again.

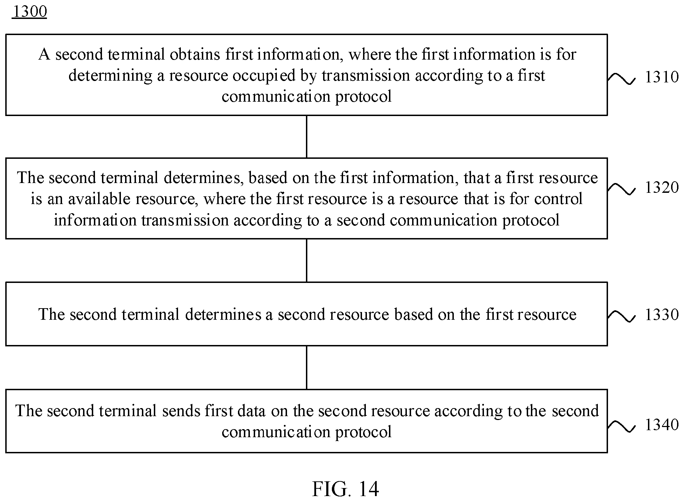

FIG. 14 is a diagram of a data sending method 1300 according to this application. The method 1300 may be applied to the network architecture shown in FIG. 1, but this is not limited. The method 1300 may be performed by a second terminal, or may be performed by a module or a unit used in the second terminal. For ease of description, the second terminal and the module or unit used in the second terminal are collectively referred to as the second terminal below. The method 1300 may include at least some of the following content.

Step 1310: The second terminal obtains first information.

The first information is related information transmitted according to LTE-V, and is for determining a resource occupied by transmission according to the LTE-V in a first resource pool. The first resource pool is a resource pool for R18 NR-V.

A manner in which the second terminal obtains the first information is the same as a manner in which a first terminal obtains the first information. For details, refer to the related descriptions of the foregoing step 1010. Details are not described herein again.

Step 1320: The second terminal determines, based on the first information, that a first resource is an available resource.

A manner in which the second terminal determines that the first resource is the available resource based on the first information is the same as a manner in which the first terminal determines that the first resource is the available resource based on the first information. For details, refer to the related descriptions of the foregoing step 1020. Details are not described herein again.

Step 1330: The second terminal determines a second resource based on the first resource.

In some implementations, when the first resource is an unavailable resource, the second terminal may determine that a first candidate resource corresponding to the first resource is also an unavailable resource. The first candidate resource is a resource available for data transmission, that is, a resource for PSSCH transmission. When the first resource is the available resource, the second terminal may transmit the data through a PSSCH resource corresponding to the first resource. When the first resource is an unavailable resource, the second terminal may not transmit the data through a PSSCH resource corresponding to the first resource. In this case, if the second terminal has selected the first candidate resource to transmit the data, the second terminal may reselect a resource for data transmission. In other words, when the second terminal selects the second resource for data transmission, the second resource meets the following condition: The second resource is an available resource, and a control resource corresponding to the second resource is also an available resource. For example, with reference to FIG. 12, it is assumed that a configuration periodicity N of PSFCH resources is 2 (that is, one of every two slots includes a PSFCH resource, for example, logical slots 1, 3, 5, 7, and 9 in FIG. 12), and k is 3. If the second terminal determines that the PSFCH resource included in the logical slot 5 is an unavailable resource, the second terminal determines that the PSSCH resource included in a logical slot 2 is an unavailable resource.

In some other implementations, when the first resource is an unavailable resource and a PSSCH resource that is for data transmission and that corresponds to the first resource is available, the second terminal may reduce a priority of selecting the PSSCH resource. In other words, when a resource for data transmission is selected, the second terminal preferentially selects a PSSCH resource whose corresponding PSFCH resource is an available resource. In other words, when a resource for PSSCH transmission is selected, a candidate resource set determined by the second terminal includes a first-type candidate resource and a second-type candidate resource. The first-type candidate resource meets a condition: The candidate resource is an available resource. The second-type candidate resource meets a condition: The candidate resource is an available resource, and a control resource corresponding to the candidate resource is an available resource. When a control information (for example, HARQ) feedback mechanism for to-be-sent data determined by the second terminal is enabled, the second terminal selects a resource from the second-type candidate resource. When a control information (for example, HARQ) feedback mechanism for to-be-sent data determined by the second terminal is not enabled, the second terminal selects a resource from the first-type candidate resource or the candidate resource set. The implementation method can effectively support the second terminal in enabling the control information (for example, HARQ) feedback mechanism when the data is sent, thereby ensuring data transmission reliability.

In a possible implementation, the second terminal determines a first candidate resource set based on the first resource, where the first candidate resource set is a candidate resource set used when the second terminal selects a resource for data transmission; and the second terminal determines the second resource from the first candidate resource set. To be specific, the first candidate resource set determined by the second terminal meets the following conditions: A resource in the first candidate resource set is an available resource, and a control resource corresponding to the resource is also an available resource.

In other words, the second resource corresponding to the first resource is the resource in the first candidate resource set, and the first candidate resource set is the candidate resource set used when the second terminal selects the resource for data transmission.

In another possible implementation, the second terminal determines a second candidate resource set, where the second candidate resource set is a candidate resource set used when the second terminal selects a resource for data transmission; and the second terminal determines the second resource from the second candidate resource set based on the first resource. To be specific, the second terminal determines the second candidate resource set in "a manner of selecting a resource for PSSCH transmission" described in the foregoing term explanation part. In this case, a resource in the second candidate resource set is an available resource, and a control resource corresponding to the resource in the second candidate resource set may be an available resource or an unavailable resource. Then, the second terminal selects the second resource from the second candidate resource set based on the first resource. To be specific, the second terminal selects the second resource from resources whose corresponding control resources are available resources in the second candidate resource set. In this way, the second resource is an available resource, and a control resource corresponding to the second resource is also an available resource.

It should be noted that, because the first resource is determined based on the first information, that the second terminal determines a second resource based on the first resource may also be understood as that the second terminal determines a second resource based on the first information.

Step 1340: The second terminal sends first data on the second resource according to a second communication protocol.

In the method 1300, the second terminal may determine, based on the first information, the resource occupied by transmission according to the LTE-V, determine, based on the resource occupied by transmission according to the LTE-V, that the first resource is the available resource, and determine, based on the first resource, the second resource for data transmission according to the R18 NR-V. In other words, the second resource that is for data transmission according to the R18 NR-V and that is determined by the second terminal meets both of the following conditions: The second resource is an available resource, and a resource that is for control information transmission according to the R18 NR-V and that corresponds to the second resource is an available resource. In this way, according to the foregoing technical solution, the second terminal considers the resource occupied by transmission according to the LTE-V when determining the available resource for control information transmission according to the R18 NR-V This can avoid control information transmission according to the R18 NR-V through the resource occupied by transmission according to the LTE-V, thereby helping avoid a resource conflict between transmission according to the LTE-V and transmission according to the R18 NR-V In addition, the second resource meets both of the following conditions: The second resource is the available resource, and the resource that corresponds to the second resource and that is for control information transmission according to the R18 NR-V is the available resource. This can ensure normal transmission of a control information (for example, HARQ) feedback mechanism, thereby helping improve data transmission reliability according to the R18 NR-V.

In some implementations, the first resource is available for data or control information transmission. In this case, when it is determined that the first resource is the available resource, the first resource is for control information transmission, instead of data transmission; or when it is determined that the first resource is an unavailable resource, the first resource is available for data transmission, instead of control information transmission. This can improve resource utilization.

In some other implementations, the first resource is not for data transmission. In this case, when it is determined that the first resource is the available resource, the first resource is for control information transmission, instead of data transmission; or when it is determined that the first resource is an unavailable resource, the first resource is neither for data transmission nor for control information transmission. Because sensing results of terminals of a receiving party and a sending party for transmission according to the LTE-V are not necessarily the same, it is possible that the terminals of the receiving party and the sending party have different determining results for whether the first resource is available, a receiving and sending conflict (for example, a conflict between data receiving and HARQ information sending, or a conflict between HARQ information receiving and data sending) is caused. If the first resource is not for data transmission, the receiving and sending conflict can be avoided.

In some implementations, if the second terminal determines that the first resource is the available resource, and transmits the data on a PSSCH resource corresponding to the first resource, the second terminal may enable control information feedback. In other words, if the second terminal transmits the data on the PSSCH resource, and the first resource corresponding to the PSSCH resource is the available resource, the second terminal may enable the control information feedback. If the second terminal determines that the first resource is an unavailable resource, and/or does not transmit the data on a PSSCH resource corresponding to the first resource, the second terminal may disable control information feedback. This helps avoid interference generated when the control information is received.

Specifically, if the second terminal determines that the first resource is the available resource, and transmits the data on a PSSCH resource corresponding to the first resource, the second terminal may send second information to the first terminal, where the second information is used to indicate the first terminal to send control information to the second terminal. It may also be understood herein that the second terminal determines the first resource as the available resource, and transmits the data and the second information on a PSSCH resource corresponding to the first resource, where the second information is used to indicate the first terminal to send the control information to the second terminal. For example, the second terminal determines that the first resource is the available resource, and transmits the second information and the data on the second resource corresponding to the first resource, where the second information includes HARQ enabling information.

Optionally, the second information is carried in second-level SCI.

Optionally, the second information is HARQ enabling information in SCI, and the control information is HARQ information. It may be understood as that if the first terminal receives data and the second information (which includes the HARQ enabling information) from the second terminal, the first terminal sends, to the second terminal, the HARQ information corresponding to the data, that is, the control information is the HARQ information.

Optionally, the second information is CSI trigger information in SCI, and the control information is CSI feedback information. It may be understood as that if the first terminal receives data and the second information (which includes the CSI trigger information) from the second terminal, the first terminal sends the CSI feedback information to the second terminal, that is, the control information is the CSI feedback information.

Optionally, the second information is trigger information of resource conflict indication information in SCI, and the control information is the resource conflict indication information. It may be understood as that if the first terminal receives data and the second information (which includes the trigger information of the resource conflict indication information) from the second terminal, the first terminal sends the resource conflict indication information to the second terminal, that is, the control information is the resource conflict indication information.

For example, the HARQ enabling information and the CSI trigger information are indicated in the second-level SCI.

For example, the trigger information of the resource conflict indication information is indicated in first-level SCI. The trigger information of the resource conflict indication information may be time domain resource indication information and frequency domain resource indication information in the first-level SCI.

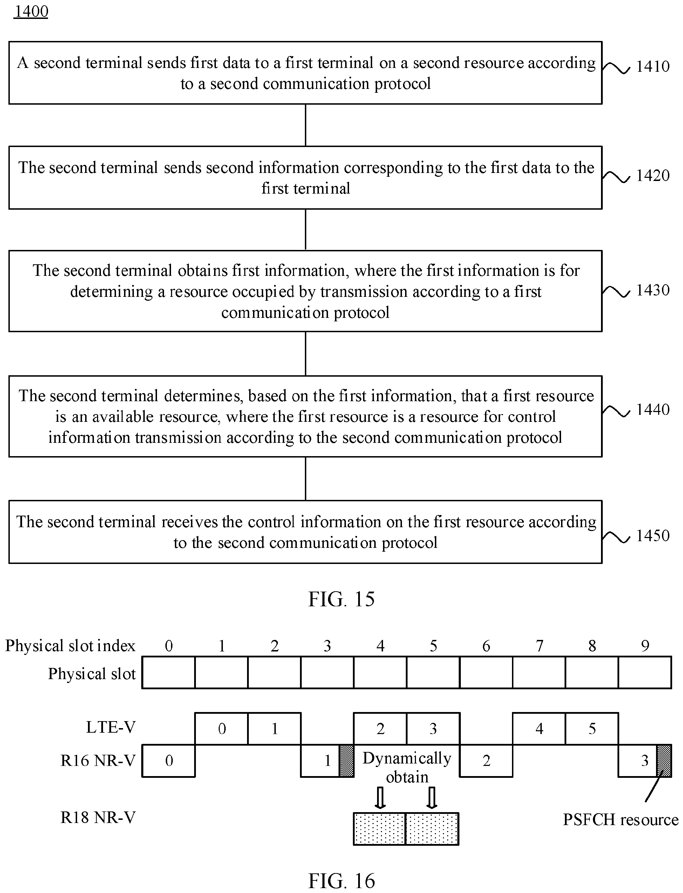

FIG. 15 is a diagram of a control information receiving method 1400 according to this application. The method 1400 may be applied to the network architecture shown in FIG. 1, but this is not limited. The method 1400 may be performed by a second terminal, or may be performed by a module or a unit used in the second terminal. For ease of description, the second terminal and the module or unit used in the first second are collectively referred to as the second terminal below. The method 1400 may include at least some of the following content.

Step 1410: The second terminal sends first data to a first terminal on a second resource according to a second communication protocol.

In the method 1400, an implementation of step 1410 is not specifically limited.

In a possible implementation, the second terminal sends the first data to the first terminal by using the method shown in FIG. 14. For detailed descriptions, refer to the method 1300.

In another possible implementation, the second terminal sends the first data to the first terminal in "a manner of selecting a resource for PSSCH transmission" described in the foregoing term explanation part.

Step 1420: The second terminal sends second information corresponding to the first data to the first terminal.

The second information is used to indicate the first terminal to send control information.

The second information corresponding to the first data may be understood as second information sent simultaneously with the first data. The second information is for scheduling the first data, and the second information is for triggering a terminal (namely, the first terminal) receiving the first data to send control information (for example, HARQ information, resource conflict indication information, or CSI feedback information) related to the first data. For example, the second information is a PSCCH for scheduling a PSSCH carrying the first data.

Optionally, the second information is carried in second-level SCI.

Optionally, the second information is HARQ enabling information in SCI, and the control information is the HARQ information. It may be understood as that if the first terminal receives data and the second information (which includes the HARQ enabling information) from the second terminal, the first terminal sends, to the second terminal, the HARQ information corresponding to the data, that is, the control information is the HARQ information.

Optionally, the second information is CSI trigger information in SCI, and the control information is the CSI feedback information. It may be understood as that if the first terminal receives data and the second information (which includes the CSI trigger information) from the second terminal, the first terminal sends the CSI feedback information to the second terminal, that is, the control information is the CSI feedback information.

Optionally, the second information is trigger information of resource conflict indication information in SCI, and the control information is the resource conflict indication information. It may be understood as that if the first terminal receives data and the second information (which includes the trigger information of the resource conflict indication information) from the second terminal, the first terminal sends the resource conflict indication information to the second terminal, that is, the control information is the resource conflict indication information.

For example, the HARQ enabling information and the CSI trigger information are indicated in the second-level SCI.

For example, the trigger information of the resource conflict indication information is indicated in first-level SCI. The trigger information of the resource conflict indication information may be time domain resource indication information and frequency domain resource indication information in the first-level SCI.

Step 1430: The second terminal obtains first information.

The first information is related information transmitted according to LTE-V, and is for determining a resource occupied by transmission according to the LTE-V in a first resource pool. The first resource pool is a resource pool for R18 NR-V.

Step 1440: The second terminal determines, based on the first information, that a first resource is an available resource.

For steps 1430 and 1440, refer to steps 1310 and 1320. Details are not described herein again.

Step 1450: The second terminal receives the control information on the first resource according to the second communication protocol.

It should be noted that, in this application, only steps 1430 and 1440 need to be performed before step 1450, and a sequence of steps 1410, 1420, 1430, and 1440 is not limited.

In an example, steps 1430 and 1440 may be performed before step 1420. For example, in step 1410, the second terminal sends the first data to the first terminal by using the method shown in FIG. 14, that is, steps 1430 and 1440 are implemented by using step 1410. It should be noted that, in this case, after step 1410 and before step 1450, the second terminal may not repeatedly perform step 1430 and step 1440. Certainly, for accuracy of a result, the second terminal may alternatively perform steps 1430 and 1440 again.

In another example, steps 1430 and 1440 may be performed after step 1420.

In the foregoing technical solution, the second terminal indicates the first terminal to send the control information to the second terminal, determines, based on the first information, the resource occupied by transmission according to the LTE-V, and receives the control information on the first resource according to the R18 NR-V when determining, based on the resource occupied by transmission according to the LTE-V, that the first resource is the available resource. In this way, according to the foregoing technical solution, the second terminal considers the resource occupied by transmission according to the LTE-V when determining the available resource for control information transmission according to the R18 NR-V This can avoid control information transmission according to the R18 NR-V through the resource occupied by transmission according to the LTE-V, thereby helping avoid a resource conflict between transmission according to the LTE-V and transmission according to the R18 NR-V.

In addition, receiving of the control information according to the R18 NR-V can be implemented by using the foregoing technical solution, thereby helping improve data transmission reliability according to the R18 NR-V.

In some implementations, the first resource is available for data or control information transmission. In this case, when it is determined that the first resource is the available resource, the first resource is for control information transmission, instead of data transmission; or when it is determined that the first resource is an unavailable resource, the first resource is available for data transmission, instead of control information transmission. This can improve resource utilization.

In some other implementations, the first resource is not for data transmission. In this case, when it is determined that the first resource is the available resource, the first resource is for control information transmission, instead of data transmission; or when it is determined that the first resource is an unavailable resource, the first resource is neither for data transmission nor for control information transmission. Because sensing results of terminals of a receiving party and a sending party for transmission according to the LTE-V are not necessarily the same, it is possible that the terminals of the receiving party and the sending party have different determining results for whether the first resource is available, a receiving and sending conflict (for example, a conflict between data receiving and HARQ information sending, or a conflict between HARQ information receiving and data sending) is caused. If the first resource is not for data transmission, the receiving and sending conflict can be avoided.

It should be noted that the method 1000, the method 1300, and the method 1400 may be implemented separately, or may be implemented together in a proper manner.

The following describes another control information sending method and a corresponding control information receiving method that are provided in this application. The method may be applied to a scenario in which a first communication protocol and a second communication protocol share a first resource pool, and the first resource pool and a second resource pool for a third communication protocol share a spectrum in a time division multiplexing or frequency division multiplexing manner. Specific types of the first communication protocol, the second communication protocol,

and the third communication protocol are not limited in this application. The following uses an example in which the first communication protocol is LTE-V, the second communication protocol is R18 NR-V, and the third communication protocol is R16 NR-V for description.

FIG. 16 shows an example in which a first resource pool and a second resource pool share a spectrum in a time division multiplexing manner. A first resource pool for LTE-V and a second resource pool for R16 NR-V are multiplexed in a time division multiplexing manner. The first resource pool for the LTE-V includes physical slots 1, 2, 4, 5, 7, and 8, and the second resource pool for the R16 NR-V includes physical slots 0, 3, 6, and 9. The LTE-V and R18 NR-V share the first resource pool, and the R18 NR-V obtains a resource in a dynamic manner.

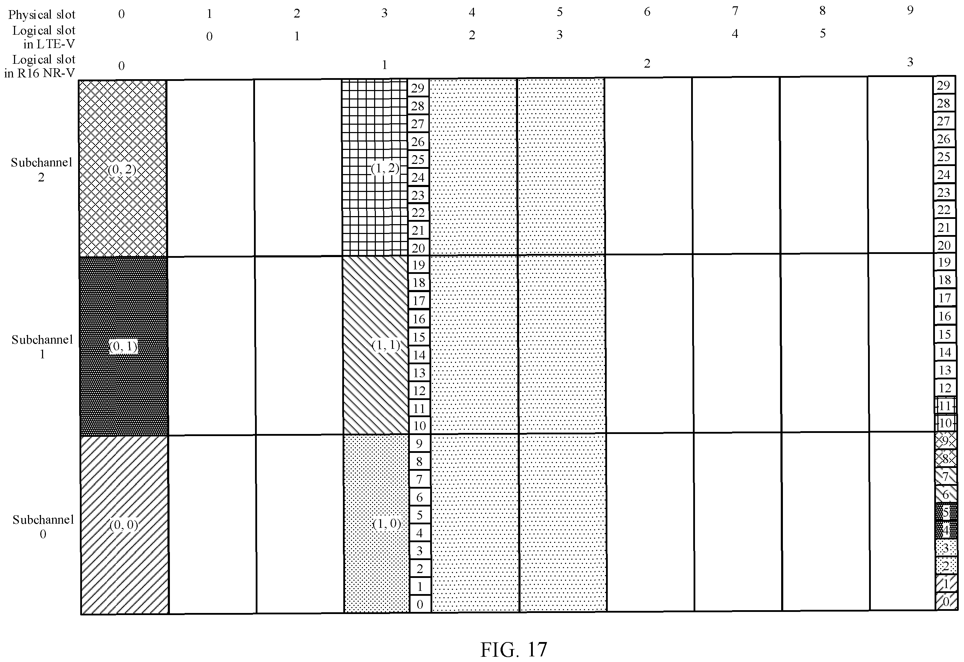

FIG. 17 shows an example of a mapping relationship between a PSSCH resource and a PSFCH resource in R16 NR-V.

As shown in FIG. 17, PSFCH resources with a periodicity N=2 are configured for a second resource pool for the R16 NR-V, and transmission of data according to the R16 NR-V is fed back on a corresponding PSFCH resource. It is assumed that a minimum time interval k from a PSSCH to a PSFCH is 2, a quantity of subchannels in a resource pool 2 is 3, a quantity of slots (namely, physical slots 0, 3, 6, and 9) is 4, the subchannel includes 10 PRBs, there are 30 PRBs (numbered 0 to 29) available for HARQ information transmission, and a quantity of PRBs

(numbered 0 to 11) for HARQ information transmission is 12. In this way, each subchannel may correspond to two resource blocks. For example, a subchannel (0, 0) corresponds to a PRB 0 and a PRB 1 in a logical slot 3 (namely, the physical slot 9).

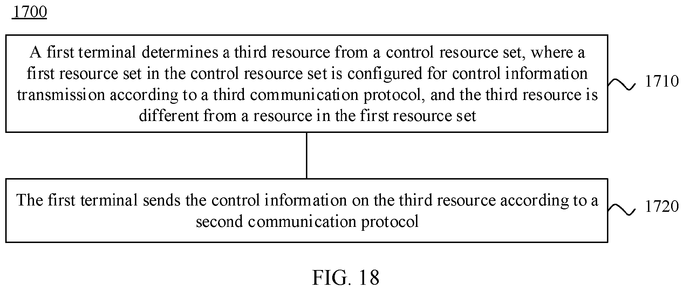

FIG. 18 is a diagram of a control information sending method 1700 according to this application. The method 1700 may be applied to the network architecture shown in FIG. 1, but this is not limited. The method 1700 may be performed by a first terminal, or may be performed by a module or a unit used in the first terminal. For ease of description, the first terminal and the module or unit used in the first terminal are collectively referred to as the first terminal below.

In the method 1700, a terminal of R18 NR-V may receive data through a resource in a first resource pool, and send control information through a control resource in a second resource pool for R16 NR-V Specifically, the R18 NR-V may send the control information by using a remaining resource in control resources for the R16 NR-V.

The remaining resource herein may include the following two types.

A first type is a resource that is in the control resources for the R16 NR-V and that is not configured for control information transmission according to the R16 NR-V, namely, a resource that is in the control resources for the R16 NR-V and that is multiplexed in a frequency division multiplexing manner with the resource for control information transmission according to the R16 NR-V For example, refer to FIG. 16. Control resources for the R16 NR-V include 30 PRBs, but only 12 PRBs (for example, the PRB 0 to the PRB 11 in FIG. 16) are for control information transmission according to the R16 NR-V In this way, all remaining 18 PRBs (for example, the PRB 12 to the PRB 29 in FIG. 16) may be for control information transmission according to the R18 NR-V.

A second type is a remaining resource other than a resource actually used for control information transmission according to the R16 NR-V in resources for control information transmission according to the R16 NR-V, namely, a resource that is in the control resources for the R16 NR-V and that is multiplexed in a frequency division multiplexing or code division multiplexing manner with the resource for control information transmission according to the R16 NR-V For example, it is assumed that a quantity of CS pairs is 3, only one PRB is required for PSFCH transmission, and each subchannel corresponds to two PRBs. In this case, each subchannel corresponds to six (2*the quantity of CS pairs) resources (including a frequency domain dimension and a code domain dimension). There may be still five, six, or an uncertain quantity of remaining resources that are not used for control information transmission according to the R16 NR-V yet. For example, for unicast of the R16 NR-V, multicast whose feedback manner is NACK only, and the like, there are still five remaining resources that are not used for control information transmission according to the R16 NR-V yet. For another example, for broadcast of the R16 NR-V, there are still six remaining resources that are not used for control information transmission yet. For another example, for multicast whose feedback manner is ACK/NACK, each member terminal in a group needs a dedicated resource to send an ACK or a NACK. In this case, there may be no remaining resource. This depends on a quantity of group members, namely, a group size. For another example, in the resources for control information transmission according to the R16 NR-V, a resource for PSSCH transmission corresponds to more than one resource for PSFCH transmission, and the remaining resource other than the resource actually used for control information transmission according to the R16 NR-V includes a frequency domain resource and/or a code domain resource. Optionally, the control resource for control information transmission according to the R18 NR-V may be preconfigured or be configured by a network device. For example, a PRB set for control information transmission according to the R18 NR-V may be preconfigured based on a bitmap (bitmap) or be configured by a base station.

For ease of description, a set including resources that are in the control resources for the R16 NR-V and that are for control information transmission according to the R16 NR-V is referred to as a first resource set below, and a set including resources that are in the control resources for the R16 NR-V and that are for control information transmission according to the R18 NR-V is referred to as a second resource set below. It should be noted that the second resource set and the first resource set may be configured independently, for example, configured based on different parameters.

Specifically, the method 1700 may include at least some of the following content.

Step 1710: The first terminal determines a third resource from a control resource set.

The control resource set is a set of the control resources in the second resource pool for the R16 NR-V A first resource set in the control resource set is for control information transmission according to the R16 NR-V. The third resource is different from a resource in the first resource set.

In a possible implementation, the third resource and the resource in the first resource set are multiplexed in a frequency division multiplexing manner and/or a code division multiplexing manner.

Optionally, the control resource set is a control resource set for the R16 NR-V, that is, the control resource set is the first resource set. It may be understood as that a control resource set for the R18 NR-V is the same as the control resource set for the R16 NR-V. In this case, the third resource and the resource in the first resource set may be multiplexed in a frequency division multiplexing manner, a code division multiplexing manner, or both a frequency division multiplexing manner and a code division multiplexing manner. In this case, because the first terminal transmits the control information according to the R18 NR-V through a resource that is in the control resource set for the R16 NR-V and that is different from the resource for control information transmission according to the R16 NR-V, spectrum utilization efficiency can be improved.

Optionally, the control resource set includes the first resource set and a second resource set. The first resource set is a control resource set for the R16 NR-V, and the second resource set is a control resource set for the R18 NR-V. The third resource belongs to the second resource set. A resource in the second resource set and the resource in the first resource set are multiplexed in a frequency division multiplexing manner. In other words, the second resource set and the first resource set have no intersection in frequency domain.

For example, the first resource set includes a PRB 0, a PRB 1, and a PRB 2, and the second resource set includes a PRB 5, a PRB 6, and a PRB 7.

Optionally, the control resource set includes the first resource set and a second resource set. The first resource set is a control resource set for the R16 NR-V, and the second resource set is a control resource set for the R18 NR-V. The third resource belongs to the second resource set. A resource in the second resource set and the resource in the first resource set are multiplexed in a frequency division multiplexing manner, or a resource in the second resource set and the resource in the first resource set are the same in frequency domain but different in code domain.

For example, the first resource set includes a PRB 0, a PRB 1, and a PRB 2, and the second resource set includes a PRB 2, a PRB 3, and a PRB 4. In this way, the PRB 2 is available for transmission of both the control information according to the second communication protocol and the control information according to the third communication protocol. For differentiation, in this case, the PRB 2 for the second communication protocol and the PRB 2 for the third communication protocol may be multiplexed in a code division multiplexing manner. The PRB 0 and the PRB 1 in the second resource set and the resource in the second resource set are multiplexed in a frequency division multiplexing manner.

In some implementations, a second resource set in the control resource set and the first resource set are configured independently, a resource in the second resource set is for control information transmission according to the R18 NR-V, and the third resource belongs to the second resource set.

For example, the second resource set is a set of resources for HARQ transmission according to the R18 NR-V. The first resource set is a set of resources for HARQ transmission according to the R16 NR-V. Optionally, the second resource set may be the first resource set. In this case, configuration signaling for the second resource set is signaling for configuring the first resource set. Optionally, the second resource set may be different from the first resource set. In this case, the second resource set is configured based on signaling. A configuration parameter for the second resource set is different from a configuration parameter for the first resource set.

For example, the second resource set is a set of resources for HARQ transmission according to the R18 NR-V. The first resource set is a set of resources for HARQ transmission according to R17 NR-V. A third resource set is a set of resources for transmission of resource conflict indication information according to the R17 NR-V. Optionally, the second resource set may be the first resource set. In this case, configuration signaling for the second resource set is signaling for configuring the first resource set. Optionally, the second resource set may be the third resource set. In this case, configuration signaling for the second resource set is signaling for configuring the third resource set. Optionally, the second resource set may be different from the first resource set and the third resource set. In this case, the second resource set is configured based on signaling. A configuration parameter for the second resource set is different from a configuration parameter for the first resource set and the third resource set.

The first terminal determines the third resource from the control resource set, and needs to determine a time domain resource, a frequency domain resource, and a code domain resource of the third resource. It is assumed that the first terminal knows the following information: a first resource pool and a mapping relationship between the first resource pool and a physical slot; the first resource pool is a shared resource pool with the LTE-V; and a mapping relationship between a second resource pool and a physical slot.

Manner 1

In Manner 1, the resource in the second resource set and the resource in the first resource set may be multiplexed in a frequency division multiplexing manner.

(1) The first terminal determines the time domain resource of the third resource.

It is assumed that the first terminal receives data on a fourth resource. The first terminal may determine the time domain resource of the third resource based on the third resource and a first mapping relationship. The first mapping relationship includes a mapping relationship between a first physical slot and a second physical slot, the first physical slot is a last physical slot (namely, a physical slot in which an end location of the fourth resource is located) included in the fourth resource, the second physical slot is a 1st physical slot that includes a control resource and that meets a first time interval with the first physical slot, and the second physical slot is after the first physical slot. The first time interval may be in a unit of a physical slot. Optionally, a value range of the first time interval may be 2 or 3.

Optionally, the first time interval is preconfigured or predefined, or is configured by the base station.

The physical slot is used herein because a mapping relationship from a PSSCH to a PSFCH in the R16 NR-V is determined based on a logical slot in the second resource pool. The first resource pool for the R18 NR-V also has an index of a logical slot in the first resource pool. As a result, the index of the logical slot in the first resource pool and an index of the logical slot in the second resource pool cannot be directly associated with each other. However, both the first resource pool and the second resource pool have a mapping relationship with the physical slot. Therefore, a mapping relationship from a PSSCH resource in the first resource pool to a PSFCH resource in the second resource pool for the R16 NR-V may be determined based on the physical slot.

For example, it is assumed that the last physical slot included in the fourth resource is a physical slot n. When a minimum processing delay k of PSSCH-to-control information is met, a nearest physical slot that has a PSFCH resource in the second resource pool is selected for control information transmission. A value of the minimum processing delay k of the PSSCH-to-control information may be preconfigured or be configured by the base station.

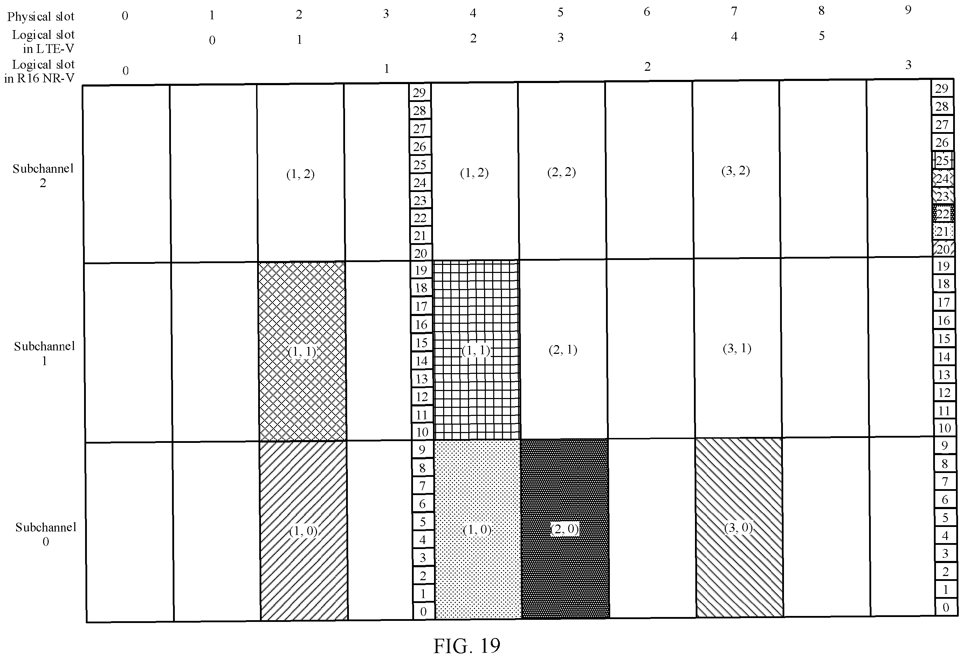

FIG. 19 shows an example of a mapping relationship between a PSSCH resource and a PSFCH resource.

As shown in FIG. 19, it is assumed that k is 2. In slots, namely, a logical slot 0 to a logical slot 5 in LTE-V, there are four slots, namely, the logical slots 1, 2, 3, and 4 in the LTE-V (indexes of corresponding physical slots are 2, 4, 5, and 7 respectively), and the four slots meet that a 1st slot that includes a PSFCH and that is in slots including a slot n+2 and a slot after the slot n+2 is a physical slot 9. In this way, when the last physical slot included in the fourth resource is the physical slot 2, 4, 5, or 7, a corresponding slot for control information transmission is the physical slot 9.

It should be noted that, because the first resource pool is a shared resource pool, whether a subchannel in the first resource pool is used for the LTE-V or the R18 NR-V cannot be determined. Therefore, during mapping from the PSSCH to the PSFCH, a resource for data transmission according to the R18 NR-V cannot be independently mapped to a PSFCH resource for the R16 NR-V. Therefore, all resources in the first resource pool (including the resource for data transmission according to the LTE-V or the resource for data transmission according to the R18 NR-V) need to be mapped to PSFCH resources for the R16 NR-V.

(2) The first terminal determines the frequency domain resource of the third resource.

It is assumed that the first terminal receives data on a fourth resource. The first terminal determines the frequency domain resource of the third resource based on the fourth resource and a second mapping relationship. The second mapping relationship includes a mapping relationship between a frequency domain resource of the fourth resource and the frequency domain resource of the third resource.

Optionally, the second mapping relationship may be determined in the following manner. Specifically, a PRB set (the second resource set) is preconfigured in the first terminal or configured by a base station for the first terminal. The first terminal performs PSFCH transmission on a PRB in the PRB set. The PRB set herein belongs to the first type of remaining resource. A PRB of a feedback resource allocated by the first terminal to the data transmitted on a resource corresponding to a logical slot i and a subchannel j meets the following interval:

$$\left[\left(i + j \cdot N_{PSSCH}^{PSFCH}\right) \cdot M_{subch,slot}^{PSFCH}, \left(i + 1 + j \cdot N_{PSSCH}^{PSFCH}\right) \cdot M_{subch,slot}^{PSFCH} - 1\right]$$

$N_{PSSCH}^{PSFCH}$ is a quantity of PSSCH slots associated with a PSFCH slot, $M_{subch,slot}^{PSFCH} = M_{PRB,set}^{PSFCH} / \left(N_{subch} \cdot N_{PSSCH}^{PSFCH}\right)$ is a quantity of PRBs corresponding to each subchannel, $M_{PRB,set}^{PSFCH}$ is a quantity of PRBs in the PRB set, $N_{subch}$ is a quantity of subchannels, $0 \le i < N_{PSSCH}^{PSFCH}$, and $0 \le j < N_{subch}$.

For example, both the resource in the second resource set and the resource in the first resource set meet a frequency division multiplexing relationship. In this case, in a PRB set corresponding to the foregoing interval, a PRB used in the third resource satisfies the following formula:

$$(P_{\text{ID}} + M_{\text{ID}}) mod R_{\text{PRB, CS}}^{\text{PSFCH}}$$ , where $R_{\text{PRB, CS}}^{\text{PSFCH}} = N_{\text{type}}^{\text{PSFCH}} \cdot M_{\text{subch, slot}}^{\text{PSFCH}} \cdot N_{\text{CS}}^{\text{PSFCH}}$ , and $N_{\text{CS}}^{\text{PSFCH}}$ is a CS logarithm. A value of $N_{\text{type}}^{\text{PSFCH}}$ is 1 or $N_{\text{subch}}^{\text{PSSCH}}$ . When a PSFCH resource is associated with a start subchannel of a

PSSCH resource, $N_{\text{type}}^{\text{PSFCH}} = 1$; or when a PSFCH resource is associated with all subchannels included in a PSSCH

resource, $N_{\text{type}}^{\text{PSFCH}} = N_{\text{subch}}^{\text{PSSCH}}$ . $P_{\text{ID}}$ is a physical layer source ID included in second-level SCI for scheduling a PSSCH. When a value of a cast type indication field in second-level SCI for scheduling data is "01", $M_{\text{ID}}$ is an identifier that is indicated by a higher layer and that is of a terminal that receives the data; otherwise, $M_{\text{ID}} = 0$.

When the control information is resource conflict indication information, $M_{\text{ID}} = 0$. $P_{\text{ID}}$ is a physical layer source ID included in second-level SCI of a terminal that is indicated to have a conflict in reserved resources and to which the resource conflict indication information is provided.

When the resource in the second resource set overlaps with the resource in the first resource set, a PRB used in the third resource satisfies the following formula: $(P_{\text{ID}} + M_{\text{ID}} + \Delta) mod R_{\text{PRB, CS}}^{\text{PSFCH}}$ , where

$R_{\text{PRB, CS}}^{\text{PSFCH}} = N_{\text{type}}^{\text{PSFCH}} \cdot M_{\text{subch, slot}}^{\text{PSFCH}} \cdot N_{\text{CS}}^{\text{PSFCH}}$ , and $N_{\text{CS}}^{\text{PSFCH}}$ is a CS logarithm. A value of $N_{\text{type}}^{\text{PSFCH}}$ is 1 or $N_{\text{subch}}^{\text{PSSCH}}$

. When a PSFCH resource is associated with a start subchannel of a PSSCH resource, $N_{\text{type}}^{\text{PSFCH}} = 1$; or when a PSFCH resource is associated with all subchannels included in a PSSCH resource, $N_{\text{type}}^{\text{PSFCH}} = N_{\text{subch}}^{\text{PSSCH}}$ . $P_{\text{ID}}$ is a physical layer source ID included in second-level SCI for scheduling a PSSCH. When a value of a cast type indication field in second-level SCI for scheduling data is "01", $M_{\text{ID}}$ is an identifier that is indicated by a higher layer and that is of a terminal that receives the data; otherwise, $M_{\text{ID}} = 0$. $\Delta$ is a constant, and a value range of $\Delta$ is $R_{\text{PRB, CS}}^{\text{PSFCH}} - 1$ . For example, $\Delta = 1$.

In this case, $\Delta$ can ensure that the third resource and a resource for HARQ transmission according to the third communication protocol are multiplexed in a frequency division multiplexing or code division multiplexing manner. This avoids a resource conflict.

(3) The first terminal determines the code domain resource of the third resource.

In a possible implementation, the first terminal determines the code domain resource of the third resource based on a first CS pair table, where the first CS pair table is a CS pair table for the R16 NR-V.

The first CS pair table may be shown in Table 3.

**Table 3**

| $N_{CS}^{PSFCH}$ | $m_0$ | | | | | |
|---|---|---|---|---|---|---|
| | CS pair index 0 | CS pair index 1 | CS pair index 2 | CS pair index 3 | CS pair index 4 | CS pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

Specifically, in consideration of a code domain dimension, a quantity $R_{PRB,CS}^{PSFCH}$ of PRBs allocated by the first terminal to a slot i and a subchannel j satisfies:

$$R_{PRB,CS}^{PSFCH} = N_{type}^{PSFCH} \cdot M_{subch,slot}^{PSFCH} \cdot N_{CS}^{PSFCH}$$

$N_{CS}^{PSFCH}$ is a CS logarithm, and $N_{type}^{PSFCH}$ indicates whether a resource available for HARQ information transmission is determined based on an initial subchannel occupied by a PSSCH, or a resource available for control information transmission is determined based on all subchannels occupied by a PSSCH, that is, $N_{type}^{PSFCH} = 1$ or

$N_{type}^{PSFCH} = N_{subch}^{PSSCH}$. $N_{CS}^{PSFCH}$ meets the foregoing table 1.

Manner 2

In Manner 2, the resource in the second resource set and the resource in the first resource set may be multiplexed in both a frequency division multiplexing manner and a code division multiplexing manner, or may be multiplexed only in the code division multiplexing manner.

For manners in which the first terminal determines the time domain resource and the frequency domain resource of the third resource, refer to Manner 1. Details are not described herein again.

The following describes a manner in which the first terminal determines the code domain resource of the third resource.

Because the R18 NR-V cannot learn whether transmission according to the R16 NR-V is unicast, multicast, or broadcast, the R18 NR-V cannot learn whether there is a remaining resource in PSFCH resources for HARQ information transmission according to the R16 NR-V. If the R16 NR-V sends an occupation status of the PSFCH resource to the R18 NR-V, the R18 NR-V determines, based on the obtained information, the resource for HARQ transmission information. Due to a transmission delay between the R18 NR-V and the R16 NR-V, the R18 NR-V may not work or work inefficiently. In this case, in this application, different code domain resources may be allocated to the R18 NR-V and the R16 NR-V, to prevent the R18 NR-V from affecting control information transmission according to the R16 NR-V, and improve transmission reliability of the control information.

Specifically, the first terminal may determine the code domain resource of the third resource based on a second CS pair table. The second CS pair table may be preconfigured or be configured by a base station, and the second CS table is different from the first CS table. Optionally, a CS pair corresponding to a first CS logarithm in the second CS pair table is different from a CS pair corresponding to the first CS logarithm in the first CS pair table used for the R16 NR-V. In other words, corresponding to a same CS logarithm, the R18 NR-V and the R16 NR-V correspond to different CS pairs.

In some implementations, a maximum quantity of CS logarithms for the R18 NR-V is W. W may be configured based on RRC (configured by a network device based on an RRC parameter), predefined, or preconfigured. For example, W is 6 or 3.

A CS pair for the R18 NR-V includes at least one of the following cases:

(1) The CS logarithm is 1: A first CS pair is used for the R16 NR-V, and the first CS pair indicates a value 1 and a value 2 (the value 2 is a CS value paired with the value 1). A second CS pair is used for the R18 NR-V, and the second CS pair indicates a value 3 and a value 4 (the value 4 is a CS value paired with the value 3). The value 1 and the value 3 are different.

For example, the CS pair is (A, B), where an index of the CS pair may indicate only A, and B is a CS value paired with A.

For example, when the value 1 is 0, and the value 3 may be any one of 2, 3, 4, and 5. For example, the first CS pair is (0, 6), the value 1 is 0, and the value 2 is 6; and the second CS pair is (3, 9), that is, the value 3 is 3, and the value 4 is 9. In this case, orthogonality between the first CS pair and the second CS pair is the best, and interference between transmission according to the R18 NR-V and transmission according to the R16 NR-V is small.

For another example, the first CS pair is (0, 6), and the second CS pair is (2, 8). For another example, the first CS pair is (0, 6), and the first CS pair is (4, 10). For another example, the first CS pair is (0, 6), and the first CS pair is (5, 11). In this case, specific orthogonality still exists between the first CS pair and the second CS pair, and interference between transmission according to the R18 NR-V and transmission according to the R16 NR-V is reduced as much as possible.

(2) The CS logarithm is 2: A first CS pair is used for the R16 NR-V, and the first CS pair indicates a value 5 (a value of a corresponding paired CS is 6) and a value 7 (a value of a corresponding paired CS is 8). A second CS pair is used for the R18 NR-V, and the second CS pair indicates a value 9 (a value of a corresponding paired CS is 10) and a value 11 (a value of a corresponding paired CS is 12). The values 5 and 7 are different from the values 9 and 11.

For example, the first CS pair is (0, 6) and (3, 9), and the second CS pair is any two of (1, 7), (2, 8), (4, 10), and (5, 11). For example, the first CS pair is (0, 6) and (3, 9), and the second CS pair is (1, 7) and (2, 8). Alternatively, the first CS pair is (0, 6) and (3, 9), and the second CS pair is (2, 8) and (4, 10). Alternatively, the first CS pair is (0, 6) and (3, 9), and the second CS pair is (4, 10) and (5, 11). Alternatively, the first CS pair is (0, 6) and (3, 9), and the second CS pair is (2, 8) and (5, 11). Alternatively, the first CS pair is (0, 6) and (3, 9), and the second CS pair is (1, 7) and (5, 11). Alternatively, the first CS pair is (0, 6) and (3, 9), and the second CS pair is (1, 7) and (4, 10). In this case, specific orthogonality still exists between the first CS pair and the second CS pair, and interference between transmission according to the R18 NR-V and transmission according to the R16 NR-V is reduced as much as possible.

(3) The CS logarithm is 3: A first CS pair is used for the R16 NR-V, and the first CS pair indicates a value 12 (a value of a corresponding paired CS is 13), a value 14 (a value of a corresponding paired CS is 15), and a value 16 (a value of a corresponding paired CS is 17). A second CS pair is used for the R18 NR-V, and the second CS pair indicates a value 17 (a value of a corresponding paired CS is 18), a value 19 (a value of a corresponding paired CS is 20), and a value 21 (a value of a corresponding paired CS is 22). The values 12, 14, and 16 are different from the values 17, 19, and 21.

For example, the first CS pair is (0, 6), (2, 8), and (4, 10), and the second CS pair is (1, 7), (3, 9), and (5, 11). In this case, specific orthogonality still exists between the first CS pair and the second CS pair, and interference between transmission according to the R18 NR-V and transmission according to the R16 NR-V is reduced as much as possible.

Optionally, the CS pair may be configured based on RRC, predefined, or preconfigured.

There are many implementations of the second CS pair table. This is not limited in this application. For example, the second CS pair table may include at least one entry in Table 4 to Table 6 (for example, the second CS pair table may include at least one row in Table 4 to Table 6). Table 4, Table 5, and Table 6 are examples of CS pair tables that may be used for the R18 NR-V.

**Table 4**

| $N_{CS}^{PSFCH}$ | $m_0^{'}(m_0+\Delta)$ | | | | | |
|---|---|---|---|---|---|---|
| | CS pair index 0 | CS pair index 1 | CS pair index 2 | CS pair index 3 | CS pair index 4 | CS pair index 5 |
| 1 | 3 | - | - | - | - | - |
| 2 | 1 | 4 | - | - | - | - |
| 3 | 1 | 3 | 5 | - | - | - |

**Table 5**

| $N_{CS}^{PSFCH}$ | $m_0^{'}(m_0+\Delta)$ | | | | | |
|---|---|---|---|---|---|---|
| | CS pair index 0 | CS pair index 1 | CS pair index 2 | CS pair index 3 | CS pair index 4 | CS pair index 5 |
| 1 | 3 | - | - | - | - | - |
| 2 | 2 | 5 | - | - | - | - |
| 3 | 1 | 3 | 5 | - | - | - |

It should be noted that, in Table 4 and Table 5, two values of a CS pair corresponding to a CS logarithm being 2 may also exist in a same table. As shown in Table 6, a value 4 of a CS logarithm may be used to implicitly indicate a value corresponding to a case in which the CS logarithm is actually 2.

**Table 6**

| $N_{CS}^{PSFCH}$ | $m_0'(m_0 + \Delta)$ | | | | | |
|---|---|---|---|---|---|---|
| | CS pair index 0 | CS pair index 1 | CS pair index 2 | CS pair index 3 | CS pair index 4 | CS pair index 5 |
| 1 | 3 | - | - | - | - | - |
| 2 | 1 | 4 | - | - | - | - |
| 3 | 1 | 3 | 5 | - | - | - |
| 4 | 2 | 5 | - | - | - | - |

Optionally, the second CS pair table may be configured for the first terminal in a manner of predefining or preconfiguring, or configuring $m_0'$ or $\Delta$ by the base station, or the second CS pair table may be directly configured for the first terminal in a manner of predefining or preconfiguring, or configuring the CS pair table by the base station. This is not limited in this application.

For example, it is assumed that a CS logarithm configured for a terminal is 3. According to Table 3, a terminal of the R16 NR-V uses CS pairs 0, 2, and 4. According to Table 4, Table 5, or Table 6, a terminal of the R18 NR-V uses CS pairs 1, 3, and 5. It is assumed that a CS logarithm configured for a terminal is 2. According to Table 3, a terminal of the R16 NR-V uses CS pairs 0 and 3. According to Table 4 or 6, a terminal of the R18 NR-V uses CS pairs 1 and 4, or according to Table 5, the terminal of the R18 NR-V uses CS pairs 2 and 5.

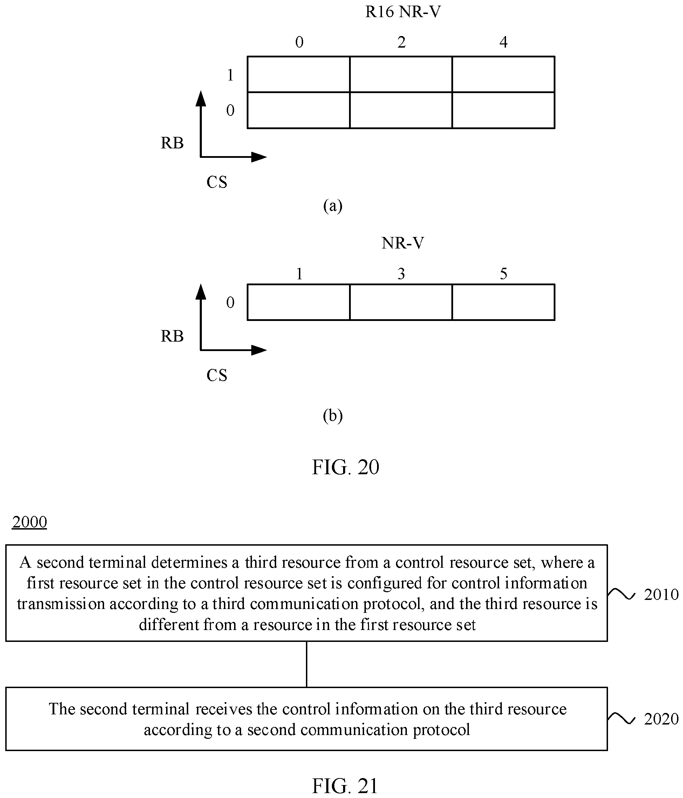

FIG. 20 shows examples of a frequency domain resource and a code domain resource that correspond to a subchannel.

As shown in (a) of FIG. 20, if 12 subchannels for R16 NR-V are mapped to 24 PRBs, and a CS logarithm is 3 (0, 2, 4), each subchannel corresponds to six candidate PSFCH resources.

As shown in (b) of FIG. 20, if 24 subchannels for R18 NR-V are mapped to 24 PRBs, and a CS logarithm is 3 (1, 3, 5), each subchannel corresponds to three candidate PSFCH resources.

Manner 3

In Manner 3, the resource in the second resource set and the resource in the first resource set may be multiplexed only in a frequency division multiplexing manner, or may be multiplexed only in a code division multiplexing manner, or may be multiplexed in both a frequency division multiplexing manner and a code division multiplexing manner.

For manners in which the first terminal determines the time domain resource and the frequency domain resource of the third resource, refer to Manner 1. Details are not described herein again.

The following describes a manner in which the first terminal determines the code domain resource of the third resource.

Specifically, the first terminal determines, based on the frequency domain resource of the third resource, to determine the code domain resource of the third resource based on a first CS pair table or a second CS pair table. For example, when a frequency domain resource of a second resource belongs to a PRB set for control information transmission according to the R16 NR-V, the first terminal determines the code domain resource of the third resource based on the second CS pair table. For another example, when a frequency domain resource of a second resource is not configured as a PRB set for control information transmission according to the R16 NR-V, the first terminal determines the code domain resource of the third resource based on the first CS pair table.

For descriptions of the first CS pair table and the second CS pair table, refer to Manner 2. Details are not described herein again.

Step 1720: The first terminal sends the control information on the third resource according to the R18 NR-V.

In the method 1700, the terminal of the R18 NR-V may receive the data through the resource in the first resource pool, and send the control information through the remaining resource in the control resources for the R16 NR-V. In this way, according to the foregoing technical solution, when the resource pool for the R18 NR-V includes a same time-frequency resource set as the LTE-V, sending of the control information according to the R18 NR-V can be implemented, thereby helping improve data transmission reliability according to the R18 NR-V. In addition, because the remaining resource in the control resources for the R16 NR-V is for sending the control information according to the R18 NR-V, spectrum utilization efficiency can be improved.

FIG. 21 is a diagram of a control information receiving method 2000 according to this application. The method 2000 may be applied to the network architecture shown in FIG. 1, but this is not limited. The method 2000 may be performed by a second terminal, or may be performed by a module or a unit used in the second terminal. For ease of description, the second terminal and the module or unit used in the second terminal are collectively referred to as the second terminal below.

In the method 2000, a terminal of R18 NR-V may send data through a resource in a first resource pool, and receive control information through a control resource in a second resource pool for R16 NR-V. Specifically, the R18 NR-V may receive the control information by using a remaining resource in control resources for the R16 NR-V. For descriptions of the remaining resource, refer to the descriptions in the method 1700. Details are not described herein again.

The method 2000 may include at least some of the following content.

Step 2010: The second terminal determines a third resource from a control resource set.

Step 2020: The second terminal receives the control information on the third resource according to the R18 NR-V.

A manner in which the second terminal determines the third resource from the control resource set is the same as the manner in which the first terminal determines the third resource from the control resource set. For details, refer to the related descriptions of the foregoing step 1710. Details are not described herein again.

In the method 2000, the terminal of the R18 NR-V may send the data through the resource in the first resource pool, and receive the control information through the remaining resource in the control resources for the R16 NR-V. In this way, according to the foregoing technical solution, when the resource pool for the R18 NR-V includes a same time-frequency resource set as LTE-V, receiving of the control information according to the R18 NR-V can be implemented, thereby helping improve data transmission reliability according to the R18 NR-V. In addition, because the remaining resource in the control resources for the R16 NR-V is for receiving the control information according to the R18 NR-V, spectrum utilization efficiency can be improved.

It should be noted that the method 1700 and the method 2000 may be implemented separately, or may be implemented together in a proper manner.

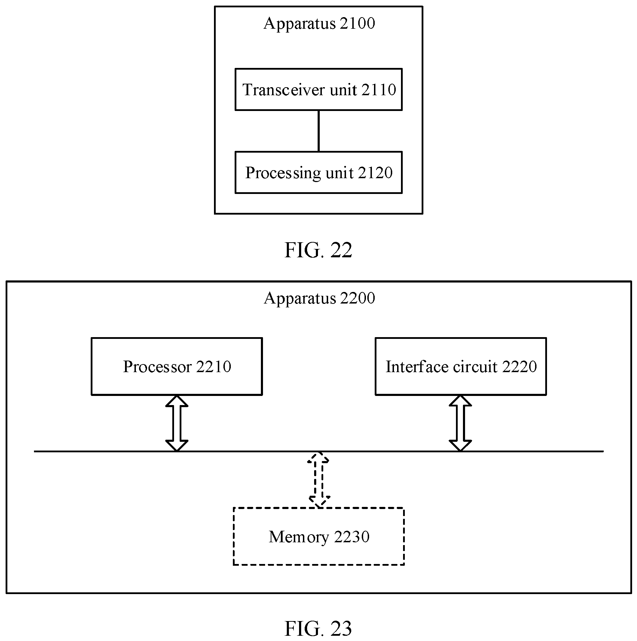

The foregoing describes in detail the methods provided in this application with reference to FIG. 10 to FIG. 21. The following describes in detail apparatus embodiments of this application with reference to FIG. 22 and FIG. 23. It may be understood that, to implement functions in the foregoing embodiments, an apparatus in FIG. 22 or FIG. 23 includes corresponding hardware structures and/or software modules for performing the functions. A person skilled in the art should be easily aware that, in combination with units and method steps of the examples described in embodiments disclosed in this application, this application may be implemented by hardware or a combination of hardware and computer software. Whether a function is performed by hardware or hardware driven by computer software depends on a particular application scenario and design constraint of the technical solutions.

FIG. 22 and FIG. 23 are diagrams of structures of possible apparatuses according to embodiments of this application. These apparatuses may be configured to implement functions of the terminals in the foregoing method embodiments, and therefore can also implement the beneficial effects of the foregoing method embodiments.

As shown in FIG. 22, an apparatus 2100 includes a transceiver unit 2110 and a processing unit 2120.

When the apparatus 2100 is configured to implement a function of the first terminal in the foregoing method embodiments, the transceiver unit 2110 is configured to obtain first information, where the first information is for determining a resource occupied by transmission according to a first communication protocol. The processing unit 2120 is configured to determine, based on the first information, that a first resource is an available resource. The transceiver unit 2110 is further configured to send control information on the first resource according to a second communication protocol.

Optionally, the transceiver unit 2110 is further configured to obtain second information, where the second information is used to indicate the first terminal to send the control information.

Optionally, the processing unit 2120 is specifically configured to: when a candidate resource in which the first resource is located fails to meet a preset condition, determine that the first resource is the available resource. The preset condition is that the candidate resource overlaps with the resource occupied by transmission according to the first communication protocol and signal quality is lower than a first threshold. The candidate resource is a candidate resource used when the first terminal selects a resource for data transmission, the candidate resource is L consecutive frequency domain units in a first time unit, and L is an integer greater than or equal to 1.

Optionally, the processing unit 2120 is specifically configured to: when none of candidate resources included in a first time unit in which the first resource is located meets a preset condition, determine, by the first terminal, that the first resource is the available resource. The preset condition is that the candidate resource overlaps with the resource occupied by transmission according to the first communication protocol and signal quality is lower than a first threshold. The candidate resource is a candidate resource used when the first terminal selects a resource for data transmission, the candidate resource is L consecutive frequency domain units in the first time unit, and L is an integer greater than or equal to 1.

Optionally, the processing unit 2120 is specifically configured to: when a candidate resource in which the first resource is located fails to meet a preset condition, determine, by the first terminal, that the first resource is the available resource. The preset condition is that the candidate resource overlaps with the resource occupied by transmission according to the first communication protocol and signal quality is lower than a second threshold. The candidate resource is a candidate resource used when the first terminal selects a resource for control information transmission, the candidate resource is L consecutive frequency domain units in a first time unit, and L is an integer greater than or equal to 1.

Optionally, the processing unit 2120 is specifically configured to: when none of candidate resources included in a first time unit in which the first resource is located meets a preset condition, determine, by the first terminal, that the first resource is the available resource. The preset condition is that the candidate resource overlaps with the resource occupied by transmission according to the first communication protocol and signal quality is lower than a second threshold. The candidate resource is a candidate resource used when the first terminal selects a resource for control information transmission, the candidate resource is L consecutive frequency domain units in the first time unit, and L is an integer greater than or equal to 1.

Optionally, the candidate resource is L consecutive subchannels in a first slot.

Optionally, the candidate resource is L consecutive subchannels on P symbols in a first slot, and P is an integer greater than or equal to 1.

Optionally, the second threshold is from an independently configured threshold table or threshold set; or the second threshold is an absolute threshold.

Optionally, the processing unit 2120 is specifically configured to: when the first resource fails to meet a preset condition, determine, by the first terminal, that the first resource is the available resource. The preset condition is that the first resource overlaps with the resource occupied by transmission according to the first communication protocol and signal quality is lower than a third threshold.

Optionally, the third threshold is from an independently configured threshold table or threshold set; or the third threshold is an absolute threshold.

Optionally, the signal quality is represented by at least one of the following information: RSRP, an RSSI, an SNR, or an SINR.

Optionally, the first resource is not for data transmission.

Optionally, the first information includes at least one of the following information: SCI or a measured value of signal quality corresponding to the SCI, where the SCI includes resource indication information for transmission according to the first communication protocol and/or a resource reserved field for transmission according to the first communication protocol.

Optionally, resource pools for the first communication protocol and the second communication protocol use a same time-frequency resource.

Optionally, the control information includes at least one of the following: HARQ information, CSI feedback information, or resource conflict indication information.

Optionally, the control information is ACK information fed back by the first terminal to a second terminal when the first terminal successfully decodes first data from the second terminal; or the control information is NACK information fed back by the first terminal to a second terminal when the first terminal fails to decode first data from the second terminal.

When the apparatus 2100 is configured to implement a function of the second terminal in the foregoing method embodiments, the transceiver unit 2110 is configured to obtain first information, where the first information is used to indicate a resource occupied by transmission according to a first communication protocol. The processing unit 2120 is configured to: determine, based on the first information, that a first resource is an available resource, where the first resource is a resource for control information transmission according to a second communication protocol; and determine a second resource based on the first resource, where the second resource is a resource for transmission of first data according to the second communication protocol. The transceiver unit 2110 is further configured to send the first data to a first terminal on the second resource according to the second communication protocol.

Optionally, the transceiver unit 2110 is further configured to send second information to the first terminal, where the second information is used to indicate to receive control information sent by the first terminal, and the control information includes at least one of the following: HARQ information, CSI feedback information, or resource conflict indication information.

Optionally, the second resource corresponding to the first resource is a resource in a first candidate resource set, and the first candidate resource set is a candidate resource set used when the second terminal selects a resource for data transmission.

Optionally, the processing unit 2120 is specifically configured to: determine a second candidate resource set, where the second candidate resource set is a candidate resource set used when the second terminal selects a resource for data transmission; and determine the second resource from the second candidate resource set based on the first resource.

Optionally, the processing unit 2120 is specifically configured to: when a candidate resource in which the first resource is located fails to meet a preset condition, determine that the first resource is the available resource. The preset condition is that the candidate resource overlaps with the resource occupied by transmission according to the first communication protocol and signal quality is lower than a first threshold. The candidate resource is a candidate resource used when the second terminal selects a resource for data transmission, the candidate resource is L consecutive frequency domain units in a first time unit, and L is an integer greater than or equal to 1.

Optionally, the processing unit 2120 is specifically configured to: when none of candidate resources included in a first time unit in which the first resource is located meets a preset condition, determine that the first resource is the available resource. The preset condition is that the candidate resource overlaps with the resource occupied by transmission according to the first communication protocol and signal quality is lower than a first threshold. The candidate resource is a candidate resource used when the second terminal selects a resource for data transmission, the candidate resource is L consecutive frequency domain units in the first time unit, and L is an integer greater than or equal to 1.

Optionally, the processing unit 2120 is specifically configured to: when a candidate resource in which the first resource is located fails to meet a preset condition, determine that the first resource is the available resource. The preset condition is that the candidate resource overlaps with the resource occupied by transmission according to the first communication protocol and signal quality is lower than a second threshold. The candidate resource is a candidate resource used when a resource for control information transmission is selected, the candidate resource is L consecutive frequency domain units in a first time unit, and L is an integer greater than or equal to 1.

Optionally, the processing unit 2120 is specifically configured to: when none of candidate resources included in a first time unit in which the first resource is located meets a preset condition, determine that the first resource is the available resource. The preset condition is that the candidate resource overlaps with the resource occupied by transmission according to the first communication protocol and signal quality is lower than a second threshold. The candidate resource is a candidate resource used when a resource for control information transmission is selected, the candidate resource is L consecutive frequency domain units in the first time unit, and L is an integer greater than or equal to 1.

Optionally, the candidate resource is L consecutive subchannels in a first slot.

Optionally, the candidate resource is L consecutive subchannels on P symbols in a first slot, and P is an integer greater than or equal to 1.

Optionally, the second threshold is from an independently configured threshold table or threshold set; or the second threshold is an absolute threshold.

Optionally, the processing unit 2120 is specifically configured to: when the first resource fails to meet a preset condition, determine that the first resource is the available resource. The preset condition is that the first resource overlaps with the resource occupied by transmission according to the first communication protocol and signal quality is lower than a third threshold.

Optionally, the third threshold is from an independently configured threshold table or threshold set; or the third threshold is an absolute threshold.

Optionally, the signal quality is represented by at least one of the following information: RSRP, an RSSI, an SNR, or an SINR.

Optionally, the first resource is not for data transmission.

Optionally, the first information includes at least one of the following information: SCI or a measured value of signal quality corresponding to the SCI, where the SCI includes resource indication information for transmission according to the first communication protocol and/or a resource reserved field for transmission according to the first communication protocol.

Optionally, the first communication protocol and the second communication protocol use a same time-frequency resource set.

Alternatively, when the apparatus 2100 is configured to implement a function of the second terminal in the foregoing method embodiments, the transceiver unit 2110 is configured to: send first data on a second resource according to a second communication protocol; send second information corresponding to the first data to a first terminal, where the second information is used to indicate the first terminal to send control information; and obtain first information, where the first information is used to indicate a resource occupied by transmission according to a first communication protocol. The processing unit 2120 is configured to determine, based on the first information, that a first resource is an available resource. The transceiver unit 2110 is further configured to receive the control information on the first resource according to the second communication protocol.

Optionally, the processing unit 2120 is specifically configured to: when a candidate resource in which the first resource is located fails to meet a preset condition, determine that the first resource is the available resource. The preset condition is that the candidate resource overlaps with the resource occupied by transmission according to the first communication protocol and signal quality is lower than a first threshold. The candidate resource is a candidate resource used when the second terminal selects a resource for data transmission, the candidate resource is L consecutive frequency domain units in a first time unit, and L is an integer greater than or equal to 1.

Optionally, the processing unit 2120 is specifically configured to: when none of candidate resources included in a first time unit in which the first resource is located meets a preset condition, determine that the first resource is the available resource. The preset condition is that the candidate resource overlaps with the resource occupied by transmission according to the first communication protocol and signal quality is lower than a first threshold. The candidate

EP 4 459 919 A1

resource is a candidate resource used when the second terminal selects a resource for data transmission, the candidate resource is L consecutive frequency domain units in the first time unit, and L is an integer greater than or equal to 1.

Optionally, the processing unit 2120 is specifically configured to: when a candidate resource in which the first resource is located fails to meet a preset condition, determine that the first resource is the available resource. The preset condition is that the candidate resource overlaps with the resource occupied by transmission according to the first communication protocol and signal quality is lower than a second threshold. The candidate resource is a candidate resource used when a resource for control information transmission is selected, the candidate resource is L consecutive frequency domain units in a first time unit, and L is an integer greater than or equal to 1.

Optionally, the processing unit 2120 is specifically configured to: when none of candidate resources included in a first time unit in which the first resource is located meets a preset condition, determine that the first resource is the available resource. The preset condition is that the candidate resource overlaps with the resource occupied by transmission according to the first communication protocol and signal quality is lower than a second threshold. The candidate resource is a candidate resource used when a resource for control information transmission is selected, the candidate resource is L consecutive frequency domain units in the first time unit, and L is an integer greater than or equal to 1.

Optionally, the candidate resource is L consecutive subchannels in a first slot.

Optionally, the candidate resource is L consecutive subchannels on P symbols in a first slot, and P is an integer greater than or equal to 1.

Optionally, the second threshold is from an independently configured threshold table or threshold set; or the second threshold is an absolute threshold.

Optionally, the processing unit 2120 is specifically configured to: when the first resource fails to meet a preset condition, determine that the first resource is the available resource. The preset condition is that the first resource overlaps with the resource occupied by transmission according to the first communication protocol and signal quality is lower than a third threshold.

Optionally, the third threshold is from an independently configured threshold table or threshold set; or the third threshold is an absolute threshold.

Optionally, the signal quality is represented by at least one of the following information: RSRP, an RSSI, an SNR, or an SINR.

Optionally, the first resource is not for data transmission.

Optionally, the first information includes at least one of the following information: SCI or a measured value of signal quality corresponding to the SCI, where the SCI includes resource indication information for transmission according to the first communication protocol and/or a resource reserved field for transmission according to the first communication protocol.

Optionally, the first communication protocol and the second communication protocol use a same time-frequency resource set.

Alternatively, when the apparatus 2100 is configured to implement a function of the first terminal in the foregoing method embodiments, the processing unit 2120 is configured to determine a third resource from a control resource set. The transceiver unit 2110 is configured to send control information on the third resource according to a second communication protocol. A first resource set in the control resource set is configured for control information transmission according to a third communication protocol, and the third resource is different from a resource in the first resource set.

Optionally, the third resource and the resource in the first resource set are multiplexed in a frequency division multiplexing manner and/or a code division multiplexing manner.

Optionally, the transceiver unit 2110 is further configured to receive data on a fourth resource. The processing unit 2120 is specifically configured to determine a time domain resource of the third resource based on the fourth resource and a first mapping relationship. The first mapping relationship includes a mapping relationship between a first physical slot and a second physical slot, the first physical slot is a last physical slot included in the fourth resource, the second physical slot is a 1st physical slot that includes a control resource and that meets a first time interval with the first physical slot, and the second physical slot is after the first physical slot.

Optionally, the first time interval is preconfigured or predefined, or is configured by a base station.

Optionally, the transceiver unit 2110 is further configured to receive data on a fourth resource. The processing unit 2120 is specifically configured to determine a frequency domain resource of the third resource based on the fourth resource and a second mapping relationship, where the second mapping relationship includes a mapping relationship between a frequency domain resource of the fourth resource and the frequency domain resource of the third resource.

Optionally, the third resource and the resource in the first resource set are multiplexed in a frequency division multiplexing manner. The processing unit 2120 is specifically configured to determine a code domain resource of the third resource based on a first CS pair table, where the first CS pair table is a CS pair table for the third communication protocol.

Optionally, the processing unit 2120 is specifically configured to determine a code domain resource of the third resource based on a second cyclic shift CS pair table, where the second CS pair table is different from a first CS pair

56

table for the third communication protocol.

Optionally, the processing unit 2120 is specifically configured to: when determining that the third resource and the resource in the first resource set are multiplexed in a frequency division multiplexing manner, determine a code domain resource of the third resource based on a first CS pair table; or when determining that the third resource and the resource in the first resource set are multiplexed in a code division multiplexing manner, determine a code domain resource of the third resource based on a second CS pair table, where the second CS pair table is different from a first CS pair table for the third communication protocol.

Optionally, a CS pair corresponding to a first CS logarithm in the second CS pair table is different from a CS pair corresponding to a first CS logarithm in the first CS pair table.

Optionally, the second CS pair table includes at least one entry in the following tables:

| $N_{CS}^{PSFCH}$ | CS pair index 0 | CS pair index 1 | CS pair index 2 | CS pair index 3 | CS pair index 4 | CS pair index 5 |
|---|---|---|---|---|---|---|
| 1 | 3 | - | - | - | - | - |
| 2 | 1 | 4 | - | - | - | - |
| 3 | 1 | 3 | 5 | - | - | - |

or

| $N_{CS}^{PSFCH}$ | CS pair index 0 | CS pair index 1 | CS pair index 2 | CS pair index 3 | CS pair index 4 | CS pair index 5 |
|---|---|---|---|---|---|---|
| 1 | 3 | - | - | - | - | - |
| 2 | 2 | 5 | - | - | - | - |
| 3 | 1 | 3 | 5 | - | - | - |

or

| $N_{CS}^{PSFCH}$ | CS pair index 0 | CS pair index 1 | CS pair index 2 | CS pair index 3 | CS pair index 4 | CS pair index 5 |
|---|---|---|---|---|---|---|
| 1 | 3 | - | - | - | - | - |
| 2 | 1 | 4 | - | - | - | - |
| 3 | 1 | 3 | 5 | - | - | - |
| 4 | 2 | 5 | - | - | - | - |

$N_{CS}^{PSFCH}$ is a CS logarithm.

Optionally, a second resource set and the first resource set are configured independently, a resource in the second resource set is for control information transmission according to the second communication protocol, and the third resource belongs to the second resource set.

Optionally, the control information includes at least one of the following: HARQ information, CSI feedback information, or resource conflict indication information.

Alternatively, when the apparatus 2100 is configured to implement a function of the second terminal in the foregoing method embodiments, the processing unit 2120 is configured to determine a third resource from a control resource set. The transceiver unit 2110 is configured to receive control information on the third resource according to a second communication protocol. A first resource set in the control resource set is configured for control information transmission according to a third communication protocol, and the third resource is different from a resource in the first resource set.

Optionally, the third resource and the resource in the first resource set are multiplexed in a frequency division multiplexing manner and/or a code division multiplexing manner.

Optionally, the transceiver unit 2110 is further configured to send data on a fourth resource. The processing unit 2120 is specifically configured to determine a time domain resource of the third resource based on the fourth resource and a first mapping relationship. The first mapping relationship includes a mapping relationship between a first physical slot and a second physical slot, the first physical slot is a last physical slot included in the fourth resource, the second physical slot is a 1st physical slot that includes a control resource and that meets a first time interval with the first physical slot, and the second physical slot is after the first physical slot.

Optionally, the first time interval is preconfigured or predefined, or is configured by a base station.

Optionally, the transceiver unit 2110 is further configured to send data on a fourth resource. The processing unit 2120 is specifically configured to determine a frequency domain resource of the third resource based on the fourth resource and a second mapping relationship, where the second mapping relationship includes a mapping relationship between a frequency domain resource of the fourth resource and the frequency domain resource of the third resource.

Optionally, the third resource and the resource in the first resource set are multiplexed in a frequency division multiplexing manner, and the processing unit 2120 is specifically configured to determine a code domain resource of the third resource based on a first cyclic shift CS pair table, where the first CS pair table is a CS pair table for the third communication protocol.

Optionally, the processing unit 2120 is specifically configured to determine a code domain resource of the third resource based on a second cyclic shift CS pair table, where the second CS pair table is different from a first CS pair table for the third communication protocol.

Optionally, the processing unit 2120 is specifically configured to: when determining that the third resource and the resource in the first resource set are multiplexed in a frequency division multiplexing manner, determine a code domain resource of the third resource based on a first CS pair table; or when determining that the third resource and the resource in the first resource set are multiplexed in a code division multiplexing manner, determine a code domain resource of the third resource based on a second CS pair table, where the second CS pair table is different from a first CS pair table for the third communication protocol.

Optionally, a CS pair corresponding to a first CS logarithm in the second CS pair table is different from a CS pair corresponding to a first CS logarithm in the first CS pair table.

Optionally, the second CS pair table includes at least one entry in the following tables:

| $N_{CS}^{PSFCH}$ | CS pair index 0 | CS pair index 1 | CS pair index 2 | CS pair index 3 | CS pair index 4 | CS pair index 5 |
|---|---|---|---|---|---|---|
| 1 | 3 | - | - | - | - | - |
| 2 | 1 | 4 | - | - | - | - |
| 3 | 1 | 3 | 5 | - | - | - |

or

| $N_{CS}^{PSFCH}$ | CS pair index 0 | CS pair index 1 | CS pair index 2 | CS pair index 3 | CS pair index 4 | CS pair index 5 |
|---|---|---|---|---|---|---|
| 1 | 3 | - | - | - | - | - |
| 2 | 2 | 5 | - | - | - | - |
| 3 | 1 | 3 | 5 | - | - | - |

or

| $N_{CS}^{PSFCH}$ | CS pair index 0 | CS pair index 1 | CS pair index 2 | CS pair index 3 | CS pair index 4 | CS pair index 5 |
|---|---|---|---|---|---|---|
| 1 | 3 | - | - | - | - | - |
| 2 | 1 | 4 | - | - | - | - |
| 3 | 1 | 3 | 5 | - | - | - |
| 4 | 2 | 5 | - | - | - | - |

$N_{CS}^{PSFCH}$ is a CS logarithm.

Optionally, a second resource set and the first resource set are configured independently, a resource in the second resource set is for control information transmission according to the second communication protocol, and the third resource belongs to the second resource set.

Optionally, the control information includes at least one of the following: HARQ information, CSI feedback information, or resource conflict indication information.

For more detailed descriptions of the transceiver unit 2110 and the processing unit 2120, refer to the related descriptions in the foregoing method embodiments. Details are not described herein again.

As shown in FIG. 23, an apparatus 2200 includes a processor 2210 and an interface circuit 2220. The processor 2210 and the interface circuit 2220 are coupled to each other. It may be understood that the interface circuit 2220 may be a transceiver or an input/output interface. Optionally, the apparatus 2200 may further include a memory 2230, configured to store instructions executed by the processor 2210, or store input data required by the processor 2210 to run instructions, or store data generated by running instructions by the processor 2210. When the apparatus 2200 is configured to implement the foregoing methods, the processor 2210 is configured to implement a function of the processing unit 2120, and the interface circuit 2220 is configured to implement a function of the transceiver unit 2110.

When the apparatus 2200 is a chip used in a first terminal, the chip implements a function of the first terminal in the foregoing method embodiments. The chip receives information from another module (for example, a radio frequency module or an antenna) in the first terminal, where the information is sent by another apparatus to the first terminal; or the chip sends information to another module (for example, a radio frequency module or an antenna) in the first terminal, where the information is sent by the first terminal to another apparatus.

When the apparatus 2200 is a chip used in a second terminal, the chip implements a function of the second terminal in the foregoing method embodiments. The chip receives information from another module (for example, a radio frequency module or an antenna) in the second terminal, where the information is sent by another apparatus to the second terminal; or the chip sends information to another module (for example, a radio frequency module or an antenna) in the second terminal, where the information is sent by the second terminal to another apparatus.

This application further provides a communication apparatus, including a processor. The processor is coupled to a memory. The memory is configured to store a computer program or instructions and/or data. The processor is configured to execute the computer program or instructions stored in the memory, or read the data stored in the memory, to perform the methods in the foregoing method embodiments. Optionally, there are one or more processors. Optionally, the communication apparatus includes the memory. Optionally, there are one or more memories. Optionally, the memory and the processor are integrated together, or disposed separately.

This application further provides a computer-readable storage medium. The computer-readable storage medium stores computer instructions for implementing the methods performed by the first terminal in the foregoing method embodiments.

This application further provides a computer program product, including instructions. When the instructions are executed by a computer, the methods performed by the first terminal in the foregoing method embodiments are implemented.

This application further provides a communication system. The communication system includes the first terminal and/or the second terminal in the foregoing embodiments.

For explanations and beneficial effects of related content in any apparatus provided above, refer to the corresponding method embodiment provided above. Details are not described herein again.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a first terminal and/or a second terminal. Certainly, the processor and the storage medium may alternatively exist in the first terminal and/or the second terminal as discrete components.

All or some of the foregoing embodiments may be implemented through software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, or may be an optical medium, for example, a digital video disc, or may be a semiconductor medium, for example, a solid-state drive.

In various embodiments of this application, unless otherwise stated or there is a logical conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence. The execution sequence of the processes should be determined based on functions and internal logic of the processes.

Unless otherwise stated, meanings of all technical and scientific terms used in embodiments of this application are the same as those usually understood by a person skilled in the technical field of this application. The terms used in this application are merely intended to describe specific embodiments, and are not intended to limit the scope of this application. It should be understood that the foregoing description is an example for description. The foregoing examples are merely intended to help a person skilled in the art understand embodiments of this application, but are not intended to limit embodiments of this application to specific values or specific scenarios in the examples. It is clear that a person skilled in the art can make various equivalent modifications or changes based on the examples provided above, and such modifications and changes also fall within the scope of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A control information sending method, wherein the method comprises:

    obtaining, by a first terminal, first information, wherein the first information is for determining a resource occupied by transmission according to a first communication protocol;
    determining, by the first terminal based on the first information, that a first resource is an available resource; and
    sending, by the first terminal, control information on the first resource according to a second communication protocol.

2. The method according to claim 1, wherein the method further comprises:
    obtaining, by the first terminal, second information, wherein the second information is used to indicate the first terminal to send the control information.

3. The method according to claim 1 or 2, wherein the determining, by the first terminal based on the first information, that a first resource is an available resource comprises:

    when a candidate resource in which the first resource is located fails to meet a preset condition, determining, by the first terminal, that the first resource is the available resource, wherein the preset condition is that the candidate resource overlaps with the resource occupied by transmission according to the first communication protocol and signal quality is lower than a first threshold; and
    the candidate resource is a candidate resource used when the first terminal selects a resource for data transmission, the candidate resource is L consecutive frequency domain units in a first time unit, and L is an integer greater than or equal to 1.

4. The method according to claim 1 or 2, wherein the determining, by the first terminal based on the first information, that a first resource is an available resource comprises:

   when none of candidate resources comprised in a first time unit in which the first resource is located meets a preset condition, determining, by the first terminal, that the first resource is the available resource, wherein the preset condition is that the candidate resource overlaps with the resource occupied by transmission according to the first communication protocol and signal quality is lower than a first threshold; and
   the candidate resource is a candidate resource used when the first terminal selects a resource for data transmission, the candidate resource is L consecutive frequency domain units in the first time unit, and L is an integer greater than or equal to 1.

5. The method according to claim 1 or 2, wherein the determining, by the first terminal based on the first information, that a first resource is an available resource comprises:

   when a candidate resource in which the first resource is located fails to meet a preset condition, determining, by the first terminal, that the first resource is the available resource, wherein the preset condition is that the candidate resource overlaps with the resource occupied by transmission according to the first communication protocol and signal quality is lower than a second threshold; and
   the candidate resource is a candidate resource used when the first terminal selects a resource for control information transmission, the candidate resource is L consecutive frequency domain units in a first time unit, and L is an integer greater than or equal to 1.

6. The method according to claim 1 or 2, wherein the determining, by the first terminal based on the first information, that a first resource is an available resource comprises:

   when none of candidate resources comprised in a first time unit in which the first resource is located meets a preset condition, determining, by the first terminal, that the first resource is the available resource, wherein the preset condition is that the candidate resource overlaps with the resource occupied by transmission according to the first communication protocol and signal quality is lower than a second threshold; and
   the candidate resource is a candidate resource used when the first terminal selects a resource for control information transmission, the candidate resource is L consecutive frequency domain units in the first time unit, and L is an integer greater than or equal to 1.

7. The method according to claim 5 or 6, wherein
   the candidate resource is L consecutive subchannels in a first slot.

8. The method according to claim 5 or 6, wherein
   the candidate resource is L consecutive subchannels on P symbols in a first slot, and P is an integer greater than or equal to 1.

9. The method according to any one of claims 5 to 8, wherein

   the second threshold is from an independently configured threshold table or threshold set; or
   the second threshold is an absolute threshold.

10. The method according to claim 1 or 2, wherein the determining, by the first terminal based on the first information, that a first resource is an available resource comprises:
    when the first resource fails to meet a preset condition, determining, by the first terminal, that the first resource is the available resource, wherein the preset condition is that the first resource overlaps with the resource occupied by transmission according to the first communication protocol and signal quality is lower than a third threshold.

11. The method according to claim 10, wherein

    the third threshold is from an independently configured threshold table or threshold set; or
    the third threshold is an absolute threshold.

12. The method according to any one of claims 3 to 11, wherein the signal quality is represented by at least one of the following information: reference signal received power RSRP, a received signal strength indicator RSSI, a signal-to-noise ratio SNR, or a signal-to-interference-plus-noise ratio SINR.

13. The method according to any one of claims 1 to 12, wherein the first resource is not for data transmission.

14. The method according to any one of claims 1 to 13, wherein the first information comprises at least one of the following information: sidelink control information SCI or a measured value of signal quality corresponding to the SCI, wherein the SCI comprises resource indication information for transmission according to the first communication protocol and/or a resource reserved field for transmission according to the first communication protocol.

15. The method according to any one of claims 1 to 14, wherein resource pools of the first communication protocol and the second communication protocol use a same time-frequency resource.

16. The method according to any one of claims 1 to 15, wherein the control information comprises at least one of the following: hybrid automatic repeat request HARQ information, channel state information CSI feedback information, or resource conflict indication information.

17. The method according to any one of claims 1 to 15, wherein

the control information is acknowledgement ACK information fed back by the first terminal to a second terminal when the first terminal successfully decodes first data from the second terminal; or
the control information is negative acknowledgement NACK information fed back by the first terminal to a second terminal when the first terminal fails to decode first data from the second terminal.

18. A communication apparatus, wherein the apparatus comprises:

a transceiver unit, configured to obtain first information, wherein the first information is for determining a resource occupied by transmission according to a first communication protocol; and
a processing unit, configured to determine, based on the first information, that a first resource is an available resource, wherein
the transceiver unit is further configured to send control information on the first resource according to a second communication protocol.

19. The apparatus according to claim 18, wherein the transceiver unit is further configured to obtain second information, wherein the second information is used to indicate the first terminal to send the control information.

20. The apparatus according to claim 18 or 19, wherein

the processing unit is specifically configured to: when a candidate resource in which the first resource is located fails to meet a preset condition, determine that the first resource is the available resource, wherein the preset condition is that the candidate resource overlaps with the resource occupied by transmission according to the first communication protocol and signal quality is lower than a first threshold; and
the candidate resource is a candidate resource used when the first terminal selects a resource for data transmission, the candidate resource is L consecutive frequency domain units in a first time unit, and L is an integer greater than or equal to 1.

21. The apparatus according to claim 18 or 19, wherein

the processing unit is specifically configured to: when none of candidate resources comprised in a first time unit in which the first resource is located meets a preset condition, determine that the first resource is the available resource, wherein the preset condition is that the candidate resource overlaps with the resource occupied by transmission according to the first communication protocol and signal quality is lower than a first threshold; and
the candidate resource is a candidate resource used when the first terminal selects a resource for data transmission, the candidate resource is L consecutive frequency domain units in the first time unit, and L is an integer greater than or equal to 1.

22. The apparatus according to claim 18 or 19, wherein

the processing unit is specifically configured to: when a candidate resource in which the first resource is located fails to meet a preset condition, determine that the first resource is the available resource, wherein the preset condition is that the candidate resource overlaps with the resource occupied by transmission according to the first communication protocol and signal quality is lower than a second threshold; and
the candidate resource is a candidate resource used when the first terminal selects a resource for control information transmission, the candidate resource is L consecutive frequency domain units in a first time unit, and L is an integer greater than or equal to 1.

23. The apparatus according to claim 18 or 19, wherein

the processing unit is specifically configured to: when none of candidate resources comprised in a first time unit in which the first resource is located meets a preset condition, determine that the first resource is the available resource, wherein the preset condition is that the candidate resource overlaps with the resource occupied by transmission according to the first communication protocol and signal quality is lower than a second threshold; and
the candidate resource is a candidate resource used when the first terminal selects a resource for control information transmission, the candidate resource is L consecutive frequency domain units in the first time unit, and L is an integer greater than or equal to 1.

24. The apparatus according to claim 22 or 23, wherein the candidate resource is L consecutive subchannels in a first slot.

25. The apparatus according to claim 22 or 23, wherein the candidate resource is L consecutive subchannels on P symbols in a first slot, and P is an integer greater than or equal to 1.

26. The apparatus according to any one of claims 22 to 25, wherein

the second threshold is from an independently configured threshold table or threshold set; or
the second threshold is an absolute threshold.

27. The apparatus according to claim 18 or 19, wherein the processing unit is specifically configured to: when the first resource fails to meet a preset condition, determine that the first resource is the available resource, wherein the preset condition is that the first resource overlaps with the resource occupied by transmission according to the first communication protocol and signal quality is lower than a third threshold.

28. The apparatus according to claim 27, wherein

the third threshold is from an independently configured threshold table or threshold set; or
the third threshold is an absolute threshold.

29. The apparatus according to any one of claims 20 to 28, wherein the signal quality is represented by at least one of the following information: reference signal received power RSRP, a received signal strength indicator RSSI, a signal-to-noise ratio SNR, or a signal-to-interference-plus-noise ratio SINR.

30. The apparatus according to any one of claims 18 to 29, wherein the first resource is not for data transmission.

31. The apparatus according to any one of claims 18 to 30, wherein the first information comprises at least one of the following information: sidelink control information SCI or a measured value of signal quality corresponding to the SCI, wherein the SCI comprises resource indication information for transmission according to the first communication protocol and/or a resource reserved field for transmission according to the first communication protocol.

32. The apparatus according to any one of claims 18 to 31, wherein
resource pools of the first communication protocol and the second communication protocol use a same time-frequency resource.

33. The apparatus according to any one of claims 18 to 32, wherein the control information comprises at least one of the following: hybrid automatic repeat request HARQ information, channel state information CSI feedback information, or resource conflict indication information.

34. The apparatus according to any one of claims 18 to 32, wherein

the control information is acknowledgement ACK information fed back by the first terminal to a second terminal when the first terminal successfully decodes first data from the second terminal; or
the control information is negative acknowledgement NACK information fed back by the first terminal to a second terminal when the first terminal fails to decode first data from the second terminal.

35. A communication apparatus, comprising:
a processor, configured to execute a computer program stored in a memory, to enable the apparatus to perform the method according to any one of claims 1 to 17.

36. The apparatus according to claim 35, wherein the apparatus further comprises the memory.

37. A chip, comprising: a processor and a communication interface, wherein the processor reads, through the communication interface, instructions stored in a memory, to perform the method according to any one of claims 1 to 17.

38. A computer-readable storage medium, wherein the computer-readable storage medium stores a computer program, and when the computer program is run on a computer, the computer is enabled to perform the method according to any one of claims 1 to 17.

39. A computer program product, wherein the computer program product comprises instructions for performing the method according to any one of claims 1 to 17.

40. A communication system, comprising: a terminal, wherein the terminal is configured to perform the method according to any one of claims 1 to 17.

FIG. 1

FIG. 2

EP 4 459 919 A1

(a)

(b)

FIG. 3

FIG. 4

FIG. 5

Subchannel

Slot 1

R₁,₁    R₂,₁    R₃,₁    R₄,₁

FIG. 6

Physical slot index

Physical slot

LTE-V

R16 NR-V

PSFCH resource

FIG. 7

Resource selection is triggered

Resource sensing window

Resource selection window

$n-T_0$    $n-T_{pro,0}$    $n$    $n+T_1$    $n+T_2$

FIG. 8

Terminal

| LTE-V module | NR-V module |

FIG. 9

1000

A first terminal obtains first information, where the first information is for determining a resource occupied by transmission according to a first communication protocol ⎯⎯ 1010

The first terminal determines, based on the first information, that a first resource is an available resource ⎯⎯ 1020

The first terminal transmits control information on the first resource according to a second communication protocol ⎯⎯ 1030

FIG. 10

SCI

| Resource 1 | Resource 2 | Resource 3 |

FIG. 11

PSFCH resource

Logical slot index    0    1    2    3    4    5    6    7    8    9

LTE-V

R18 NR-V

FIG. 12

EP 4 459 919 A1

$L_{subch}$

| AGC | AGC | AGC | AGC | AGC | PSFCH |
|------|------|------|------|------|-------|
|      |      |      |      |      |       |
|      |      |      |      |      |       |
|      |      |      |      |      |       |
|      |      |      |      |      |       |
|      |      |      |      |      |       |
|      |      |      |      |      |       |
|      |      |      |      |      |       |
|      |      |      |      |      |       |
|      |      |      |      |      |       |
| PSFCH | PSFCH | PSFCH | PSFCH | PSFCH | PSFCH |
| PSFCH | PSFCH | PSFCH | PSFCH | PSFCH | PSFCH |
| CP | CP | CP | CP | CP | CP |

Slot

Single candidate resource

Single PSFCH candidate resource

FIG. 13

1300

| A second terminal obtains first information, where the first information is for determining a resource occupied by transmission according to a first communication protocol | 1310 |

| The second terminal determines, based on the first information, that a first resource is an available resource, where the first resource is a resource that is for control information transmission according to a second communication protocol | 1320 |

| The second terminal determines a second resource based on the first resource | 1330 |

| The second terminal sends first data on the second resource according to the second communication protocol | 1340 |

FIG. 14

1400

A second terminal sends first data to a first terminal on a second resource according to a second communication protocol ~ 1410

The second terminal sends second information corresponding to the first data to the first terminal ~ 1420

The second terminal obtains first information, where the first information is for determining a resource occupied by transmission according to a first communication protocol ~ 1430

The second terminal determines, based on the first information, that a first resource is an available resource, where the first resource is a resource for control information transmission according to the second communication protocol ~ 1440

The second terminal receives the control information on the first resource according to the second communication protocol ~ 1450

FIG. 15

| Physical slot index | 0 | 1 | 2 | 3 | 4 | 5 | 6 | 7 | 8 | 9 |
|---|---|---|---|---|---|---|---|---|---|---|
| Physical slot | | | | | | | | | | |

LTE-V: 0, 1, 2, 3, 4, 5

R16 NR-V: 0, 1, Dynamically obtain, 2, 3

R18 NR-V

PSFCH resource

FIG. 16

FIG. 17

1700

| A first terminal determines a third resource from a control resource set, where a first resource set in the control resource set is configured for control information transmission according to a third communication protocol, and the third resource is different from a resource in the first resource set | 1710 |

| The first terminal sends the control information on the third resource according to a second communication protocol | 1720 |

FIG. 18

FIG. 19

R16 NR-V

```
        0        2        4
   ┌────────┬────────┬────────┐
 1 │        │        │        │
   ├────────┼────────┼────────┤
 0 │        │        │        │
   └────────┴────────┴────────┘
RB
   CS
```

(a)

NR-V

```
        1        3        5
   ┌────────┬────────┬────────┐
 0 │        │        │        │
   └────────┴────────┴────────┘
RB
   CS
```

(b)

FIG. 20

2000

| A second terminal determines a third resource from a control resource set, where a first resource set in the control resource set is configured for control information transmission according to a third communication protocol, and the third resource is different from a resource in the first resource set | ∿ 2010 |

| The second terminal receives the control information on the third resource according to a second communication protocol | ∿ 2020 |

FIG. 21

Apparatus 2100

Transceiver unit 2110

Processing unit 2120

FIG. 22

Apparatus 2200

Processor 2210

Interface circuit 2220

Memory 2230

FIG. 23

<div align="center">**INTERNATIONAL SEARCH REPORT**</div>

| International application No. |
|---|
| **PCT/CN2023/071864** |

| A. | CLASSIFICATION OF SUBJECT MATTER |
|---|---|

H04L5/00(2006.01)i

According to International Patent Classification (IPC) or to both national classification and IPC

| B. | FIELDS SEARCHED |
|---|---|

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, CNKI, VEN, ENTXT, 3GPP: 第二, 第一, 通信协议, 资源, 冲突, 占用, 重叠, first, second, protocol, resource, conflict, overlap

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 111937330 A (QUALCOMM INC.) 13 November 2020 (2020-11-13)<br>entire document | 1-40 |
| A | CN 110999232 A (MICRON TECHNOLOGY INC.) 10 April 2020 (2020-04-10)<br>entire document | 1-40 |
| A | CN 112398888 A (BEIJING HUAWEI DIGITAL TECHNOLOGIES CO., LTD.) 23 February 2021 (2021-02-23)<br>entire document | 1-40 |
| A | US 2020029308 A1 (NOKIA TECHNOLOGIES OY.) 23 January 2020 (2020-01-23)<br>entire document | 1-40 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 May 2023** | **04 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/071864**

| Patent document cited in search report | | | Publication date (day/month/year) | Patent family member(s) | | | Publication date (day/month/year) |
|---|---|---|---|---|---|---|---|
| CN | 111937330 | A | 13 November 2020 | WO | 2019195429 | A1 | 10 October 2019 |
| | | | | EP | 3776945 | A1 | 17 February 2021 |
| | | | | US | 2019313419 | A1 | 10 October 2019 |
| | | | | US | 10863524 | B2 | 08 December 2020 |
| CN | 110999232 | A | 10 April 2020 | US | 2020067571 | A1 | 27 February 2020 |
| | | | | US | 11316561 | B2 | 26 April 2022 |
| | | | | US | 2019020382 | A1 | 17 January 2019 |
| | | | | US | 10511353 | B2 | 17 December 2019 |
| | | | | KR | 20200014950 | A | 11 February 2020 |
| | | | | KR | 102292444 | B1 | 25 August 2021 |
| | | | | US | 2019020383 | A1 | 17 January 2019 |
| | | | | US | 11165468 | B2 | 02 November 2021 |
| | | | | WO | 2019014383 | A1 | 17 January 2019 |
| | | | | US | 2022190881 | A1 | 16 June 2022 |
| | | | | EP | 3652903 | A1 | 20 May 2020 |
| | | | | EP | 3652903 | A4 | 17 March 2021 |
| CN | 112398888 | A | 23 February 2021 | | None | | |
| US | 2020029308 | A1 | 23 January 2020 | WO | 2018059720 | A1 | 05 April 2018 |
| | | | | EP | 3520529 | A1 | 07 August 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210114635